(19)

Europäisches Patentamt
European Patent Office
Office européen des brevets

(11) **EP 4 474 881 A1**

(12) **EUROPEAN PATENT APPLICATION**
published in accordance with Art. 153(4) EPC

(43) Date of publication:
**11.12.2024 Bulletin 2024/50**

(21) Application number: **23769714.9**

(22) Date of filing: **13.03.2023**

(51) International Patent Classification (IPC):
**G02B 7/10** $^{(2021.01)}$

(52) Cooperative Patent Classification (CPC):
**G02B 7/10; G02B 13/02; G02B 13/24; G03B 30/00**

(86) International application number:
**PCT/CN2023/081097**

(87) International publication number:
**WO 2023/174212 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2022 CN 202210255613**

(71) Applicant: **Huawei Technologies Co., Ltd.
Shenzhen, Guangdong 518129 (CN)**

(72) Inventors:
• **WANG, Heng
Shenzhen, Guangdong 518129 (CN)**
• **NIU, Yajun
Shenzhen, Guangdong 518129 (CN)**
• **LU, Jianlong
Shenzhen, Guangdong 518129 (CN)**
• **YE, Haishui
Shenzhen, Guangdong 518129 (CN)**
• **TANG, Wei
Shenzhen, Guangdong 518129 (CN)**

(74) Representative: **Huawei European IPR
Huawei Technologies Duesseldorf GmbH
Riesstraße 25
80992 München (DE)**

(54) **LONG-FOCUS LENS, CAMERA MODULE AND ELECTRONIC DEVICE**

(57)     This application discloses a long-focus lens, a camera assembly, and an electronic device. When the long-focus lens focuses on a distant view, a field of view FOV of the long-focus lens is less than 60°. The long-focus lens includes a first lens group and a second lens group that are arranged from an object side to an image side. The first lens group has a positive focal power, and the second lens group has a negative focal power. In a focusing process in which the long-focus lens switches focus between the distant view and a close-up view, a distance between the first lens group and the second lens group changes. The long-focus lens not only can implement telephoto shooting with high imaging quality, but also can have a strong close-up shooting capability, to implement wide-obj ect-distance imaging from a distant view to a close-up view.

FIG. 3C

EP 4 474 881 A1

**Description**

This application claims priority to Chinese Patent Application No. 202210255613.4, filed with the China National Intellectual Property Administration on March 15, 2022 and entitled "LONG-FOCUS LENS, CAMERA ASSEMBLY, AND ELECTRONIC DEVICE", which is incorporated herein by reference in its entirety.

**TECHNICAL FIELD**

This application relates to the field of shooting device technologies, and in particular, to a long-focus lens, a camera assembly, and an electronic device.

**BACKGROUND**

A current long-focus lens is mainly used for telephoto shooting. When photographing a distant view or photographing an object that is not easy to approach, the long-focus lens can present details of the distant to-be-photographed object, and has a good telephoto shooting capability. However, the current long-focus lens has a poor imaging effect when photographing a close-up view. This limits application of the long-focus lens in a close-up shooting scenario.

**SUMMARY**

This application provides a long-focus lens, a camera assembly, and an electronic device. The long-focus lens not only can implement long-distance shooting with high imaging quality, but also can have a strong close-up shooting capability, to implement wide-obj ect-distance imaging from a distant view to a close-up view.

According to a first aspect, this application provides a long-focus lens. When the long-focus lens focuses on a distant view, a field of view of the long-focus lens is less than 60°. The long-focus lens includes a first lens group and a second lens group that are arranged from an object side to an image side. The first lens group has a positive focal power, and the second lens group has a negative focal power. In a focusing process in which the long-focus lens switches focus between the distant view and a close-up view, a distance between the first lens group and the second lens group changes, and a shortest focus distance of the long-focus lens is less than 10 centimeters.

The long-focus lens provided in this application not only can implement long-distance shooting with high imaging quality, but also can have a strong close-up shooting capability, to implement wide-obj ect-distance imaging from a distant view to a close-up view.

In addition, the first lens group has a positive focal power, and the second lens group has a negative focal power, so that a height of the long-focus lens is less than an effective focal length EFL of the long-focus lens, to reduce the height of the long-focus lens, thereby facilitating miniaturization of a camera assembly.

In some implementation, in a focusing process in which the long-focus lens switches focus from the distant view to the close-up view, the distance between the first lens group and the second lens group increases.

In this implementation, in the focusing process in which the long-focus lens switches focus from the distant view to the close-up view, the distance between the first lens group and the second lens group increases, so that high close-up imaging quality can be achieved. In some other implementations, in the focusing process in which the long-focus lens switches focus from the distant view to the close-up view, the distance between the first lens group and the second lens group may alternatively decreases. This is not limited in this application.

In some implementations, in the focusing process in which the long-focus lens switches focus from the distant view to the close-up view, a distance between the first lens group and an imaging plane of the long-focus lens remains unchanged, and a distance between the second lens group and the imaging plane of the long-focus lens decreases; or

> a distance between the first lens group and an imaging plane of the long-focus lens increases, and a distance between the second lens group and the imaging plane of the long-focus lens remains unchanged; or
> a distance between the first lens group and an imaging plane of the long-focus lens increases, and a distance between the second lens group and the imaging plane of the long-focus lens decreases.

In this implementation, a single-group focusing manner may be used to simplify a motion manner of a focusing structure, and simplify a focusing method. The first lens group does not move, and the second lens group is moved to perform focusing, so that a motion manner of a focusing structure of the long-focus lens can be simplified, thereby simplifying a focusing method. In addition, the first lens group is located on an object side of the second lens group, thereby increasing movable optical path space. This helps reduce a light ray turning angle and an aberration, and improves imaging quality. The second lens group does not move, and the first lens group is moved to perform focusing, so that a motion manner of a focusing structure of the long-focus lens can be simplified, thereby simplifying a focusing method.

In addition, a dual-group focusing manner may be further used. In this implementation, both the distance between the first lens group and the imaging plane and the distance between the second lens group and the imaging plane change, to reduce respective focusing strokes of the first lens group and the second lens group. This can further improve motion precision of the first lens group and the second lens group, and improve a focusing capability of the long-focus lens.

In some implementations, a focal length F1 of the first lens group and the effective focal length EFL of the long-focus lens satisfy the following: F1<0.9 EFL, or 0.9 EFL<F1<EFL.

In this implementation, it is set that F1≤0.9 EFL or 0.9 EFL<F1<EFL, so that the first lens group has a small focal length and a strong light ray convergence capability, and the long-focus lens can be used for close-up shooting within 10 centimeters.

In some implementations, a focal length F2 of the second lens group and the effective focal length EFL of the long-focus lens satisfy the following: -EFL<F2.

In this implementation, it is set that -EFL<F2, so that a thickness of the second lens group can be reduced, thereby reducing a height of the long-focus lens and facilitating accommodation. In addition, the second lens group is enabled to have a small focal length and a strong light ray convergence capability, thereby facilitating focusing and reducing a motor stroke. In addition, the thickness of the second lens group is small, so that the height of the long-focus lens can be reduced, thereby facilitating miniaturization of a camera assembly.

In some implementations, the focal length F1 of the first lens group and the focal length F2 of the second lens group satisfy the following: 1<(F1-F2)/F1≤3, or 3<(F1-F2)/F1<9.

In this implementation, when focal lengths of the two lens groups are both small, and a difference between the focal lengths of the two lens groups is small, that is, a value of (F1-F2)/F1 is small, a light ray convergence capability of the long-focus lens is improved, thereby helping implement close-up imaging. However, a light ray deflection degree of the long-focus lens is increased, and an aberration is increased. Therefore, unclear imaging may occur, and imaging quality is poor. When the focal length of the second lens group is large, and a difference between the focal length of the second lens group and the focal length of the first lens group is large, that is, the value of (F1-F2)/F1 is large, the light ray convergence capability of the long-focus lens is reduced, which is not conducive to close-up imaging. However, the light ray deflection degree of the long-focus lens is reduced, and the aberration is reduced. Therefore, the imaging quality is improved. Therefore, focal lengths of the two lens groups may be designed based on a requirement of an actual application scenario. It is set that 1<(F1-F2)/F1≤3 or, 3<(F1-F2)/F1<9, to improve a focusing capability and imaging quality of the long-focus lens.

In some implementations, the first lens group includes two to four lenses, or the second lens group includes two to four lenses, or the long-focus lens includes four to eight lenses.

In this implementation, designs of different specifications can be obtained by adjusting a quantity of lenses of each of the first lens group and the second lens group, to adapt to diversified application scenarios. For example, if the quantity of lenses of each of the first lens group and the second lens group is large, the long-focus lens has a high specification and high imaging quality. However, design difficulty of each lens of the first lens group and the second lens group is accordingly increased. If the quantity of lenses of each of the first lens group and the second lens group is small, design difficulty of each lens of the first lens group and the second lens group is low. However, the long-focus lens has a low specification and poor imaging quality. Therefore, different quantities of lenses may be selected based on different requirements.

In some implementations, the first lens group includes a 1st lens close to the object side, and a focal length f11 of the 1st lens of the first lens group and the focal length F1 of the first lens group satisfy the following: 0.5<f11/F1<1; and the second lens group includes a 1st lens close to the object side, and a focal length f21 of the 1st lens of the second lens group and the focal length F2 of the second lens group satisfy the following: 0.2<f21/F2<1.

In this implementation, it is set that 0.5<f11/F1<1, so that a difference between the focal length of the 1st lens of the first lens group and the focal length of the first lens group is small. This facilitates adjustment of the focal length of the 1st lens, to obtain the focal length of the first lens group.

In addition, it is set that 0.2<f21/F 1< 1, so that a difference between the focal length of the 1st lens of the second lens group and the focal length of the second lens group is small. This facilitates adjustment of the focal length of the 1st lens, to obtain the focal length of the second lens group.

In some implementations, the first lens group further includes a 2nd lens, the 2nd lens of the first lens group is adjacently located on an object side of the 1st lens of the first lens group, and a sum of an Abbe number of the 1st lens of the first lens group and an Abbe number of the 2nd lens of the first lens group is greater than 20.

In this implementation, a sum of the Abbe number of the 1st lens and the Abbe number of the 2nd lens may be greater than 20. This facilitates chromatic aberration correction of the long-focus lens.

In some implementations, a sum of Abbe numbers of a plurality of lenses of the second lens group is greater than 18.

In this implementation, the sum of the Abbe numbers of the plurality of lenses of the second lens group is greater than 18. This facilitates chromatic aberration correction of the long-focus lens.

In some implementations, a thickness T1 of the first lens group and the focal length F1 of the first lens group satisfy the following: 0.1<T1/F1≤0.3, or 0.3<T1/F1<1; or

a thickness T2 of the second lens group and the focal length F2 of the second lens group satisfy the following: -1<T2/F2<-0.1.

In this implementation, it is set that 0.1<T1/F1≤0.3 or 0.3<T1/F1<1, so that the thickness of the first lens group is small. In this way, a height of the long-focus lens can be reduced, thereby facilitating accommodation. In addition, motion of the first lens group is facilitated, and imaging quality is improved.

In addition, it is set that -1<T2/F2<-0. 1. This helps the second lens group have a small thickness, thereby reducing a height of a long-focus lens 1 and facilitating accommodation. In addition, motion of the second lens group is facilitated, and imaging quality is improved.

In some implementations, the thickness T1 of the first lens group, the thickness T2 of the second lens group, and the effective focal length EFL of the long-focus lens satisfy the following: T1+T2≤0.6 EFL, or 0.6 EFL<T1+T2≤0.8 EFL, or 0.8 EFL<T1+T2<EFL.

In this implementation, it is set that T1+T2≤0.6 EFL, or 0.6 EFL<T1+T2≤0.8 EFL, or 0.8 EFL<T1+T2<EFL, so that a sum of the thickness of the first lens group and the thickness of the second lens group is small. In this way, when the long-focus lens is in an accommodated state, an overall height of the camera assembly is small, and the camera assembly occupies small space in an inner cavity of the entire electronic device, thereby facilitating accommodation. In addition, the camera assembly can be better applicable to a thin electronic device.

In some implementations, an image height ImgH of the long-focus lens satisfies the following: ImgH>2 mm.

In this implementation, the long-focus lens has a small field of view and a large plate size, to have a strong telephoto shooting capability, and have high imaging quality in telephoto shooting.

According to a second aspect, this application further provides a camera assembly, including a photosensitive element, a first actuator, and a long-focus lens. The photosensitive element is located on an image side of the long-focus lens. The first actuator is connected to the long-focus lens, and is configured to control the long-focus lens to move toward or away from the photosensitive element. The camera assembly provided in this application not only can implement long-distance shooting with high imaging quality, but also can have a strong close-up shooting capability, to implement wide-object-distance imaging from a distant view to a close-up view.

The long-focus lens provided in this application not only can implement long-distance shooting with high imaging quality, but also can have a strong close-up shooting capability, to implement wide-obj ect-distance imaging from a distant view to a close-up view.

In addition, in this application, auto focus (auto focus, AF) may be implemented by using the first actuator.

In some implementations, the camera assembly further includes a second actuator, and the second actuator is connected to a first lens group and is configured to control the first lens group to move along an optical axis; and/or the camera assembly further includes a third actuator, and the third actuator is connected to a second lens group and is configured to control the second lens group to move along the optical axis.

In this implementation, the second actuator is configured to control the first lens group to move along the optical axis, to change a distance between the first lens group and the second lens group, and implement switching of the long-focus lens between a distant mode and a close-up mode.

In addition, the third actuator is configured to control the second lens group to move along the optical axis, to change the distance between the first lens group and the second lens group, and implement switching of the long-focus lens between the distant mode and the close-up mode.

According to a third aspect, this application further provides an electronic device, including an image processor and a camera assembly. The image processor is in a communication connection to the camera assembly. The image processor is configured to: obtain an image signal from the camera assembly and process the image signal. The electronic device provided in this application not only can implement long-distance shooting with high imaging quality, but also can have a strong close-up shooting capability, to implement wide-object-distance imaging from a distant view to a close-up view.

According to a fourth aspect, this application further provides an electronic device, including a first lens and a second lens. The second lens is a 3x optical zoom lens of the first lens. When the second lens focuses on a distant view, a field of view of the second lens is less than 60°. The second lens includes a first lens group and a second lens group that are arranged from an object side to an image side. The first lens group has a positive focal power, and the second lens group has a negative focal power. In a focusing process in which the second lens switches focus between the distant view and a close-up view, a distance between the first lens group and the second lens group changes, and a shortest focus distance of the second lens is less than 10 centimeters.

The electronic device provided in this application not only can implement long-distance shooting with high imaging quality, but also can have a strong close-up shooting capability, to implement wide-object-distance imaging from a distant view to a close-up view.

In some implementations, in a focusing process in which the second lens switches focus from the distant view to the close-up view, a distance between the first lens group and an imaging plane of the second lens remains unchanged, and a distance between the second lens group and the imaging plane of the second lens decreases; or

a distance between the first lens group and an imaging plane of the second lens increases, and a distance between the second lens group and the imaging plane of the second lens remains unchanged; or
a distance between the first lens group and an imaging plane of the second lens increases, and a distance between the second lens group and the imaging plane of the second lens decreases.

In this implementation, a single-group focusing manner may be used to simplify a motion manner of a focusing structure, and simplify a focusing method. The first lens group does not move, and the second lens group is moved to perform focusing, so that a motion manner of a focusing structure of the long-focus lens can be simplified, thereby simplifying a focusing method. In addition, the first lens group is located on an object side of the second lens group, thereby increasing movable optical path space. This helps reduce a light ray turning angle and an aberration, and improves imaging quality. The second lens group does not move, and the first lens group is moved to perform focusing, so that a motion manner of a focusing structure of the long-focus lens can be simplified, thereby simplifying a focusing method.

In addition, a dual-group focusing manner may be further used. In this implementation, both the distance between the first lens group and the imaging plane and the distance between the second lens group and the imaging plane change, to reduce respective focusing strokes of the first lens group and the second lens group. This can further improve motion precision of the first lens group and the second lens group, and improve a focusing capability of the long-focus lens.

In some implementations, a focal length F1 of the first lens group and an effective focal length EFL of the second lens satisfy the following: $F1 \leq 0.9$ EFL, or $0.9$ EFL$<F1<$EFL.

In this implementation, it is set that $F1 \leq 0.9$ EFL or $0.9$ EFL$<F1<$EFL, so that the first lens group has a small focal length and a strong light ray convergence capability, and the long-focus lens can be used for close-up shooting within 10 centimeters.

In some implementations, a focal length F2 of the second lens group and the effective focal length EFL of the second lens satisfy the following: $-$EFL$<F2$.

In this implementation, it is set that $-$EFL$<F2$, so that a thickness of the second lens group can be reduced, thereby reducing a height of the long-focus lens and facilitating accommodation. In addition, the second lens group is enabled to have a small focal length and a strong light ray convergence capability, thereby facilitating focusing and reducing a motor stroke. In addition, the thickness of the second lens group is small, so that the height of the long-focus lens can be reduced, thereby facilitating miniaturization of a camera assembly.

In some implementations, the focal length F1 of the first lens group and the focal length F2 of the second lens group satisfy the following: $1<(F1-F2)/F1 \leq 3$, or $3<(F1-F2)/F1<9$.

In this implementation, when focal lengths of the two lens groups are both small, and a difference between the focal lengths of the two lens groups is small, that is, a value of $(F1-F2)/F1$ is small, a light ray convergence capability of the long-focus lens is improved, thereby helping implement close-up imaging. However, a light ray deflection degree of the long-focus lens is increased, and an aberration is increased. Therefore, unclear imaging may occur, and imaging quality is poor. When the focal length of the second lens group is large, and a difference between the focal length of the second lens group and the focal length of the first lens group is large, that is, the value of $(F1-F2)/F1$ is large, the light ray convergence capability of the long-focus lens is reduced, which is not conducive to close-up imaging. However, the light ray deflection degree of the long-focus lens is reduced, and the aberration is reduced. Therefore, the imaging quality is improved. Therefore, focal lengths of the two lens groups may be designed based on a requirement of an actual application scenario. It is set that $1<(F1-F2)/F1 \leq 3$ or, $3<(F1-F2)/F1<9$, to improve a focusing capability and imaging quality of the long-focus lens.

In some implementations, a thickness T1 of the first lens group and the focal length F1 of the first lens group satisfy the following: $0.1<T1/F1 \leq 0.3$, or $0.3<T1/F1<1$; or
a thickness T2 of the second lens group and the focal length F2 of the second lens group satisfy the following: $-1<T2/F2<-0.1$.

In this implementation, it is set that $0.1<T1/F1 \leq 0.3$ or $0.3<T1/F1<1$, so that the thickness of the first lens group is small. In this way, a height of the long-focus lens can be reduced, thereby facilitating accommodation. In addition, motion of the first lens group is facilitated, and imaging quality is improved.

In addition, it is set that $-1<T2/F2<-0.1$. This helps the second lens group have a small thickness, thereby reducing a height of a long-focus lens 1 and facilitating accommodation. In addition, motion of the second lens group is facilitated, and imaging quality is improved.

In some implementations, the thickness T1 of the first lens group, the thickness T2 of the second lens group, and the effective focal length EFL of the second lens satisfy the following: $T1+T2 \leq 0.6$ EFL, or $0.6$ EFL$<T1+T2 \leq 0.8$ EFL, or $0.8$ EFL$<T1+T2<$EFL.

In this implementation, it is set that T1+T2≤0.6 EFL, or 0.6 EFL<T1+T2≤0.8 EFL, or 0.8 EFL<T1+T2<EFL, so that a sum of the thickness of the first lens group and the thickness of the second lens group is small. In this way, when the long-focus lens is in an accommodated state, an overall height of the camera assembly is small, and the camera assembly occupies small space in an inner cavity of the entire electronic device, thereby facilitating accommodation. In addition, the camera assembly can be better applicable to a thin electronic device.

In some implementations, an image height ImgH of the second lens satisfies the following: ImgH>2 mm.

In this implementation, the long-focus lens has a small field of view and a large plate size, to have a strong telephoto shooting capability, and have high imaging quality in telephoto shooting.

## BRIEF DESCRIPTION OF DRAWINGS

FIG. 1A is a diagram of a structure of an electronic device in some embodiments according to an embodiment of this application;

FIG. 1B is a diagram of a field of view FOV of a camera assembly shown in FIG. 1A in some application scenarios;

FIG. 2 is a diagram of a structure of a camera assembly shown in FIG. 1A in some embodiments;

FIG. 3A is a diagram of a structure of the camera assembly shown in FIG. 2 in an accommodated state;

FIG. 3B is a diagram of a structure of the camera assembly shown in FIG. 3A when the camera assembly focuses on a distant view in a pop-up state;

FIG. 3C is a diagram of a structure of the camera assembly shown in FIG. 3A when the camera assembly focuses on a close-up view in a pop-up state;

FIG. 4A is a diagram of an optical path when a camera assembly focuses on a distant view according to a first embodiment of this application;

FIG. 4B is a diagram of an optical path when the camera assembly shown in FIG. 4A focuses on a close-up view of 50 mm;

FIG. 4C is a simulation effect diagram of a long-focus lens shown in FIG. 4A when the long-focus lens focuses on a distant view;

FIG. 4D is a simulation effect diagram of a long-focus lens shown in FIG. 4B when the long-focus lens focuses on a close-up view of 50 mm;

FIG. 5A is a diagram of an optical path when a camera assembly focuses on a distant view according to a second embodiment of this application;

FIG. 5B is a diagram of an optical path when the camera assembly shown in FIG. 5A focuses on a close-up view of 50 mm;

FIG. 5C is a simulation effect diagram of a long-focus lens shown in FIG. 5A when the long-focus lens focuses on a distant view;

FIG. 5D is a simulation effect diagram of a long-focus lens shown in FIG. 5B when the long-focus lens focuses on a close-up view of 50 mm;

FIG. 6A is a diagram of an optical path when a camera assembly focuses on a distant view according to a third embodiment of this application;

FIG. 6B is a diagram of an optical path when the camera assembly shown in FIG. 6A focuses on a close-up view of 50 mm;

FIG. 6C is a simulation effect diagram of a long-focus lens shown in FIG. 6A when the long-focus lens focuses on a distant view;

FIG. 6D is a simulation effect diagram of a long-focus lens shown in FIG. 6B when the long-focus lens focuses on a close-up view of 50 mm;

FIG. 7A is a diagram of an optical path when a camera assembly focuses on a distant view according to a fourth embodiment of this application;

FIG. 7B is a diagram of an optical path when the camera assembly shown in FIG. 7A focuses on a close-up view of 50 mm;

FIG. 7C is a simulation effect diagram of a long-focus lens shown in FIG. 7A when the long-focus lens focuses on a distant view;

FIG. 7D is a simulation effect diagram of a long-focus lens shown in FIG. 7B when the long-focus lens focuses on a close-up view of 50 mm;

FIG. 8A is a diagram of an optical path when a camera assembly focuses on a distant view according to a fifth embodiment of this application;

FIG. 8B is a diagram of an optical path when the camera assembly shown in FIG. 8A focuses on a close-up view of 50 mm;

FIG. 8C is a simulation effect diagram of a long-focus lens shown in FIG. 8A when the long-focus lens focuses on a distant view;

FIG. 8D is a simulation effect diagram of a long-focus lens shown in FIG. 8B when the long-focus lens focuses on a close-up view of 50 mm;

FIG. 9A is a diagram of an optical path when a camera assembly focuses on a distant view according to a sixth embodiment of this application;

FIG. 9B is a diagram of an optical path when the camera assembly shown in FIG. 9A focuses on a close-up view of 50 mm;

FIG. 9C is a simulation effect diagram of a long-focus lens shown in FIG. 9A when the long-focus lens focuses on a distant view;

FIG. 9D is a simulation effect diagram of a long-focus lens shown in FIG. 9B when the long-focus lens focuses on a close-up view of 50 mm;

FIG. 10A is a diagram of an optical path when a camera assembly focuses on a distant view according to a seventh embodiment of this application;

FIG. 10B is a diagram of an optical path when the camera assembly shown in FIG. 10A focuses on a close-up view of 50 mm;

FIG. 10C is a simulation effect diagram of a long-focus lens shown in FIG. 10A when the long-focus lens focuses on a distant view;

FIG. 10D is a simulation effect diagram of a long-focus lens shown in FIG. 10B when the long-focus lens focuses on a close-up view of 50 mm;

FIG. 11A is a diagram of an optical path when a camera assembly focuses on a distant view according to an eighth embodiment of this application;

FIG. 11B is a diagram of an optical path when the camera assembly shown in FIG. 11A focuses on a close-up view of 50 mm;

FIG. 11C is a simulation effect diagram of a long-focus lens shown in FIG. 11A when the long-focus lens focuses on a distant view; and

FIG. 11D is a simulation effect diagram of a long-focus lens shown in FIG. 11B when the long-focus lens focuses on a close-up view of 50 mm.

## DESCRIPTION OF EMBODIMENTS

For ease of understanding, English abbreviations and related technical terms used in embodiments of this application are first explained and described below.

A focal power (focal power) is equal to a difference between convergence of an image beam and convergence of an object beam, and represents a capability of an optical system to deflect light rays.

For a lens or a lens group with a positive focal power, the lens or lens group has a positive focal length, and has an effect of converging light rays.

For a lens or a lens group with a negative focal power, the lens or lens group has a negative focal length, and has an effect of diverging light rays.

A focal length (focal length), is a measure of how strongly an optical system converges or diverges light, and is a vertical distance from an optical center of the lens or the lens group to the image focal plane when a clear imagery of an infinite view is formed on an image focal plane by using a lens or a lens group. From a practical perspective, the focal length may be understood as a distance from a center of a lens to a plane when an object is at an infinite distance. A prime lens has a fixed optical center while a long-focus lens has a variable optical center that leads to a variable focal length.

An effective focal length (effective focal length, EFL) of a lens is a distance from a center of the lens to a focal point.

For an object side surface, with a lens as a boundary, a side on which a to-be-photographed object is located is an object side, and a surface that is of the lens and that is close to the object side is referred to as the object side surface.

For an image side surface, with a lens as a boundary, a side on which an image of a to-be-photographed object is located is an image side, and a surface that is of the lens and that is close to the image side is referred to as the image side surface.

An object distance is a distance between a to-be-photographed object and an object side surface of a lens.

An aperture diaphragm (aperture diaphragm) is a device used to control an amount of light reaching a light-sensitive surface after light rays pass through a lens, and the aperture diaphragm is usually located in the lens.

An F-stop, also referred to as an F-number (Fno), is a relative value (a reciprocal of a relative aperture) obtained by dividing a focal length of a lens by an entrance pupil diameter of the lens. A smaller F-stop indicates more incident light per unit time. A larger F-stop indicates a smaller depth of field, and consequently, background content is blurred during shooting. This is similar to an effect of a long-focus lens.

A total track length (total track length, TTL) is a total length from a surface that is of a lens and that is closest to an object side to an imaging plane. The TTL is a main factor for forming a camera height.

An imaging plane is a carrier plane that is located on image sides of all lenses in a long-focus lens and on which an image is formed after light rays sequentially pass through the lenses in the long-focus lens.

A field of view (field of view, FOV) is also referred to as an angle of view. In an optical instrument, an included angle formed, by using a lens of the optical instrument as a vertex, by two edges of a maximum range of the lens through which an object image of a to-be-photographed object can pass is referred to as a field of view.

An optical axis is an axis that vertically passes through a center of a lens. An optical axis of a lens is an axis that passes through centers of lenses of the lens. When light rays parallel to the optical axis enter a convex lens, an ideal convex lens converges all the light rays at one point behind the lens. This point at which all the light rays converge is a focal point.

A focal point is a point at which parallel light rays converge after being refracted by a lens or a lens group.

An image focal plane, also referred to as a rear focal plane or a second focal plane, is a plane that passes through an image focal point (also referred to as a rear focal point or a second focal point) and that is perpendicular to an optical axis of a system.

An Abbe number, namely, a dispersion coefficient, is a difference ratio of refractive indices of an optical material at different wavelengths, and indicates a degree of dispersion of the material.

Aberration: A paraxial region of an optical system has properties of an ideal optical system. A paraxial light ray emitted from a point on an object intersects an image plane at one point (namely, a paraxial image point). However, light rays actually passing through different apertures of a lens can hardly perfectly intersect at one point. Instead, there are deviations from the position of the paraxial image point. These deviations are collectively referred to as an aberration.

A longitudinal spherical aber (longitudinal spherical aber) is also referred to as a longitudinal chromatic aberration or a positional chromatic aberration or an axial chromatic aberration. A beam of light rays parallel to an optical axis converges at different positions after passing through a lens. This aberration is referred to as a positional chromatic aberration or an axial chromatic aberration. This is because positions of images formed by the lens for light of different wavelengths are different, so that image focal planes of light of different colors cannot overlap during final imaging, and polychromatic light is scattered to form dispersion.

A distortion (distortion), is a degree at which an image formed by an optical system for an object is distorted relative to the object. A distortion is caused because a height of a point at which chief light rays with different fields of view intersect a Gaussian image plane after the chief light rays pass through the optical system is not equal to an ideal image height due to impact of a diaphragm spherical aberration, and a difference between the two heights is a distortion. Therefore, a distortion only changes an imaging position of an off-axis object point on an ideal plane, so that a shape of an image is distorted, but definition of the image is not affected.

An image height (Image Height, ImgH) indicates a half of a diagonal length of an effective pixel area on a photosensitive chip, namely, an image height of an imaging plane.

Astigmatism (astigmatism): Because an object point is not on an optical axis of an optical system, a beam emitted by the object point has an oblique angle to the optical axis. After the beam is refracted by a lens, convergence points of a meridian pencil and a sagittal pencil are not a same point. That is, the beam cannot be focused at one point, and imaging is not clear, resulting in astigmatism. The meridian pencil and the sagittal pencil are names of beams in two vertical planes in a rotationally symmetrical optical system.

A curvature of field (curvature of field) is used for indicating a difference in an optical axis direction between a position of a clearest image point in a non-central field of view after light rays pass through an optical lens group and a position of a clearest image point in a central field of view. When a lens has a curvature of field, an intersection of an entire beam does not coincide with an ideal image point. Although a clear image point can be obtained at each specific point, an entire image plane is a curved surface.

The following describes technical solutions of embodiments in this application with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

In the following, terms such as "first" and "second" are used only for description purposes, and cannot be understood as implying or implying relative importance or implicitly indicating a quantity of indicated technical features. Therefore, a feature limited by "first" or "second" may explicitly or implicitly include one or more features.

Embodiments of this application provide an electronic device. The electronic device may be an electronic product having a shooting or video recording function, for example, a mobile phone, a tablet computer, a notebook computer, a television set, a vehicle-mounted device, a wearable device, or a video surveillance device. The wearable device may be a smart band, a smart watch, a wireless headset, augmented reality (augmented reality, AR) technology glasses, an augmented reality technology helmet, virtual reality (virtual reality, VR) technology glasses, a virtual reality technology helmet, or the like. In this embodiment of this application, an example in which the electronic device is a mobile phone is used for description.

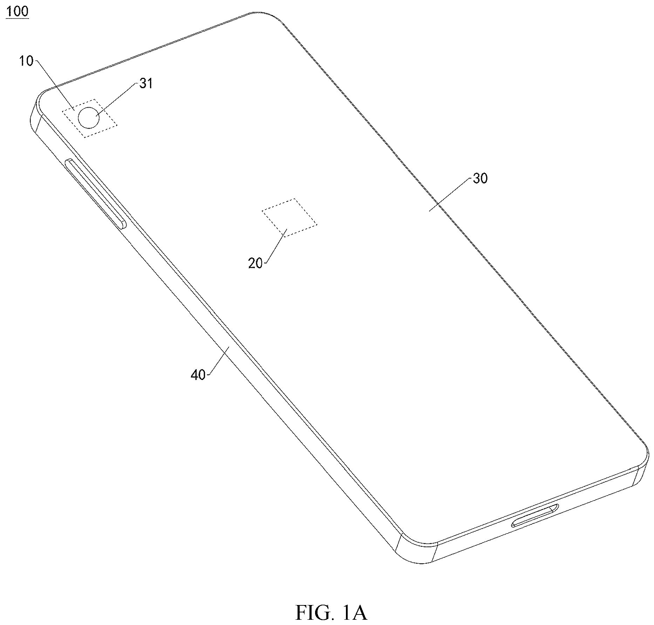

Refer to FIG. 1A. FIG. 1A is a diagram of a structure of an electronic device 100 in some embodiments according to an embodiment of this application.

As shown in FIG. 1A, in some embodiments, the electronic device 100 includes a camera assembly 10, an image processor 20, a rear cover 30, a frame 40, and a display (not shown in the figure). The rear cover 30 and the display are fastened back to back on two sides of the frame 40. The rear cover 30, the display, and the frame 40 jointly enclose an entire inner cavity of the electronic device 100. The display may be configured to display an image, and may further integrate a touch control function to implement human-computer interaction. The camera assembly 10 is accommodated in the entire inner cavity. The camera assembly 10 is configured to: collect optical information outside the electronic device 100, and form a corresponding image signal. The image processor 20 is in a communication connection to the camera assembly 10, and the image processor 20 is configured to: obtain an image signal from the camera assembly 10 and process the image signal. The communication connection between the camera assembly 10 and the image processor 20 may be implemented in an electrical connection manner like cabling or in a coupling manner or the like, for data transmission. It can be understood that the communication connection between the camera assembly 10 and the image processor 20 may alternatively be implemented in another manner that can implement data transmission.

In this embodiment, the rear cover 30 may be provided with a camera hole 31, the camera assembly 10 collects light rays through the camera hole 31, and the camera assembly 10 may be used as a rear-facing camera of the electronic device 100. For example, the rear cover 30 may include a transparent lens, and the transparent lens is mounted in the camera hole 31, to allow light rays to pass through, and can be dustproof and waterproof.

In some other embodiments, the camera assembly 10 may alternatively be used as a front-facing camera of the electronic device 100. For example, the display may be provided with a transparent area, and the camera assembly 10 may collect optical information outside the electronic device 100 by using the transparent area. In this embodiment, the camera assembly 10 is used as a front-facing camera assembly of the electronic device 100. In other words, the camera assembly 10 may be used as the front-facing camera assembly of the electronic device 100, or may be used as a rear-facing camera assembly of the electronic device 100. This is not strictly limited in embodiments of this application.

For example, as shown in FIG. 1A, the camera assembly 10 of the electronic device 100 may be mounted at a first end of an upper part of the electronic device 100. The first end and a second end of the upper part are respectively located at a left end and a right end of the upper part. It may be understood that orientation terms such as "up", "down", "left", and "right" in this application are descriptions with reference to orientations in the accompanying drawings, and do not indicate or imply that a described apparatus or element needs to have a particular orientation, be constructed and operated in a particular orientation, and therefore cannot be understood as a limitation on this application.

In addition, a mounting position of the camera assembly 10 of the electronic device 100 in the embodiment shown in FIG. 1A is merely an example. The mounting position of the camera assembly 10 is not strictly limited in this application. In some other embodiments, the camera assembly 10 may alternatively be mounted on another position of the electronic device 100. For example, the camera assembly 10 may be mounted in the middle of the upper part or the second end of the upper part of the electronic device 100, or may be mounted on a middle part of the electronic device 100, or at a left end of a lower part or a right end of the lower part of the electronic device 100.

In some other embodiments, the electronic device 100 may further include a terminal body and an auxiliary component that can rotate, move, or disassemble relative to the terminal body, and the camera assembly 10 may be disposed on the auxiliary component.

In some embodiments, the electronic device 100 may further include an analog-to-digital converter (also referred to as an A/D converter, which is not shown in the figure). The analog-to-digital converter is connected between the camera assembly 10 and the image processor 20. The analog-to-digital converter is configured to: convert an analog image signal generated by the camera assembly 10 into a digital image signal, transmit the digital image signal to the image processor 20. Then, the image processor 20 processes the digital image signal, to obtain a processed image signal. The processed image signal may be displayed as an image or imagery on a display.

In some embodiments, the electronic device 100 may further include a memory (not shown in the figure). The memory is in a communication connection to the image processor 20. The image processor 20 transmits the processed image signal to the memory, so that when an image needs to be viewed subsequently, the processed image signal can be searched for from the memory at any time and displayed on the display. In some embodiments, the image processor 20 further compresses the processed image signal, and then stores the compressed image signal in the memory to save memory space.

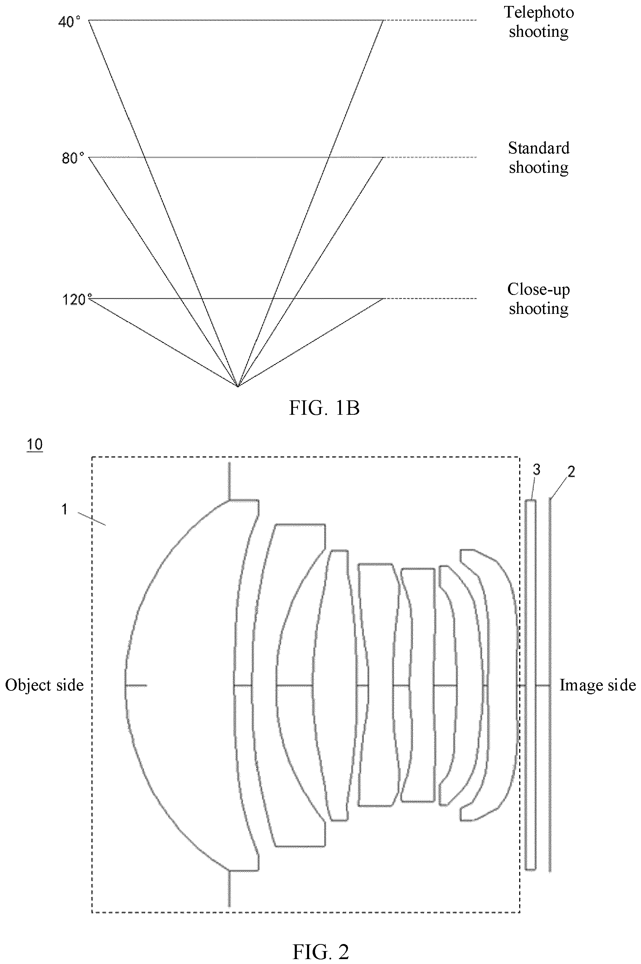

Refer to FIG. 1B. FIG. 1B is a diagram of a field of view FOV of the camera assembly 10 shown in FIG. 1A in some application scenarios.

For example, the camera assembly 10 may include a first lens (not shown in the figure) and a second lens (not shown in the figure). The first lens may be used as a primary lens. In this application, the first lens corresponds to a 1x (namely, 1 time) optical zoom ratio. The second lens may be a long-focus lens. The second lens is a 3x (namely, 3 times) optical zoom lens of the first lens, that is, the second lens corresponds to a 3x (namely, 3 times) optical zoom ratio. It may be understood that optical zoom is mainly implemented by switching lenses having different optical zoom ratios in the camera assembly. An optical zoom ratio of a lens can indicate an optical zoom capability of the lens. A larger optical zoom ratio indicates a farther view that can be photographed.

As shown in FIG. 1B, when the camera assembly 10 performs telephoto shooting, the second lens may be used, and a field of view FOV of the second lens may be 40°. In this embodiment, the field of view of the second lens is less than 60°. When the camera assembly 10 performs standard shooting, the first lens may be used, and a field of view of the first lens may be 80°. In this embodiment, the field of view of the first lens may be greater than 60° and less than 120°. When the camera assembly 10 performs close-up shooting, the second lens may also be used, and the field of view of the second lens may be 120°.

Refer to FIG. 2. FIG. 2 is a diagram of a structure of the camera assembly 10 shown in FIG. 1A in some embodiments.

As shown in FIG. 2, in some embodiments, the camera assembly 10 includes a long-focus lens 1 and a photosensitive element 2. In this embodiment, the second lens of the camera assembly 10 may have a structure the same as that of the long-focus lens 1. In some other embodiments, the second lens of the camera assembly 10 may alternatively have another structure. This is not limited in this application. A structure within dashed lines in FIG. 2 is a schematic structure of the long-focus lens 1 in some embodiments. The long-focus lens 1 in this application may alternatively have another structure, and the accompanying drawing cannot be considered as a limitation on the structure of the long-focus lens 1.

The photosensitive element 2 is located on an image side of the long-focus lens 1. The camera assembly 10 may further include a circuit board (not shown in the figure). The photosensitive element 2 may be fastened to the circuit board. Light rays can pass through the long-focus lens 1 to irradiate the photosensitive element 2. For example, a working principle of the camera assembly 10 is as follows: Light rays reflected by a to-be-photographed view generate an optical image through the long-focus lens 1, and the optical image is projected to the photosensitive element 2. The photosensitive element 2 converts the optical image into an electrical signal, namely, an analog image signal, and transmits the electrical signal to an analog-to-digital converter, to convert the electrical signal into a digital image signal and send the digital image signal to the image processor 20.

The photosensitive element 2 (also referred to as an image sensor) is a semiconductor chip, includes hundreds of thousands to millions of photodiodes on a surface, and generates charges when being irradiated by light. The photosensitive element 2 may be a charge coupled device (charge coupled device, CCD), or may be a complementary metal-oxide semiconductor device (complementary metal-oxide semiconductor, CMOS). The charge coupled device is made of a highly photosensitive semiconductor material, and can convert light rays into electric charges. The charge coupled device includes many photosensitive units, which are usually in a unit of megapixels. When a surface of the charge coupled device is irradiated by light rays, each photosensitive unit reflects electric charges on a component. Signals generated by all photosensitive units are combined to form a complete picture. The complementary metal-oxide semiconductor device is a semiconductor mainly made of two elements: silicon and germanium, so that semiconductors of N (with negative electrons) and P (with positive electrons) levels coexist on the complementary metal-oxide semiconductor device. A current generated through these two complementary effects may be recorded and interpreted into an image by a processing chip.

In some embodiments, the photosensitive element 2 may move on a plane perpendicular to a thickness direction of the camera assembly 10 or tilt relative to a thickness direction of the camera assembly 10, to implement image stabilization. In this case, the photosensitive element 2 does not have a capability of moving on a plane parallel to the thickness direction of the camera assembly 10, or has a weak stroke far less than a focusing stroke, to reduce a thickness of the module. In some other embodiments, the photosensitive element 2 may alternatively be a fixed component.

The long-focus lens 1 performs imaging mainly by using a refraction principle of a lens. To be specific, light rays from a view pass through the long-focus lens 1 and form a clear imagery on an imaging plane, and the imagery of the view is recorded by using the photosensitive element 2 located on the imaging plane. For example, when the long-focus lens 1 focuses on an object whose object distance is greater than 100 meters, that is, when the long-focus lens 1 focuses on a distant view, a field of view FOV of the long-focus lens 1 is less than 60°. For example, a half field of view HFOV may satisfy the following: tan (HFOV) < 0.5, that is, the field of view FOV may be 53°, or the field of view FOV may be 45°, 50°, 54°, or the like. In addition, an image height ImgH of the long-focus lens 1 is greater than 2 mm, that is, a size of a diagonal of a photosensitive element of the long-focus lens 1 is greater than 4 mm. For example, the size of the diagonal of the photosensitive element of the long-focus lens 1 may be 5 mm, 6 mm, 8 mm, or the like. In this application, the long-focus lens 1 has a small field of view and a large plate size, to have a strong telephoto shooting capability, and have high imaging quality in telephoto shooting. The half field of view HFOV is a half of a maximum field of view of the long-focus lens 1. In this application, shooting with an object distance greater than 100 meters may be considered as telephoto shooting, and shooting with an object distance less than 10 centimeters may be considered as close-up shooting. In addition, a shortest focusing distance of the long-focus lens 1 is less than 10 centimeters, to implement macro shooting.

The long-focus lens 1 may be an upright lens or a periscope lens. In this embodiment, an example in which the long-focus lens 1 is an upright lens is used for description.

In some embodiments, the camera assembly 10 may further include a light filter 3. The light filter 3 may be located between the long-focus lens 1 and the photosensitive element 2, and is configured to filter out an unnecessary band in a light ray, and prevent the photosensitive element 2 from generating a false color or a ripple, to improve effective resolution and color reproduction thereof. For example, the light filter 3 may be an infrared light filter. In this embodiment, the light filter 3 is an independent component. In some other embodiments, a mechanical part, namely, the light filter 3, may be removed, and instead, surface processing or material processing is performed on at least one optical element of the long-focus lens 1, to implement light filtering. A specific embodiment of a mechanical part or structure used for implementing light filtering is not strictly limited in this application.

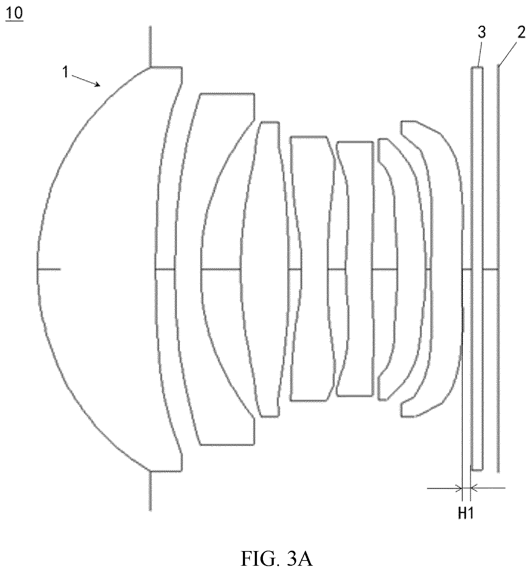

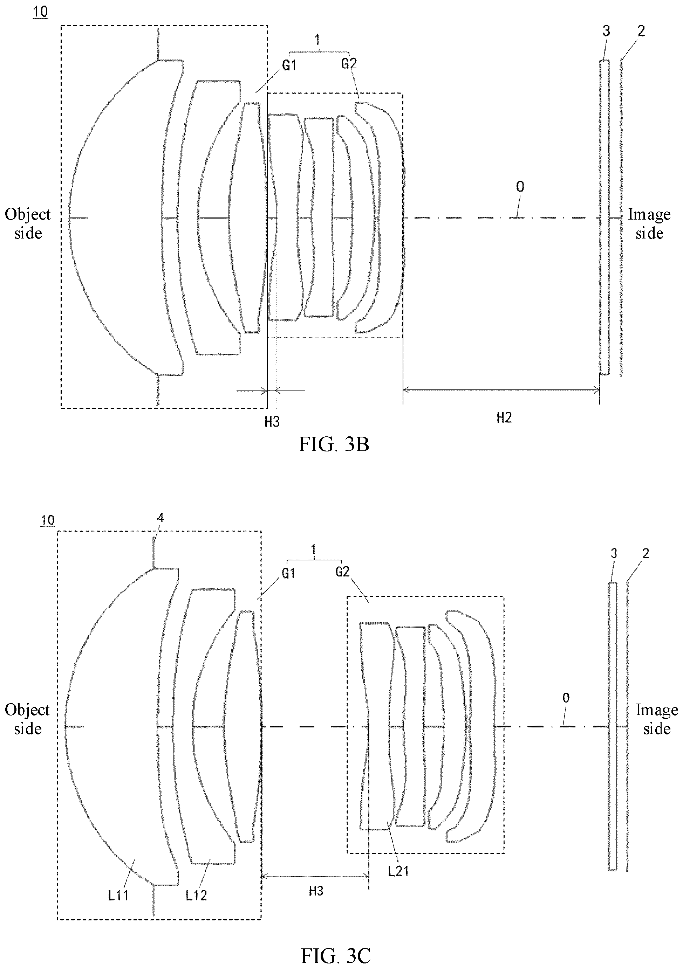

Refer to FIG. 3A and FIG. 3B. FIG. 3A is a diagram of a structure of the camera assembly shown in FIG. 2 in an accommodated state. FIG. 3B is a diagram of a structure of the camera assembly shown in FIG. 3A in a pop-up state.

As shown in FIG. 3A, the long-focus lens 1 may move to be in an accommodated state. As shown in FIG. 3B, the long-focus lens 1 may move to be in a pop-up state. When the long-focus lens 1 is in the accommodated state, a first distance H1 between the long-focus lens 1 and the light filter 3 is small. For example, the first distance H1 may be less than 1 mm, for example, 0.1 mm or 0.5 mm. When the long-focus lens 1 is in the accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device. In addition, the first distance H1 is disposed between the long-focus lens 1 and the light filter 3, to avoid a case in which the long-focus lens 1 and the light filter 3 are damaged because of collision or scraping when the long-focus lens 1 is in the accommodated state. This prolongs a service life of the camera assembly 10. Factors such as a focusing stroke, a lens support margin, and temperature impact need to be considered for the first distance H1. In some other embodiments, when the long-focus lens 1 is in the accommodated state, the long-focus lens 1 may alternatively contact the light filter 3. This is not limited in this application.

As shown in FIG. 3B, when the long-focus lens 1 is in the pop-up state, a second distance H2 between the long-focus lens 1 and the light filter 3 is greater than the first distance H1. In this case, the long-focus lens 1 may be in a telephoto shooting state, and implement a focusing function. In this embodiment, the second distance H2 between the long-focus lens 1 and the light filter 3 provides sufficient motion space for the long-focus lens 1, and the long-focus lens 1 can move relative to the photosensitive element 2, to implement a focusing function.

In some embodiments, the long-focus lens 1 may include a plurality of einzel lenses, for example, five, six, or seven einzel lenses. The plurality of einzel lenses are disposed at intervals. In a process in which the long-focus lens 1 moves from the accommodated state to the pop-up state, or moves from the pop-up state to the accommodated state, or focuses during telephoto shooting, a distance between the plurality of einzel lenses of the long-focus lens 1 does not change, that is, an effective focal length EFL of the long-focus lens 1 remains unchanged.

Refer to FIG. 3B and FIG. 3C. FIG. 3C is a diagram of a structure of the camera assembly 10 shown in FIG. 3A in another pop-up state. The camera assembly 10 shown in FIG. 3B is in a telephoto shooting mode, and the camera assembly 10 shown in FIG. 3C is in a close-up shooting mode. Structures within dashed lines in FIG. 3B and FIG. 3C are schematic structures of a first lens group G1 and a second lens group G2 of the long-focus lens 1 in some embodiments. The first lens group G1 and the second lens group G2 in this application may further have other structures, and the accompanying drawings cannot be considered as a limitation on structures of the first lens group G1 and the second lens group G2.

When the camera assembly 10 is in the pop-up state, the focal length of the long-focus lens 1 may further change, to implement switching between a distant view and a close-up view.

In some embodiments, the long-focus lens 1 may include the first lens group G1 and the second lens group G2 that are arranged from an object side to an image side. As shown in FIG. 3B and FIG. 3C, in a focusing process in which the long-focus lens 1 switches focus from the distant view to the close-up view, a distance H3 between the first lens group G1 and the second lens group G2 increases. Conversely, in a focusing process in which the long-focus lens 1 switches focus from the close-up view to the distant view, the distance H3 between the first lens group G1 and the second lens group G2 decreases. Therefore, in the focusing process in which the long-focus lens 1 switches focus between the distant view and the close-up view, the distance H3 between the first lens group G1 and the second lens group G2 changes.

In this application, the distance H3 between the first lens group G1 and the second lens group G2 changes, so that the long-focus lens 1 not only can implement long-distance shooting with high imaging quality, but also can have a strong close-up shooting capability, to implement wide-object-distance imaging from the distant view to the close-up view.

In addition, in the focusing process in which the long-focus lens 1 switches focus from the distant view to the close-up view, the distance H3 between the first lens group G1 and the second lens group G2 increases, so that high close-up imaging quality can be achieved. In some other embodiments, in the focusing process in which the long-focus lens 1 switches focus from the distant view to the close-up view, the distance H3 between the first lens group G1 and the second lens group G2 may alternatively decreases. This is not limited in this application.

In addition, the first lens group G1 has a positive focal power, and the second lens group G2 has a negative focal power, so that a height of the long-focus lens 1 is less than an effective focal length EFL of the long-focus lens 1, to reduce the height of the long-focus lens 1, thereby facilitating miniaturization of the camera assembly 10.

In this application, the long-focus lens 1 has a strong wide-object-distance focusing capability, can perform telephoto shooting, and can further photograph a close-up view within 10 centimeters. In addition, imaging definition is high, and imaging quality is high. In addition, focal powers of the first lens group G1 and the second lens group G2 are further properly configured for the long-focus lens 1, so that the height of the long-focus lens 1 is small, thereby facilitating miniaturization of the camera assembly 10.

In some embodiments, in the focusing process in which the long-focus lens 1 switches focus from the distant view to the close-up view, a combined focal length of the first lens group G1 and the second lens group G2, namely, the effective focal length EFL of the long-focus lens 1, decreases. In some other embodiments, in the focusing process in which the long-focus lens 1 switches focus from the distant view to the close-up view, the effective focal length EFL of the long-focus lens 1 may alternatively increases.

In some embodiments, a thickness T1 of the first lens group G1, a thickness T2 of the second lens group G2, and the effective focal length EFL of the long-focus lens 1 satisfy the following: T1+T2<EFL. It is set that T1+T2<EFL, so that a sum of the thickness T1 of the first lens group G1 and the thickness T2 of the second lens group G2 is small. In this way, when the long-focus lens 1 is in an accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device. For example, the thickness T1 of the first lens group G1, the thickness T2 of the second lens group G2, and the effective focal length EFL of the long-focus lens 1 may alternatively satisfy the following: T1+T2=0.5 EFL, 0.6 EFL, 0.8 EFL, or the like. Alternatively, the thickness T1 of the first lens group G1, the thickness T2 of the second lens group G2, and the effective focal length EFL of the long-focus lens 1 may alternatively satisfy the following: T1+T2≤0.6 EFL, or 0.6 EFL<T1+T2≤0.8 EFL, or 0.8 EFL<T1+T2<EFL. In this application, the thickness T1 of the first lens group G1 is a distance between an object side surface and an image side surface of the first lens group G1, and the thickness T2 of the second lens group G2 is a distance between an object side surface and an image side surface of the second lens group G2. It is set that T1+T2<0.6 EFL, so that the sum of the thickness T1 of the first lens group G1 and the thickness T2 of the second lens group G2 is smaller. In this way, when the long-focus lens 1 is in an accommodated state, the overall height of the camera assembly 10 is smaller, and the camera assembly 10 occupies small space in an entire inner cavity of the electronic device 100, thereby facilitating accommodation. In addition, the camera assembly 10 can be better applicable to a thin electronic device.

In some embodiments, the thickness T1 of the first lens group G1 and the focal length F1 of the first lens group G1 satisfy the following: 0.1<T1/F1<1. For example, the thickness T1 of the first lens group G1 and the focal length F1 of the first lens group G1 may alternatively satisfy T1/F1=0.3, 0.5, 0.9, or the like. Alternatively, the thickness T1 of the first lens group G1 and the focal length F1 of the first lens group G1 may satisfy the following: 0.1<T1/F1≤0.3, or 0.3<T1/F1<1. In this embodiment, it is set that 0.1<T1/F1≤0.3, so that the thickness of the first lens group G1 is small. In this way, a height of the long-focus lens 1 can be reduced, thereby facilitating accommodation. In addition, motion of the first lens group G1 is facilitated, and imaging quality is improved.

In this application, a plurality of lenses of the first lens group G1 may be mounted on a first lens tube (not shown in the figure), and a plurality of lenses of the second lens group G2 may be mounted on a second lens tube (not shown in the figure). In other words, the plurality of lenses of the first lens group G1 and the plurality of lenses of the second lens group G2 may be separately mounted on two lens tubes, and the focal length F1 of the first lens group G1 and the focal length F2 of the second lens group G2 may be obtained through independent measurement. For example, the focal length F1 of the first lens group G1, the focal length F2 of the second lens group G2, and the effective focal length EFL of the long-focus lens 1 may be separately measured by using a focal length measuring instrument.

In some embodiments, the thickness T2 of the second lens group G2 and the focal length F2 of the second lens group G2 satisfy the following: -1<T2/F2<-0.1. In this embodiment, it is set that -1<T2/F2<-0.1. This helps the second lens group G2 have a small thickness, thereby reducing the height of the long-focus lens 1 and facilitating accommodation. In addition, motion of the second lens group G2 is facilitated, and imaging quality is improved.

It may be understood that the foregoing limitation on a ratio range of the thickness T1 of the first lens group G1 to the focal length F1 of the first lens group G1 and the limitation on a ratio range of the thickness T2 of the second lens group G2 to the focal length F2 of the second lens group G2 may exist independently of each other, or may be combined with each other. When the foregoing ratio ranges are combined with each other, the long-focus lens 1 can obtain a smaller height, a better focusing capability, and better imaging quality.

In some embodiments, a single-group focusing manner may be used to simplify a motion manner of a focusing structure, and simplify a focusing method.

For example, as shown in FIG. 3B and FIG. 3C, in a focusing process in which the long-focus lens 1 switches focus from the distant view to the close-up view, the first lens group G1 does not move, and the second lens group G2 moves toward the image side along an optical axis O, to increase the distance H3 between the first lens group G1 and the second lens group G2. In this embodiment, the first lens group G1 does not move, and the second lens group G2 is moved to perform focusing, so that a motion manner of a focusing structure of the long-focus lens 1 can be simplified, thereby simplifying a focusing method.

In this embodiment, a distance between the first lens group G1 and the photosensitive element 2 remains unchanged, and a distance between the second lens group G2 and the photosensitive element 2 decreases. In this application, when the long-focus lens 1 focuses on the distant view and the close-up view, the imaging plane falls on the photosensitive element 2. To be specific, a distance between the first lens group G1 and the imaging plane of the long-focus lens 1 remains unchanged, and a distance between the second lens group G2 and the imaging plane of the long-focus lens 1 decreases.

In some other embodiments, the first lens group G1 moves toward the object side along the optical axis O, and the second lens group G2 does not move, to increase the distance H3 between the first lens group G1 and the second lens group G2. In this embodiment, the first lens group G1 is located on an object side of the second lens group G2, thereby increasing movable optical path space. This helps reduce a light ray turning angle and an aberration, and improves imaging quality. In addition, the second lens group G2 does not move, and the first lens group G1 is moved to perform focusing, so that a motion manner of a focusing structure of the long-focus lens 1 can be simplified, thereby simplifying a focusing method.

In this embodiment, a distance between the first lens group G1 and the photosensitive element 2 increases, and a distance between the second lens group G2 and the photosensitive element 2 remains unchanged. In this application, when the long-focus lens 1 focuses on the distant view and the close-up view, the imaging plane falls on the photosensitive element 2. To be specific, a distance between the first lens group G1 and the imaging plane of the long-focus lens 1 increases, and a distance between the second lens group G2 and the imaging plane of the long-focus lens 1 remains unchanged.

In some other embodiments, a double-group focusing manner may be used to reduce respective focusing strokes of the first lens group G1 and the second lens group G2. This can further improve motion precision of the first lens group G1 and the second lens group G2, and improve a focusing capability of the long-focus lens 1. For example, the first lens group G1 and the second lens group G2 may be moved along the optical axis O, provided that it is ensured that the distance H3 between the first lens group G1 and the second lens group G2 increases. In this embodiment, both the first lens group G1 and the second lens group G2 may move, so that respective focusing strokes of the first lens group G1 and the second lens group G2 can be reduced. This can further improve motion precision of the first lens group G1 and the second lens group G2, and improve a focusing capability of the long-focus lens 1. In addition, both the lens groups may move, thereby further increasing movable optical path space. This better helps reduce a light ray turning angle and an aberration, and further improves imaging quality.

In this embodiment, both the distance between the first lens group G1 and the photosensitive element 2 and the distance between the second lens group G2 and the photosensitive element 2 change. In this application, when the long-focus lens 1 focuses on the distant view and the close-up view, the imaging plane falls on the photosensitive element 2. To be specific, both the distance between the first lens group G1 and the imaging plane and the distance between the second lens group G2 and the imaging plane change.

For example, a motion manner of the first lens group G1 and the second lens group G2 relative to the photosensitive element 2 may be as follows: The distance between the first lens group G1 and the photosensitive element 2 increases, and the distance between the second lens group G2 and the photosensitive element 2 decreases. In this application, when the long-focus lens 1 focuses on the distant view and the close-up view, the imaging plane falls on the photosensitive element 2. To be specific, a distance between the first lens group G1 and the imaging plane of the long-focus lens 1 increases, and a distance between the second lens group G2 and the imaging plane of the long-focus lens 1 decreases.

In some other embodiments, the motion manner of the first lens group G1 and the second lens group G2 relative to the photosensitive element 2 may alternatively be as follows: Both the distance between the first lens group G1 and the photosensitive element 2 and the distance between the second lens group G2 and the photosensitive element 2 increase, that is, both the distance between the first lens group G1 and the imaging plane of the long-focus lens 1 and the distance between the second lens group G2 and the imaging plane of the long-focus lens 1 increase. This is not limited in this application.

In some embodiments, the distance H3 between the first lens group G1 and the second lens group G2 and the effective focal length EFL of the long-focus lens 1 satisfy the following: H3<EFL, so that the long-focus lens 1 can implement wide-obj ect-distance shooting. For example, the distance H3 between the first lens group G1 and the second lens group G2 and the effective focal length EFL of the long-focus lens 1 may satisfy the following: H3=0.5 EFL, 0.7 EFL, or 0.9 EFL. Alternatively, the distance H3 between the first lens group G1 and the second lens group G2 may satisfy the following: H3=0.05 mm, 0.07 mm, 0.1 mm, or the like. Alternatively, the distance H3 between the first lens group G1 and the second lens group G2 and the effective focal length EFL of the long-focus lens 1 may satisfy the following: H3<0.9 EFL, or 0.05 mm<H3<0.9 EFL. When the distance H3 between the first lens group G1 and the second lens group G2 and the effective focal length EFL of the long-focus lens 1 satisfy the following: 0.5 EFL<H3<0.9 EFL, the effective focal length EFL of the long-focus lens 1 is small, and the long-focus lens 1 has a strong light ray convergence capability and can be used for close-up shooting within 10 centimeters.

In some embodiments, the camera assembly 10 may further include a first actuator (not shown in the figure). The first actuator is connected to the long-focus lens 1, and is configured to control the long-focus lens 1 to move toward or away from the photosensitive element 2, to implement accommodation and pop-up of the long-focus lens 1. In addition, distant focus of the long-focus lens 1 may also be implemented. In this application, auto focus (auto focus, AF) may be implemented by using the first actuator.

For example, the first actuator may be a focus motor, for example, a voice coil motor (voice coil motor, VCM), a shape memory alloy (shape memory alloy) motor, a piezo motor (piezo motor), or a stepper motor (stepper motor). In some other embodiments, the first actuator may alternatively be a spring or another mechanism that can undergo elastic deformation. For example, refer to FIG. 3A and FIG. 3B. When the long-focus lens 1 is in a pop-up state, the spring does not undergo elastic deformation or the spring undergoes small elastic deformation, and the spring is in a natural state. When the long-focus lens 1 is in an accommodated state, the spring undergoes elastic deformation or an elastic deformation amount increases, and the spring is in a compressed state. In a process in which the long-focus lens 1 changes from the accommodated state to the pop-up state, the elastic deformation amount of the spring decreases or the spring is restored to the natural state, so that an elastic force is generated, and the long-focus lens 1 is driven by the elastic force of the spring and pops up from the accommodated state. In addition, the first actuator may alternatively use another structure. This is not limited in this application.

In some embodiments, the camera assembly 10 may further include a second actuator (not shown in the figure). The second actuator is connected to the first lens group G1, and is configured to control the first lens group G1 to move along the optical axis O, so as to change the distance H3 between the first lens group G1 and the second lens group G2, and implement switching of the long-focus lens 1 between a distant mode and a close-up mode.

For example, the second actuator may be a focus motor, for example, a voice coil motor, a shape memory alloy motor, a piezo motor, or a stepper motor. In addition, the second actuator may alternatively use another structure. This is not limited in this application.

In some embodiments, the camera assembly 10 may further include a third actuator (not shown in the figure). The third actuator is connected to the second lens group G2, and is configured to control the second lens group G2 to move along the optical axis O, so as to change the distance H3 between the first lens group G1 and the second lens group G2, and implement switching of the long-focus lens 1 between a distant mode and a close-up mode.

For example, the third actuator may be a focus motor, for example, a voice coil motor, a shape memory alloy motor, a piezo motor, or a stepper motor. In addition, the third actuator may alternatively use another structure. This is not limited in this application.

In some embodiments, the camera assembly 10 may further include the second actuator and the third actuator. The second actuator is connected to the first lens group G1, and is configured to control the first lens group G1 to move along the optical axis O. The third actuator is connected to the second lens group G2, and is configured to control the second lens group G2 to move along the optical axis O, so as to change the distance H3 between the first lens group G1 and the second lens group G2, and implement switching of the long-focus lens 1 between a distant mode and a close-up mode. In this embodiment, two actuators are used to respectively drive the first lens group G1 and the second lens group G2 to move, so that respective focusing strokes of the first lens group G1 and the second lens group G2 can be reduced. This can further improve motion precision of the first lens group G1 and the second lens group G2, and improve a focusing capability of the long-focus lens 1.

For example, the second actuator may be a focus motor, for example, a voice coil motor, a shape memory alloy motor, a piezo motor, or a stepper motor. The third actuator may be a focus motor, for example, a voice coil motor, a shape memory alloy motor, a piezo motor, or a stepper motor. In addition, the second actuator and/or the third actuator may alternatively use another structure. This is not limited in this application. In this embodiment, the structures of the second actuator and the third actuator may be the same or may be different. This is not limited in this application.

In some embodiments, the camera assembly 10 may further include the first actuator and the second actuator and/or the third actuator. The first actuator is connected to the long-focus lens 1, and is configured to control the long-focus lens 1 to move toward or away from the photosensitive element 2, to implement accommodation and pop-up of the long-focus lens 1. In addition, distant focus of the long-focus lens 1 may also be implemented. The second actuator is connected to the first lens group G1, and is configured to control the first lens group G1 to move along the optical axis O. The third actuator is connected to the second lens group G2, and is configured to control the second lens group G2 to move along the optical axis O, so as to change the distance H3 between the first lens group G1 and the second lens group G2, and implement switching of the long-focus lens 1 between a distant mode and a close-up mode.

For example, the first actuator may be a focus motor, for example, a voice coil motor, a shape memory alloy motor, a piezo motor, or a stepper motor. The second actuator may be a focus motor, for example, a voice coil motor, a shape memory alloy motor, a piezo motor, or a stepper motor. The third actuator may be a focus motor, for example, a voice coil motor, a shape memory alloy motor, a piezo motor, or a stepper motor. In addition, one, two, or three of the first actuator, the second actuator, and the third actuator may alternatively use another structure. This is not limited in this application. In this embodiment, the structures of the first actuator, the second actuator, and the third actuator may be the same, or the structure of at least one of the first actuator, the second actuator, and the third actuator may be different from the structure of another mechanism. This is not limited in this application.

In some embodiments, the camera assembly 10 may further include an image stabilization motor (not shown in the figure). The image stabilization motor is configured to drive the long-focus lens 1 to move in a direction perpendicular to the optical axis O, or rotate obliquely relative to the optical axis O. The image stabilization motor may be a shape memory alloy (shape memory alloy) motor, a suspension wire motor, a ball motor, or the like.

In some embodiments, the focal length F1 of the first lens group G1 and the effective focal length EFL of the long-focus lens 1 satisfy the following: F1< EFL. It is set that F1<EFL, so that the first lens group G1 has a small focal length and a strong light ray convergence capability, and the long-focus lens 1 can be used for close-up shooting within 10 centimeters. The first lens group G1 has a positive focal power, that is, the focal length F1 of the first lens group G1 is greater than 0. In some other embodiments, the focal length F1 of the first lens group G1 and the effective focal length EFL of the long-focus lens 1 may further satisfy the following: F1≤0.9 EFL. In this case, the first lens group G1 has a small focal length and a strong light ray convergence capability, and the long-focus lens 1 can be used for close-up shooting within 10 centimeters. In addition, the focal length F1 of the first lens group G1 and the effective focal length EFL of the long-focus lens 1 may further satisfy the following: 0.9 EFL<F1<EFL. This is not limited in this application.

In addition, the focal length F1 of the first lens group G1 is less than the effective focal length EFL of the long-focus lens 1, and the second lens group G2 having a negative focal power can extend the focal length F1 of the first lens group G1, so that a combined focal length of the first lens group G1 and the second lens group G2, namely, the effective focal length EFL of the long-focus lens 1, is greater than the focal length F1 of the first lens group G1.

In this embodiment, the focal length F2 of the second lens group G2 and the effective focal length EFL of the long-focus lens 1 may satisfy the following: -EFL<F2. In this embodiment, the second lens group G2 has a negative focal power, that is, the focal length F2 of the second lens group G2 is less than 0. In addition, it is set that -EFL<F2, so that a thickness T2 of the second lens group G2 can be reduced, thereby reducing a height of the long-focus lens 1 and facilitating accommodation. In addition, the second lens group G2 is enabled to have a small focal length and a strong light ray convergence capability, thereby facilitating focusing and reducing a motor stroke. In addition, the thickness T2 of the second lens group G2 is small, so that the height of the long-focus lens 1 can be reduced, thereby facilitating miniaturization of the camera assembly 10.

In some other embodiments, the focal length F2 of the second lens group G2 and the effective focal length EFL of the long-focus lens 1 may alternatively satisfy the following: F2<-EFL. This is not limited in this application.

In some embodiments, the focal length F1 of the first lens group G1 and the focal length F2 of the second lens group G2 may satisfy the following: 1<(F1-F2)/F1<9, to improve a focusing capability and imaging quality of the long-focus lens 1. For example, the focal length F1 of the first lens group G1 and the focal length F2 of the second lens group G2 may satisfy the following: (F1-F2)/F1=1.1, 2, 3, or the like. Alternatively, the focal length F1 of the first lens group G1 and the focal length F2 of the second lens group G2 may satisfy the following: 1<(F1-F2)/F1≤3, or 3<(F1-F2)/F1<9, or 1.1<(F1-F2)/F1<9.

It may be understood that, when focal lengths of the two lens groups are both small, and a difference between the focal lengths of the two lens groups is small, that is, a value of (F1-F2)/F1 is small, a light ray convergence capability of the long-focus lens 1 is improved, thereby helping implement close-up imaging. However, a light ray deflection degree of the long-focus lens 1 is increased, and an aberration is increased. Therefore, unclear imaging may occur, and imaging quality is poor. When the focal length F2 of the second lens group G2 is large, and a difference between the focal length F2 of the second lens group G2 and the focal length F1 of the first lens group G1 is large, that is, a value of (F1-F2)/F1 is large, a light ray convergence capability of the long-focus lens 1 is reduced, which is not conducive to close-up imaging. However, a light ray deflection degree of the long-focus lens 1 is reduced, and an aberration is reduced. Therefore, imaging quality is improved. Therefore, focal lengths of the two lens groups may be designed based on a requirement of an actual application scenario.

It may be understood that the foregoing limitation on a ratio range of the focal length F1 of the first lens group G1 to the focal length F2 of the second lens group G2 and the limitation on a ratio range of the focal length F1 of the first lens group G1 to the effective focal length EFL of the long-focus lens 1 and a ratio range of the focal length F2 of the second lens group G2 to the effective focal length EFL of the long-focus lens 1 may exist independently of each other, or may be combined with each other. When the foregoing three ratio ranges are combined with each other, the long-focus lens 1 can obtain a smaller size, a better focusing capability, and better imaging quality.

In some embodiments, the first lens group G1 includes at least two lenses, to improve a specification of the long-focus lens 1 and improve imaging quality. For example, the first lens group G1 may include two to four lenses, for example, three or four lenses. The first lens group G1 includes at least one lens having a positive focal power.

In some embodiments, the second lens group G2 may also include a plurality of lenses, to improve a specification of the long-focus lens 1 and improve imaging quality. For example, the second lens group G2 may include two to four lenses. For example, two, three, or four lenses. In some other embodiments, the second lens group G2 may alternatively include one lens. This is not limited in this application. For example, the second lens group G2 includes at least one lens having a negative focal power.

In some embodiments, the long-focus lens 1 may include four to eight lenses, for example, five, six, or seven lenses.

In this application, designs of different specifications can be obtained by adjusting a quantity of lenses of each of the first lens group G1 and the second lens group G2, to adapt to diversified application scenarios. For example, if the quantity of lenses of each of the first lens group G1 and the second lens group G2 is large, the long-focus lens 1 has a high specification and high imaging quality. However, design difficulty of each lens of the first lens group G1 and the second lens group G2 is accordingly increased. If the quantity of lenses of each of the first lens group G1 and the second lens group G2 is small, design difficulty of each lens of the first lens group G1 and the second lens group G2 is low. However, the long-focus lens 1 has a low specification and poor imaging quality. Therefore, different quantities of lenses may be selected based on different requirements.

For example, as shown in FIG. 3C, the first lens group G1 may include a 1st lens L11 and a 2nd lens L12 that are arranged from the object side to the image side. A sum of an Abbe number of the 1st lens L11 and an Abbe number of the 2nd lens L12 may be greater than 20. This facilitates chromatic aberration correction of the long-focus lens 1.

For example, a sum of Abbe numbers of the lenses of the second lens group G2 may be greater than 18. This facilitates chromatic aberration correction of the long-focus lens 1.

For example, as shown in FIG. 3C, the second lens group G2 may include a 1st lens L21 that is close to the object side. A focal length $f11$ of the 1st lens L11 of the first lens group G1 and the focal length $F1$ of the first lens group G1 may satisfy the following: $f11/F1<1$. In addition, a focal length $f21$ of the 1st lens L21 of the second lens group G2 and the focal length $F2$ of the second lens group G2 may satisfy the following: $f21/F2<1$. For example, the focal length $f11$ of the 1st lens L11 of the first lens group G1 and the focal length $F1$ of the first lens group G1 may satisfy the following: $F11/F1=0.5, 0.6, 0.8$, or the like; and a focal length $f21$ of the 1st lens L21 of the second lens group G2 and the focal length $F2$ of the second lens group G2 may satisfy the following: $f21/F2=0.2, 0.4, 0.5$, or the like.

Alternatively, the focal length $f11$ of the 1st lens L11 of the first lens group G1 and the focal length $F1$ of the first lens group G1 may satisfy the following: $0.5<f11/F1<1$. In this application, the 1st lens L11 of the first lens group G1 is generally used as a main lens, and another lens is added to obtain the lens group, so that adjustment is performed on a basis of the 1st lens L11 by using the another lens, so that the first lens group G1 obtains required optical performance. It is set that $0.5<f11/F1<1$, so that a difference between the focal length $f11$ of the 1st lens L11 of the first lens group G1 and the focal length $F1$ of the first lens group G1 is small. This facilitates adjustment of the focal length $f11$ of the 1st lens L11, to obtain the focal length $F1$ of the first lens group G1.

In some embodiments, the 1st lens L21 of the second lens group G2 and the focal length $F2$ of the second lens group G2 may alternatively satisfy the following: $0.2<f21/F2<1$. In this application, the 1st lens L21 of the second lens group G2 is generally used as a main lens, and another lens is added to obtain the lens group, so that adjustment is performed on a basis of the 2nd lens L21 by using the another lens, so that the second lens group G2 obtains required optical performance. It is set that $0.2<f21/F1<1$, so that a difference between the focal length $f21$ of the 1st lens L21 of the second lens group G2 and the focal length $F2$ of the second lens group G2 is small. This facilitates adjustment of the focal length $f21$ of the 1st lens L21, to obtain the focal length $F2$ of the second lens group G2.

For example, the plurality of lenses of the first lens group G1 may be made of a same material, for example, glass or resin. The glass has a high refractive index and a low expansion characteristic, so that the long-focus lens 1 has better imaging quality and a low-temperature drift characteristic. Density of the resin is low, so that a weight of the lens group can be reduced, thereby facilitating motion of the lens group, and improving a focusing capability of the long-focus lens 1. In some other embodiments, at least one of the plurality of lenses of the first lens group G1 may be made of a material different from that of another lens. This is not limited in this application.

For example, one of the plurality of lenses of the first lens group G1 may be made of glass. For example, the 1st lens L11 of the first lens group G1 may be made of glass, and another lens may be made of resin, so that imaging quality and a low-temperature drift characteristic of the long-focus lens 1 can be ensured. In addition, a weight of the lens group can be reduced, and a focusing capability of the long-focus lens 1 can be improved.

For example, the plurality of lenses of the first lens group G1 may be processed and molded by using processes such as injection molding, mold pressing, and/or polishing.

For example, the plurality of lenses of the second lens group G2 may be made of a same material, for example, glass or resin. In some other embodiments, at least one of the plurality of lenses of the second lens group G2 may be made of a material different from that of another lens. This is not limited in this application.

For example, one of the plurality of lenses of the second lens group G2 may also be made of glass. For example, the 1st lens L21 of the second lens group G2 may be made of glass, and another lens may be made of resin, so that imaging quality and a low-temperature drift characteristic of the long-focus lens 1 can be ensured. In addition, a weight of the lens group can be reduced, and a focusing capability of the long-focus lens 1 can be improved.

For example, the plurality of lenses of the second lens group G2 may be processed and molded by using processes such as injection molding, mold pressing, and/or polishing.

In some embodiments, as shown in FIG. 3C, the long-focus lens 1 may further include an aperture diaphragm 4, and the aperture diaphragm 4 may be mounted on the first lens group G1. In this case, aperture adjustment effect of the aperture diaphragm 4 is better, and imaging quality of the long-focus lens 1 can be improved. For example, the aperture diaphragm 4 may be mounted at an end that is of the first lens group G1 and that is close to the object side. In this embodiment, an example in which the aperture diaphragm 4 is mounted on the 1st lens L11 of the first lens group G1 is used for illustration. In some other embodiments, the aperture diaphragm 4 may alternatively be mounted on another lens of the first lens group G1, the second lens group G2, or another position of the long-focus lens 1. This is not strictly limited in embodiments of this application.

The aperture diaphragm 4 may be an isolated ring structure or a variable blade structure. Alternatively, the aperture diaphragm 4 may be implemented by using a surface spraying process. For example, the aperture diaphragm 4 is formed by spraying a light shielding material on a lens. A position of the aperture diaphragm 4 may be fixed or may be variable. For example, the position of the aperture diaphragm 4 is variable, and the aperture diaphragm 4 may be adjusted based on a focusing case, to be located between different lenses.

In some embodiments, an optical surface of at least one lens of the long-focus lens 1 is an aspheric surface, and an optical surface of an aspheric shape has different focal powers from a paraxial area to an outer field of view area, so that an imaged picture has more balanced image quality. In addition/Alternatively, an optical surface of at least one lens of the long-focus lens 1 may be a free-form surface, to correct an aberration. The aspheric surface is a surface that is rotationally symmetric around the optical axis O. The free-form surface may have no symmetry axis, or may be symmetric in one direction, or may be symmetric in two directions.

In some embodiments, the plurality of lenses of the long-focus lens 1 are assembled by using an active alignment (active alignment, AA) process, to ensure assembly precision.

In some embodiments, an optical surface of at least one lens of the long-focus lens 1 may form a diffraction grating structure. In this embodiment, the diffraction grating structure is appropriately disposed, so that a chromatic aberration can be reduced, and a volume of the long-focus lens 1 can be reduced.

In some embodiments, the long-focus lens 1 may further include a liquid lens (not shown in the figure), and the liquid lens may be located between the first lens group G1 and the second lens group G2. In this embodiment, focus adjustment effect can be enhanced by using the liquid lens, to implement ultra-close-up shooting. The liquid lens is a mechanical part that uses liquid as a lens and changes a focal length by changing a curvature of the liquid.

In some embodiments, at least one lens of the long-focus lens 1 may use a special-shape technology, to reduce a size of the long-focus lens 1, so that the long-focus lens 1 can be better applicable to a miniaturized electronic device 100, thereby increasing an application scope of the long-focus lens 1. A notch may be implemented by using an I-CUT process. In addition, because a height of the lens decreases in a notch manner, a large clear aperture may be set for the lens, so that an amount of light admitted through the long-focus lens 1 is increased, and imaging quality of the long-focus lens 1 is better. Alternatively, a special-shape technology may be used on a structural support of a lens like a lens tube or a partition, to reduce a size of the long-focus lens 1.

In some embodiments, a peripheral side surface or a supporting surface of at least one lens of the long-focus lens 1 may be blackened or roughened, to eliminate stray light and improve imaging quality. The blackening may be to coat or plate black ink or another extinction material, or may be to bond a film. The roughening is mainly used to increase roughness. Certainly, in some other embodiments, the long-focus lens 1 may eliminate stray light in another manner. This is not strictly limited in embodiments of this application.

For example, this application provides eight possible embodiments of the camera assembly 10.

In a first embodiment to a fourth embodiment, the long-focus lens 1 includes seven lenses, and there are a large quantity of lenses. In this case, the long-focus lens 1 has a high specification and high imaging quality.

In the first embodiment and a second embodiment, the first lens group G1 of the long-focus lens 1 includes three lenses. In a third embodiment and the fourth embodiment, the first lens group G1 of the long-focus lens 1 includes four lenses. In the first embodiment and the second embodiment, a first lens L1 that is closest to the object side and that is in the three lenses of the first lens group G1 is a main lens; and a second lens L2 and a third lens L3 in the three lenses of the first lens group G1 are configured to adjust parameters such as a focal length of the first lens L1, so that the first lens group G1 obtains preset optical performance. The first lens group G1 adjusts the main lens by using two lenses. An optical path is simple, design difficulty of each lens is low, and a thickness of the lens used for adjustment is large, thereby facilitating processing. In addition, a thickness TI of the first lens group G1 is small, and a height of the long-focus lens 1 is small, thereby facilitating accommodation.

In the first embodiment and the third embodiment, focusing is performed by moving the first lens group G1 and fastening the second lens group G2, so that when focusing is performed on a close-up view, an object side surface of the long-focus lens 1 is close to a to-be-photographed object, and a light ray deflection degree is small. In this way, an aberration is reduced, and imaging quality is improved. In the second embodiment and the fourth embodiment, focusing is performed by moving the second lens group G2 and fastening the first lens group G1.

In a fifth embodiment and a sixth embodiment, the long-focus lens 1 includes six lenses, and the first lens group G1 of the long-focus lens 1 includes three lenses. In the fifth embodiment, focusing is performed by moving the first lens group G1 and fastening the second lens group G2. In the sixth embodiment, focusing is performed by moving the second lens group G2 and fastening the first lens group G1.

In a seventh embodiment and an eighth embodiment, the long-focus lens 1 includes five lenses, and the first lens group G1 of the long-focus lens 1 includes three lenses. In the seventh embodiment, focusing is performed by moving the first lens group G1 and fastening the second lens group G2. In the eighth embodiment, focusing is performed by moving the second lens group G2 and fastening the first lens group G1.

The following describes a specific structure of the camera assembly 10 in a plurality of possible embodiments with reference to accompanying drawings and tables.

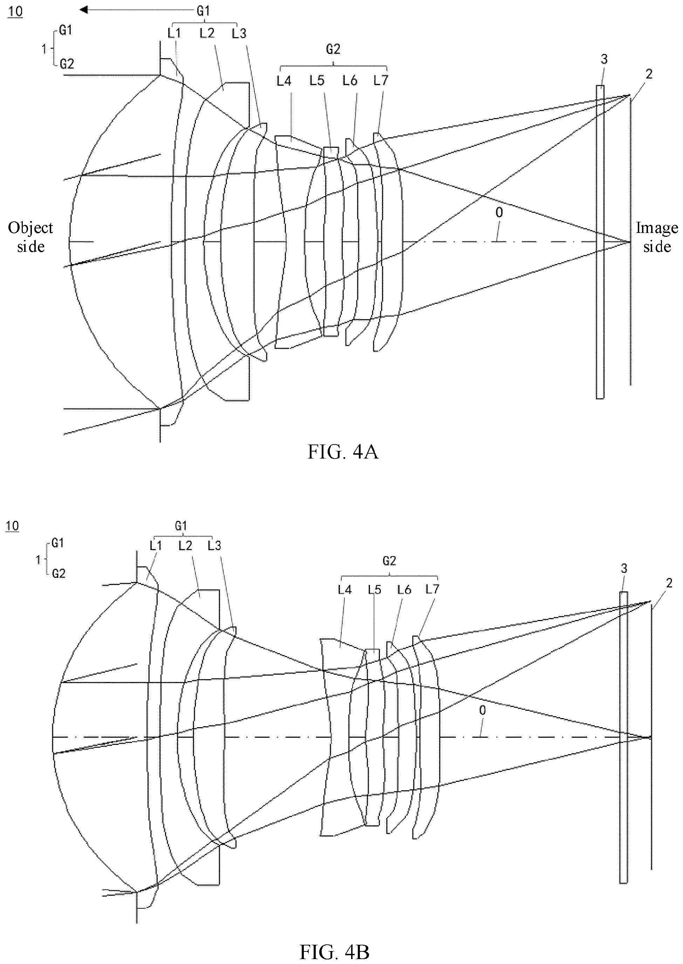

Refer to FIG. 4A and FIG. 4B. FIG. 4A is a diagram of an optical path when a camera assembly 10 focuses on a distant view according to a first embodiment of this application. FIG. 4B is a diagram of an optical path when the camera assembly 10 shown in FIG. 4A focuses on a close-up view of 50 mm. The camera assembly 10 shown in FIG. 4A includes most technical features of the camera assembly 10 shown in FIG. 3B. The following mainly describes differences between the two, and most content that is the same between the two is not described again.

In the first embodiment, the long-focus lens 1 includes seven lenses. In addition, the first lens group G1 includes three lenses. Focusing is performed by moving the first lens group G1 and fastening the second lens group G2.

Specifically, in the first embodiment, the camera assembly 10 includes the long-focus lens 1, a light filter 3, and a photosensitive element 2. The long-focus lens 1 includes a first lens group G1 and a second lens group G2 that are arranged from an object side to an image side. The first lens group G1 has a positive focal power, and the second lens group G2 has a negative focal power. In a focusing process in which the long-focus lens 1 switches focus between a distant view and a close-up view, a distance H3 between the first lens group G1 and the second lens group G2 changes.

In this embodiment, the first lens group G1 of the long-focus lens 1 includes a first lens L1, a second lens L2, and a third lens L3 that are arranged from the object side to the image side; and the second lens group G2 includes a fourth lens L4, a fifth lens L5, a sixth lens L6, and a seventh lens L7 that are arranged from the object side to the image side. In a direction of an optical axis O, light rays successively pass through the first lens L1, the second lens L2, the third lens L3, the fourth lens L4, the fifth lens L5, the sixth lens L6, and the seventh lens L7, then pass through the light filter 3, and finally arrive at the photosensitive element 2.

In the first embodiment, the long-focus lens 1 includes seven lenses, and there are a large quantity of lenses. In this case, the long-focus lens 1 has a high specification and high imaging quality. In addition, the first lens L1 that is closest to the object side and that is in the three lenses of the first lens group G1 is a main lens; and the second lens L2 and the third lens L3 in the three lenses of the first lens group G1 are configured to adjust parameters such as a focal length of the first lens L1, so that the first lens group G1 obtains preset optical performance. In this embodiment, the first lens group G1 adjusts the main lens by using two lenses. An optical path is simple, design difficulty of each lens is low, and a thickness of the lens used for adjustment is large, thereby facilitating processing. In addition, a thickness TI of the first lens group G1 is small, and a height of the long-focus lens 1 is small, thereby facilitating accommodation.

As shown in FIG. 4A, when the long-focus lens 1 focuses on a distant view, light rays reflected by a distant object are imaged on an imaging plane after passing through the long-focus lens 1. The imaging plane falls on the photosensitive element 2, and the camera assembly 10 can photograph a distant image. As shown in FIG. 4B, when the long-focus lens 1 focuses on a close-up view, the first lens group G1 moves toward the object side along the optical axis O, and light rays reflected by a close-up object is imaged on an imaging plane after passing through the long-focus lens 1. The imaging plane falls on the photosensitive element 2, and the camera assembly 10 can photograph a close-up image.

As shown in FIG. 4A and FIG. 4B, in a focusing process in which the long-focus lens 1 switches focus from the distant view to the close-up view, the first lens group G1 moves toward the object side along the optical axis O, the second lens group G2 does not move, a distance H3 between the first lens group G1 and the second lens group G2 increases, and an effective focal length EFL of the long-focus lens 1 decreases. In addition, a distance between the first lens group G1 and the photosensitive element 2 increases, and a distance between the second lens group G2 and the photosensitive element 2 remains unchanged. In this application, when the long-focus lens 1 focuses on the distant view and the close-up view, the imaging plane falls on the photosensitive element 2. To be specific, a distance between the first lens group G1 and the imaging plane of the long-focus lens 1 increases, and a distance between the second lens group G2 and the imaging plane of the long-focus lens 1 remains unchanged.

In the first embodiment, focusing is performed by moving the first lens group G1 and fastening the second lens group G2, so that when focusing is performed on a close-up view, an object side surface of the long-focus lens 1 is close to a to-be-photographed object, and a light ray deflection degree is small. In this way, an aberration is reduced, and imaging quality is improved.

With reference to data and a simulation result, the following presents a specific solution of the long-focus lens 1 shown in FIG. 4A in a possible embodiment.

Refer to Table 1a and Table 1b together. Table 1a shows a curvature radius, a thickness, a refractive index (Nd), and an Abbe number of each lens and the light filter 3 when the long-focus lens 1 shown in FIG. 4A focuses on a distant view in a possible embodiment. The thickness includes a thickness of the lens, and also includes a distance between the lenses. A virtual surface is an imaginary surface located between the light filter 3 and the photosensitive element 2, and is used to investigate whether light spots converge. Table 1b shows aspheric coefficients of the lenses of the long-focus lens 1 shown in FIG. 4A in a possible embodiment.

**Table 1a**

| Surface number | Description | Surface type | Curvature radius | Thickness (mm) | Refractive index | Abbe number |
|---|---|---|---|---|---|---|
| ST0 | Aperture diaphragm | Plane | Infinite | -2.4 | | |
| S1 | L1 | Aspheric surface | 5.126534518 | 2.699787881 | 1.69 | 53 |
| S2 | L1 | Aspheric surface | 58.82260228 | 0.359451143 | | |
| S3 | L2 | Aspheric surface | 34.93111104 | 0.5 | 1.67 | 19.4 |
| S4 | L2 | Aspheric surface | 6.018436187 | 0.449520713 | | |
| S5 | L3 | Aspheric surface | 8.921768079 | 0.891240262 | 1.54 | 56 |
| S6 | L3 | Aspheric surface | -67.0045203 | 0.835053352 (variable) | | |
| S7 | L4 | Aspheric surface | -3.79725604 | 0.5 | 1.54 | 56 |
| S8 | L4 | Aspheric surface | 14.87977423 | 0.490331905 | | |
| S9 | L5 | Aspheric surface | 3.90150296 | 0.5 | 1.54 | 56 |
| S10 | L5 | Aspheric surface | 6.231898186 | 0.443372427 | | |
| S11 | L6 | Aspheric surface | -8.87625978 | 0.5 | 1.67 | 19.4 |
| S12 | L6 | Aspheric surface | -6.92173095 | 0.1 | | |
| S13 | L7 | Aspheric surface | 10.85367045 | 0.566295667 | 1.54 | 56 |
| S14 | L7 | Aspheric surface | 26.95821708 | 5.130969107 | | |
| S15 | Light filter | Plane | Infinite | 0.21 | 1.5 | 64 |
| S16 | Light filter | Plane | Infinite | 0.2 | | |
| S17 | Virtual surface | Plane | Infinite | 0.499952581 | | |
| S18 | Imaging plane | Plane | Infinite | 0 | | |

**Table 1b**

| Surface number | K | A4 | A6 | A8 | A10 | A12 | A14 | A16 |
|---|---|---|---|---|---|---|---|---|
| S1 | 0 | -2.16E-06 | 1.70E-05 | -5.71E-06 | 9.87E-07 | -9.67E-08 | 5.00E-09 | -1.08E-10 |

(continued)

| Surface number | K | A4 | A6 | A8 | A10 | A12 | A14 | A16 |
|---|---|---|---|---|---|---|---|---|
| S2 | 0 | 0.001278 | -0.00035 | 7.30E-05 | -6.60E-06 | 2.74E-07 | -4.80E-09 | 1.53E-11 |
| S3 | 0 | 0.00047 | -0.001 | 0.000373 | -5.30E-05 | 3.73E-06 | -1.30E-07 | 2.00E-09 |
| S4 | 0 | -0.00018 | -0.0011 | 0.000445 | -5.10E-05 | 2.87E-06 | -2.20E-07 | 1.64E-08 |
| S5 | 0 | 0.00081 | -0.00105 | 0.000378 | -6.10E-05 | 6.79E-06 | -5.50E-07 | 2.52E-08 |
| S6 | 0 | 0.002647 | -0.00099 | 0.000572 | -0.00017 | 2.91E-05 | -2.60E-06 | 9.81E-08 |
| S7 | 0 | 0.038119 | -0.00603 | 0.00051 | 3.55E-05 | -1.50E-05 | 1.72E-06 | -7.10E-08 |
| S8 | 0 | -0.00206 | 0.015392 | -0.0075 | 0.002167 | -0.00039 | 3.93E-05 | -1.70E-06 |
| S9 | 0 | -0.07679 | 0.012466 | 0.00405 | -0.00279 | 0.000702 | -7.90E-05 | -1.40E-06 |
| S10 | 0 | -0.0415 | -0.00447 | 0.01001 | -0.00482 | 0.001407 | -0.00029 | 3.87E-05 |
| S11 | 0 | 0.042427 | -0.01732 | 0.004143 | -0.00091 | 0.000267 | -8.60E-05 | 1.64E-05 |
| S12 | 0 | 0.027264 | 0.00126 | -0.00845 | 0.004263 | -0.00108 | 0.000144 | -8.20E-06 |
| S13 | 0 | -0.02889 | 0.018337 | -0.01217 | 0.004849 | -0.00116 | 0.00017 | -1.50E-05 |
| S14 | 0 | -0.0242 | 0.009094 | -0.00378 | 0.001074 | -0.0002 | 2.33E-05 | -1.80E-06 |

The aspheric surface of the long-focus lens 1 in Table 1a may be defined by using, but not limited to, the following aspheric curve equation:

$$z = \frac{cr^2}{1 + \sqrt{1 - (1 + k)c^2 r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between the point on the aspheric curve and the optical axis; c is a curvature; K is a cone coefficient; and $\alpha_i$ is an i$^{th}$-order aspheric coefficient. For details, refer to Table 1b.

Refer to Table 1c and Table 1d. Table 1c and Table 1d show basic parameters of the long-focus lens 1 shown in FIG. 4A in a possible embodiment. In Table 1c, f1 to f7 are respectively focal lengths of the first lens L1 to the seventh lens L7. In Table 1d, F1 and F2 are respectively focal lengths of the first lens group G1 and the second lens group G2; and T1 and T2 are respectively thicknesses of the first lens group G1 and the second lens group G2.

**Table 1c**

| Parameter | f1 | f2 | f3 | f4 | f5 | f6 | f7 | F-stop | Field of view |
|---|---|---|---|---|---|---|---|---|---|
| Value | 7.83 | -10.8 | 14.59 | -5.53 | 17.9 | 42.13 | 33.13 | 1.6 | 26° |

**Table 1d**

| Parameter | F1 | F2 | EFL | T1 | T2 | f1/F1 | f4/F2 | T1/F1 | T2/F2 | (F1-F2)/ F1 |
|---|---|---|---|---|---|---|---|---|---|---|
| Value | 9.16 | -18.9 | 14.6 | 4.9 | 3.1 | 0.8548034 93 | 0.29 | 0.534934498 | -0.164021164 | 3.063318 777 |

In this embodiment, when the long-focus lens 1 switches focus from the distant view to the close-up view, for example, switches focus to a position of a close-up view of 50 mm, the first lens group G1 moves toward the object side, and a distance (S6) between the first lens group G1 and the second lens group G2 increases by 2 mm, that is, the first lens group G1 moves toward the object side by a focusing stroke of 2 mm. Compared with those of a conventional lens (which usually needs to be greater than 4 mm), the focusing stroke is significantly shortened, and a focusing capability is strong.

In addition, when the long-focus lens 1 focuses on the distant view, the effective focal length EFL of the long-focus lens 1 is 14.6 mm. When the long-focus lens 1 focuses on the close-up view, the effective focal length EFL of the long-focus lens 1 is 12.3 mm. In the focusing process in which the long-focus lens 1 switches focus from the distant view to the close-up view, the effective focal length EFL of the long-focus lens 1 decreases.

In this embodiment, when the long-focus lens 1 switches focus from the distant view to the close-up view, the first lens group G1 moves toward the object side, and the distance (S6) between the first lens group G1 and the second lens group G2 increases by 2 mm, and a distance (S14) between the second lens group G2 and the light filter 3 remains unchanged, so that a single-group focusing manner is used to simplify a focusing method. The height of the long-focus lens 1 increases.

In this embodiment, as shown in Table 1d, F1<0.9 EFL (0.9 EFL=0.9×14.6=13.14). In this case, the first lens group G1 has a small focal length F1 and a strong light ray convergence capability. This helps implement close-up shooting within 10 centimeters.

In addition, -EFL<F2. In this case, the second lens group has a small focal length F2 and a strong light ray convergence capability, thereby facilitating focusing and shortening a motor stroke.

In addition, (F1-F2)/F1 is approximately equal to 3. In this case, a difference between the focal lengths of the two lens groups is small, so that a light ray convergence capability of the long-focus lens 1 can be improved, thereby facilitating implementation of close-up imaging. In addition, the focal length F2 of the second lens group G2 is large, so that a light ray deflection degree of the long-focus lens 1 can be reduced, an aberration can be reduced, and imaging quality can be improved.

In addition, the focal length f1 of the first lens L1 is the focal length f11 of the $1^{st}$ lens L11 of the first lens group G1. When 0.5<f1/F1<1, that is, 0.5<f11/F1<1, a difference between the focal length f11 of the $1^{st}$ lens L11 of the first lens group G1 and the focal length F1 of the first lens group G1 is small. This facilitates adjustment of the focal length f11 of the $1^{st}$ lens L11, to obtain the focal length F1 of the first lens group G1.

In addition, a focal length f4 of the fourth lens L4 is the focal length f21 of the $1^{st}$ lens L21 of the second lens group G2. When 0.2<f4/F2<1, that is, 0.2<f21/F2<1, a difference between the focal length f21 of the $1^{st}$ lens L21 of the second lens group G2 and the focal length F2 of the second lens group G2 is small. This facilitates adjustment of the focal length f21 of the $1^{st}$ lens L21, to obtain the focal length F2 of the second lens group G2.

In addition, when 0.3<T1/F1<1, the thickness of the first lens group G1 is small. In this way, the height of the long-focus lens 1 can be reduced, thereby facilitating accommodation. In addition, motion of the first lens group G1 is facilitated, and imaging quality is improved.

In addition, -1<T2/F2<-0.1. This helps the second lens group G2 have a small thickness, thereby reducing the height of the long-focus lens 1 and facilitating accommodation. In addition, motion of the second lens group G2 is facilitated, and imaging quality is improved.

In addition, T1+T2=8, and 0.6 EFL=0.6×14.6=8.76. In this case, T1+T2<0.6 EFL, so that a sum of the thickness T1 of the first lens group G1 and the thickness T2 of the second lens group G2 is small. In this way, when the long-focus lens 1 is in an accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device.

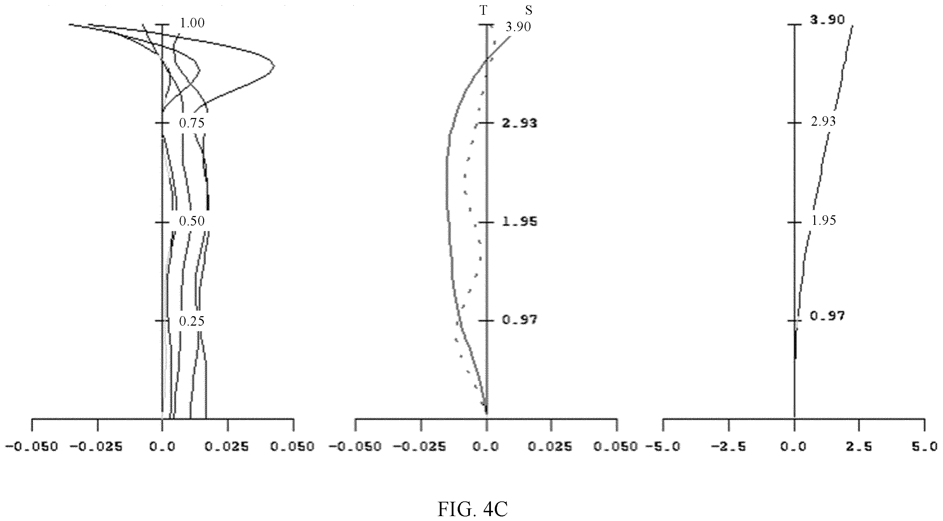

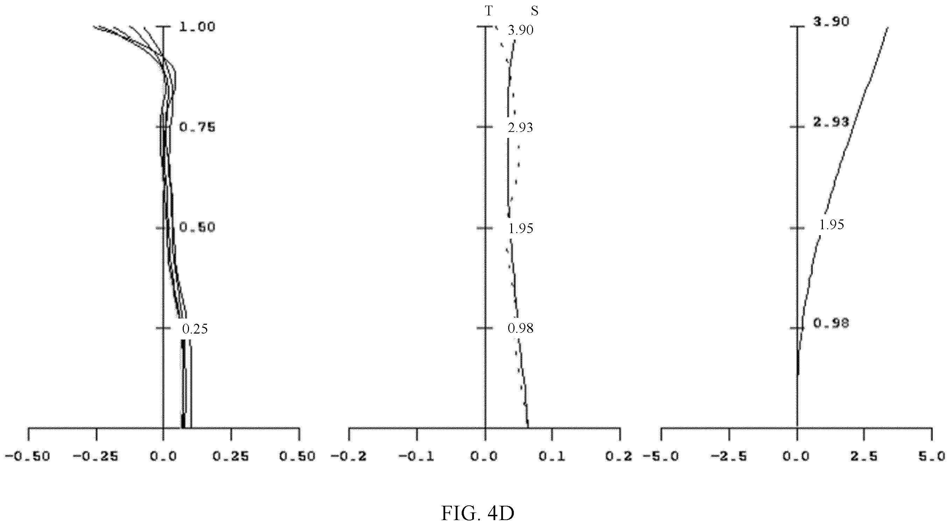

Refer to FIG. 4C and FIG. 4D. FIG. 4C is a simulation effect diagram of the long-focus lens 1 shown in FIG. 4A when the long-focus lens 1 focuses on a distant view. FIG. 4D is a simulation effect diagram of the long-focus lens 1 shown in FIG. 4B when the long-focus lens 1 focuses on a close-up view of 50 mm.

Both FIG. 4C and FIG. 4D include an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. Indicated values in both FIG. 4C and FIG. 4D are small. When the long-focus lens 1 focuses on the distant view and the close-up view, an axial aberration (a spherical aberration, a chromatic aberration, or the like) of the long-focus lens 1 is well corrected. The astigmatic field curvature diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. Field curvatures shown in FIG. 4C and FIG. 4D are small in both directions, and the system has a good focal depth. The distortion diagram represents relative deviations of beam convergence points (actual image heights) from an ideal image height in different fields of view. The distortions shown in FIG. 4C and FIG. 4D are small, so that it can be ensured that the picture is not significantly distorted.

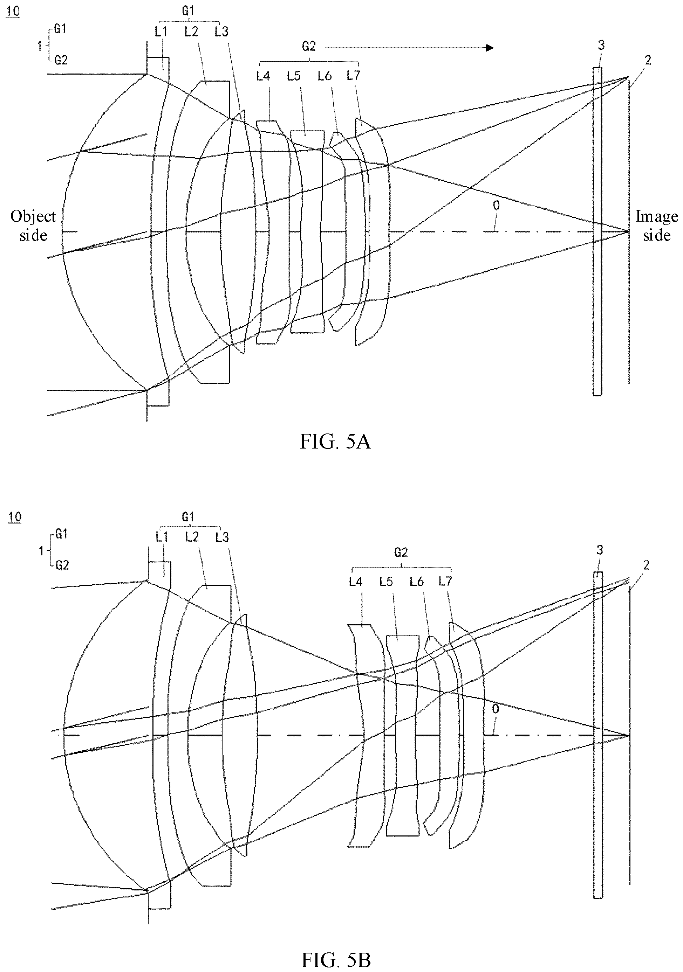

Refer to FIG. 5A and FIG. 5B. FIG. 5A is a diagram of an optical path when a camera assembly 10 focuses on a distant view according to a second embodiment of this application. FIG. 5B is a diagram of an optical path when the camera assembly 10 shown in FIG. 5A focuses on a close-up view of 50 mm. The camera assembly 10 shown in FIG. 5A includes most technical features of the camera assembly 10 shown in FIG. 3B. The following mainly describes differences between the two, and most content that is the same between the two is not described again.

In the second embodiment, the long-focus lens 1 includes seven lenses. In addition, the first lens group G1 also includes three lenses. Different from that in the first embodiment, in the second embodiment, focusing is performed by moving the second lens group G2 and fastening the first lens group G1.

Specifically, in the second embodiment, the camera assembly 10 includes the long-focus lens 1, a light filter 3, and a photosensitive element 2. The long-focus lens 1 includes a first lens group G1 and a second lens group G2 that are arranged from an object side to an image side. The first lens group G1 has a positive focal power, and the second lens group G2 has a negative focal power. In a focusing process in which the long-focus lens 1 switches focus between a distant view and a close-up view, a distance H3 between the first lens group G1 and the second lens group G2 changes.

In this embodiment, the first lens group G1 of the long-focus lens 1 includes a first lens L1, a second lens L2, and a third lens L3 that are arranged from the object side to the image side; and the second lens group G2 includes a fourth lens L4, a fifth lens L5, a sixth lens L6, and a seventh lens L7 that are arranged from the object side to the image side. In a direction of an optical axis O, light rays successively pass through the first lens L1, the second lens L2, the third lens L3, the fourth lens L4, the fifth lens L5, the sixth lens L6, and the seventh lens L7, then pass through the light filter 3, and finally arrive at the photosensitive element 2.

In the second embodiment, the long-focus lens 1 includes seven lenses, and there are a large quantity of lenses. In this case, the long-focus lens 1 has a high specification and high imaging quality. In addition, the first lens L1 that is closest to the object side and that is in the three lenses of the first lens group G1 is a main lens; and the second lens L2 and the third lens L3 in the three lenses of the first lens group G1 are configured to adjust parameters such as a focal length of the first lens L1, so that the first lens group G1 obtains preset optical performance. In this embodiment, the first lens group G1 adjusts the main lens by using two lenses. An optical path is simple, and design difficulty of each lens is low. In addition, a thickness T1 of the first lens group G1 is small, and a height of the long-focus lens 1 is small, thereby facilitating accommodation.

As shown in FIG. 5A, when the long-focus lens 1 focuses on a distant view, light rays reflected by a distant object are imaged on an imaging plane after passing through the long-focus lens 1. The imaging plane falls on the photosensitive element 2, and the camera assembly 10 can photograph a distant image. As shown in FIG. 5B, when the long-focus lens 1 focuses on a close-up view, the second lens group G2 moves toward the object side along the optical axis O, and light rays reflected by a close-up object is imaged on an imaging plane after passing through the long-focus lens 1. The imaging plane falls on the photosensitive element 2, and the camera assembly 10 can photograph a close-up image.

As shown in FIG. 5A and FIG. 5B, in a focusing process in which the long-focus lens 1 switches focus from the distant view to the close-up view, the first lens group G1 does not move, the second lens group G2 moves toward the image side along the optical axis O, the distance H3 between the first lens group G1 and the second lens group G2 increases, and an effective focal length EFL of the long-focus lens 1 decreases. In addition, a distance between the first lens group G1 and the photosensitive element 2 remains unchanged, and a distance between the second lens group G2 and the photosensitive element 2 decreases. In this application, when the long-focus lens 1 focuses on the distant view and the close-up view, the imaging plane falls on the photosensitive element 2. To be specific, a distance between the first lens group G1 and the imaging plane of the long-focus lens 1 remains unchanged, and a distance between the second lens group G2 and the imaging plane of the long-focus lens 1 decreases.

With reference to data and a simulation result, the following presents a specific solution of the long-focus lens 1 shown in FIG. 5A in a possible embodiment.

Refer to Table 2a and Table 2b together. Table 2a shows a curvature radius, a thickness, a refractive index (Nd), and an Abbe number of each lens and the light filter 3 when the long-focus lens 1 shown in FIG. 5A focuses on a distant view in a possible embodiment. The thickness includes a thickness of the lens, and also includes a distance between the lenses. A virtual surface is an imaginary surface located between the light filter 3 and the photosensitive element 2, and is used to investigate whether light spots converge. Table 2b shows aspheric coefficients of the lenses of the long-focus lens 1 shown in FIG. 5A in a possible embodiment.

**Table 2a**

| Surface number | Description | Surface type | Curvature radius | Thickness (mm) | Refractive index | Abbe number |
|---|---|---|---|---|---|---|
| ST0 | Aperture diaphragm | Plane | Infinite | -2.14185654 | | |
| S1 | L1 | Aspheric surface | 4.684599595 | 2.242645278 | 1.69 | 53 |

(continued)

| Surface number | Description | Surface type | Curvature radius | Thickness (mm) | Refractive index | Abbe number |
|---|---|---|---|---|---|---|
| S2 | L1 | Aspheric surface | 26.19031629 | 0.381044313 | | |
| S3 | L2 | Aspheric surface | 16.48795225 | 0.5 | 1.67 | 19.4 |
| S4 | L2 | Aspheric surface | 4.95783426 | 0.866350888 | | |
| S5 | L3 | Aspheric surface | 8.577171342 | 0.887663415 | 1.54 | 56 |
| S6 | L3 | Aspheric surface | -17.74279571 | 0.35 (variable) | | |
| S7 | L4 | Aspheric surface | -3.609355724 | 0.5 | 1.54 | 56 |
| S8 | L4 | Aspheric surface | -113.9989616 | 0.295317412 | | |
| S9 | L5 | Aspheric surface | 5.245104145 | 0.5 | 1.54 | 56 |
| S10 | L5 | Aspheric surface | 7.741476499 | 0.626978693 | | |
| S11 | L6 | Aspheric surface | -14.14635481 | 0.5 | 1.67 | 19.4 |
| S12 | L6 | Aspheric surface | -8.636274204 | 0.1 | | |
| S13 | L7 | Aspheric surface | 18.91071593 | 0.5 | 1.54 | 56 |
| S14 | L7 | Aspheric surface | 11.22989164 | 5.139999554 (variable) | 1.52 | 64.2 |
| S15 | Light filter | Plane | Infinite | 0.21 | 1.5 | 64 |
| S16 | Light filter | Plane | Infinite | 0.2 | | |
| S17 | Virtual surface | Plane | Infinite | 0.5 | | |
| S18 | Imaging plane | Plane | Infinite | 0 | | |

**Table 2b**

| Surface number | K | A4 | A6 | A8 | A10 | A12 | A14 | A16 |
|---|---|---|---|---|---|---|---|---|
| S1 | 0 | -0.000137369 | 2.39E-05 | -2.48E-06 | 2.53E-07 | -4.17E-08 | 4.08E-09 | -1.50E-10 |
| S2 | 0 | -0.00219 | 0.001687 | -0.00037 | 4.42E-05 | -3.00E-06 | 1.06E-07 | -1.60E-09 |
| S3 | 0 | -0.01014 | 0.006379 | -0.00153 | 0.000195 | -1.40E-05 | 5.13E-07 | -7.90E-09 |
| S4 | 0 | -0.00921 | 0.004959 | -0.00049 | -0.00012 | 3.26E-05 | -2.80E-06 | 8.65E-08 |
| S5 | 0 | -0.00493 | -9.00E-05 | 0.001317 | -0.00057 | 0.0001 | -8.30E-06 | 2.72E-07 |
| S6 | 0 | -0.00237 | 0.001359 | -0.00027 | -5.60E-05 | 2.47E-05 | -3.00E-06 | 1.34E-07 |
| S7 | 0 | 0.045062 | -0.01201 | 0.004208 | -0.00115 | 0.000189 | -1.70E-05 | 5.88E-07 |
| S8 | 0 | -0.00489 | -9.90E-05 | 0.007231 | -0.00376 | 0.000761 | -7.10E-05 | 2.51E-06 |
| S9 | 0 | -0.06419 | -0.02821 | 0.053082 | -0.03113 | 0.009931 | -0.0019 | 0.000221 |

(continued)

| Surface number | K | A4 | A6 | A8 | A10 | A12 | A14 | A16 |
|---|---|---|---|---|---|---|---|---|
| S10 | 0 | -0.01336 | -0.04713 | 0.06003 | -0.03592 | 0.012462 | -0.00264 | 0.000342 |
| S11 | 0 | 0.043219 | -0.0371 | 0.029709 | -0.01738 | 0.005986 | -0.00124 | 0.000155 |
| S12 | 0 | 0.026402 | -0.0158 | 0.017751 | -0.01433 | 0.005946 | -0.00141 | 0.000196 |
| S13 | 0 | -0.04499 | 0.025739 | -0.01075 | 0.001806 | 2.61E-05 | -2.30E-05 | -3.60E-06 |
| S14 | 0 | -0.03964 | 0.01885 | -0.01063 | 0.004633 | -0.00139 | 0.000274 | -3.40E-05 |

The aspheric surface of the long-focus lens 1 in Table 2a may be defined by using, but not limited to, the following aspheric curve equation:

$$z = \frac{cr^2}{1 + \sqrt{1 - (1+k)c^2r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between the point on the aspheric curve and the optical axis; c is a curvature; K is a cone coefficient; and $\alpha_i$ is an $i^{th}$-order aspheric coefficient. For details, refer to Table 2b.

Refer to Table 2c and Table 2d. Table 2c and Table 2d show basic parameters of the long-focus lens 1 shown in FIG. 5A in a possible embodiment. In Table 2c, f1 to f7 are respectively focal lengths of the first lens L1 to the seventh lens L7. In Table 2d, F1 and F2 are respectively focal lengths of the first lens group G1 and the second lens group G2; and T1 and T2 are respectively thicknesses of the first lens group G1 and the second lens group G2.

**Table 2c**

| Parameter | f1 | f2 | f3 | f4 | f5 | f6 | f7 | F-stop | Field of view |
|---|---|---|---|---|---|---|---|---|---|
| Value | 7.78 | -10.66 | 10.8 | -6.89 | 28 | 31 | -52 | 1.8 | 29° |

**Table 2d**

| Parameter | F1 | F2 | EFL | T1 | T2 | f1/F1 | f4/F2 | T1/F1 | T2/F2 | (F1-F2)/F1 |
|---|---|---|---|---|---|---|---|---|---|---|
| Value | 8.18 | -10.58 | 14.75 | 4.88 | 3 | 0.9511 | 0.65 | 0.5966 | -0.2836 | 2.2934 |

In this embodiment, when the long-focus lens 1 switches focus from the distant view to the close-up view, for example, switches focus to a position of a close-up view of 50 mm, the second lens group G2 moves toward the image side, and a distance (S6) between the first lens group G1 and the second lens group G2 increases by 2.3 mm, that is, the second lens group G2 moves toward the image side by a focusing stroke of 2.3 mm. Compared with those of a conventional lens (which usually needs to be greater than 4 mm), the focusing stroke is significantly shortened, and a focusing capability is strong.

In addition, when the long-focus lens 1 focuses on the distant view, the effective focal length EFL of the long-focus lens 1 is 14.75 mm. When the long-focus lens 1 focuses on the close-up view, the effective focal length EFL of the long-focus lens 1 is 10.5 mm. In the focusing process in which the long-focus lens 1 switches focus from the distant view to the close-up view, the effective focal length EFL of the long-focus lens 1 decreases.

In this embodiment, when the long-focus lens 1 switches focus from the distant view to the close-up view, the second lens group G2 moves toward the image side, and the distance (S6) between the first lens group G1 and the second lens group G2 increases by 2.3 mm. Correspondingly, a distance (S14) between the second lens group G2 and the light filter 3 is reduced by 2.3 mm, to keep a height of the long-focus lens 1 unchanged.

In this embodiment, as shown in Table 2d, F1<0.9 EFL (0.9 EFL=0.9×14.75=13.275). In this case, the first lens group G1 has a small focal length F1 and a strong light ray convergence capability. This helps implement close-up shooting within 10 centimeters.

In addition, -EFL<F2. In this case, the second lens group has a small focal length F2 and a strong light ray convergence capability, thereby facilitating focusing and shortening a motor stroke.

In addition, (F1-F2)/F1<3. In this case, a difference between the focal lengths of the two lens groups is small, so that a light ray convergence capability of the long-focus lens 1 can be improved, thereby facilitating implementation of close-up imaging. In addition, the focal length F2 of the second lens group G2 is large, so that a light ray deflection degree of the long-focus lens 1 can be reduced, an aberration can be reduced, and imaging quality can be improved.

In addition, the focal length f1 of the first lens L1 is the focal length f11 of the 1st lens L11 of the first lens group G1. When 0.5<f1/F1<1, that is, 0.5<f11/F1<1, a difference between the focal length f11 of the 1st lens L11 of the first lens group G1 and the focal length F1 of the first lens group G1 is small. This facilitates adjustment of the focal length f11 of the 1st lens L11, to obtain the focal length F1 of the first lens group G1.

In addition, a focal length f4 of the fourth lens L4 is the focal length f21 of the 1st lens L21 of the second lens group G2. When 0.2<f4/F2<1, that is, 0.2<f21/F2<1, a difference between the focal length f21 of the 1st lens L21 of the second lens group G2 and the focal length F2 of the second lens group G2 is small. This facilitates adjustment of the focal length f21 of the 1st lens L21, to obtain the focal length F2 of the second lens group G2.

In addition, when 0.3<T1/F1<1, the thickness of the first lens group G1 is small. In this way, the height of the long-focus lens 1 can be reduced, thereby facilitating accommodation. In addition, motion of the first lens group G1 is facilitated, and imaging quality is improved.

In addition, -1<T2/F2<-0.1. This helps the second lens group G2 have a small thickness, thereby reducing the height of the long-focus lens 1 and facilitating accommodation. In addition, motion of the second lens group G2 is facilitated, and imaging quality is improved.

In addition, T1+T2=7.88, and 0.6 EFL=0.6×14.75=8.85. In this case, T1+T2<0.6 EFL, so that a sum of the thickness T1 of the first lens group G1 and the thickness T2 of the second lens group G2 is small. In this way, when the long-focus lens 1 is in an accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device.

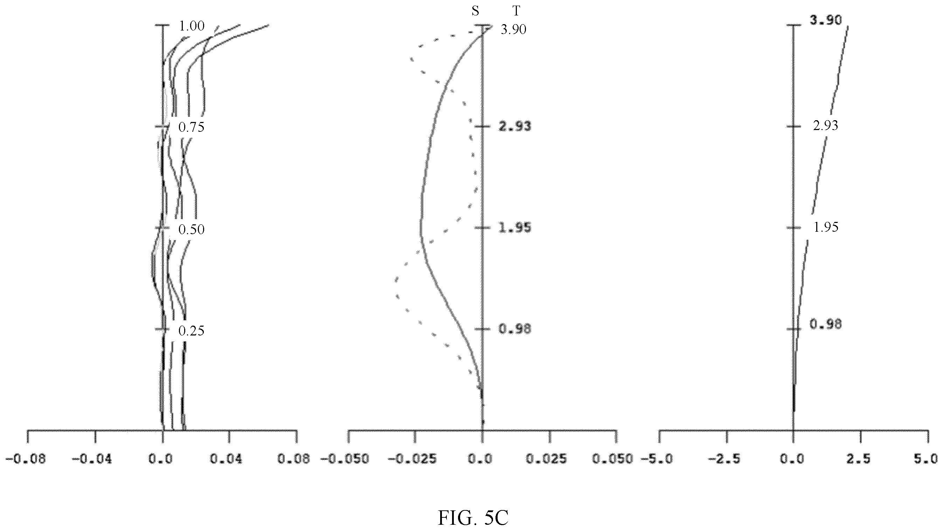

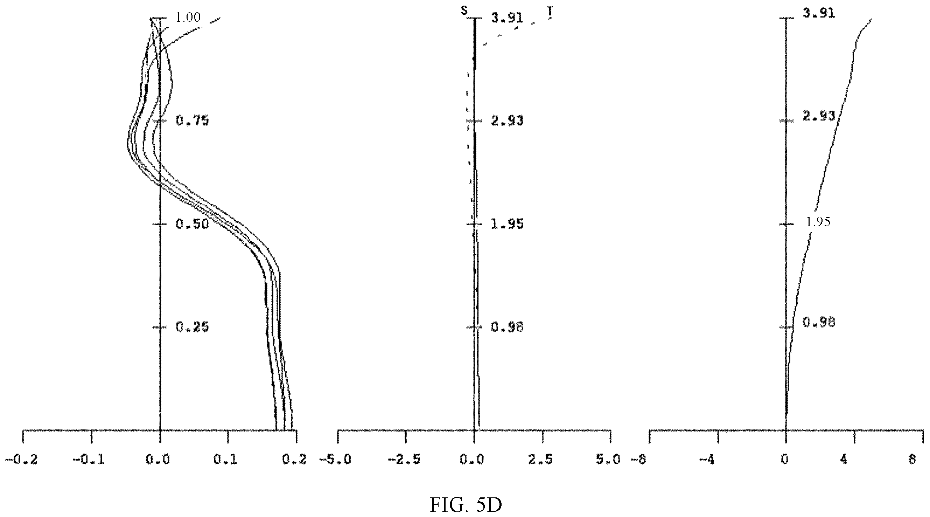

Refer to FIG. 5C and FIG. 5D. FIG. 5C is a simulation effect diagram of the long-focus lens 1 shown in FIG. 5A when the long-focus lens 1 focuses on a distant view. FIG. 5D is a simulation effect diagram of the long-focus lens 1 shown in FIG. 5B when the long-focus lens 1 focuses on a close-up view of 50 mm.

Both FIG. 5C and FIG. 5D include an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. Indicated values in both FIG. 5C and FIG. 5D are small. When the long-focus lens 1 focuses on the distant view and the close-up view, an axial aberration (a spherical aberration, a chromatic aberration, or the like) of the long-focus lens 1 is well corrected. The astigmatic field curvature diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. Field curvatures shown in FIG. 5C and FIG. 5D are small in both directions, and the system has a good focal depth. The distortion diagram represents relative deviations of beam convergence points (actual image heights) from an ideal image height in different fields of view. The distortions shown in FIG. 5C and FIG. 5D are small, so that it can be ensured that the picture is not significantly distorted.

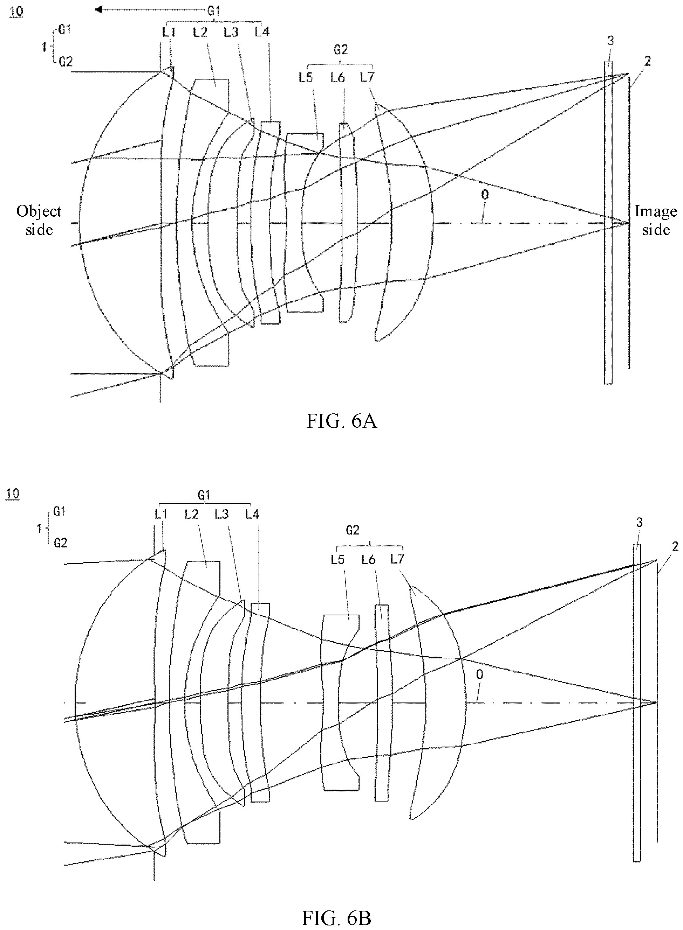

Refer to FIG. 6A and FIG. 6B. FIG. 6A is a diagram of an optical path when a camera assembly 10 focuses on a distant view according to a third embodiment of this application. FIG. 6B is a diagram of an optical path when the camera assembly 10 shown in FIG. 6A focuses on a close-up view of 50 mm. The camera assembly 10 shown in FIG. 6A includes most technical features of the camera assembly 10 shown in FIG. 3B. The following mainly describes differences between the two, and most content that is the same between the two is not described again.

In the third embodiment, the long-focus lens 1 includes seven lenses. Focusing is performed by moving the first lens group G1 and fastening the second lens group G2. In addition, different from that in the first embodiment, in the third embodiment, the first lens group G1 includes four lenses.

Specifically, in the third embodiment, the camera assembly 10 includes the long-focus lens 1, a light filter 3, and a photosensitive element 2. The long-focus lens 1 includes a first lens group G1 and a second lens group G2 that are arranged from an object side to an image side. The first lens group G1 has a positive focal power, and the second lens group G2 has a negative focal power. In a focusing process in which the long-focus lens 1 switches focus between a distant view and a close-up view, a distance H3 between the first lens group G1 and the second lens group G2 changes.

In this embodiment, the first lens group G1 of the long-focus lens 1 includes a first lens L1, a second lens L2, a third lens L3, and a fourth lens L4 that are arranged from the object side to the image side; and the second lens group G2 includes a fifth lens L5, a sixth lens L6, and a seventh lens L7 that are arranged from the object side to the image side. In a direction of an optical axis O, light rays successively pass through the first lens L1, the second lens L2, the third lens L3, the fourth lens L4, the fifth lens L5, the sixth lens L6, and the seventh lens L7, then pass through the light filter 3, and finally arrive at the photosensitive element 2.

As shown in FIG. 6A, when the long-focus lens 1 focuses on a distant view, light rays reflected by a distant object are imaged on an imaging plane after passing through the long-focus lens 1. The imaging plane falls on the photosensitive element 2, and the camera assembly 10 can photograph a distant image. As shown in FIG. 6B, when the long-focus lens 1 focuses on a close-up view, the first lens group G1 moves toward the object side along the optical axis O, and light rays reflected by a close-up object is imaged on an imaging plane after passing through the long-focus lens 1. The imaging plane falls on the photosensitive element 2, and the camera assembly 10 can photograph a close-up image.

As shown in FIG. 6A and FIG. 6B, in a focusing process in which the long-focus lens 1 switches focus from the distant view to the close-up view, the first lens group G1 moves toward the object side along the optical axis O, the second lens group G2 does not move, a distance H3 between the first lens group G1 and the second lens group G2 increases, and an effective focal length EFL of the long-focus lens 1 decreases. In addition, a distance between the first lens group G1 and the photosensitive element 2 increases, and a distance between the second lens group G2 and the photosensitive element 2 remains unchanged. In this application, when the long-focus lens 1 focuses on the distant view and the close-up view, the imaging plane falls on the photosensitive element 2. To be specific, a distance between the first lens group G1 and the imaging plane of the long-focus lens 1 increases, and a distance between the second lens group G2 and the imaging plane of the long-focus lens 1 remains unchanged.

With reference to data and a simulation result, the following presents a specific solution of the long-focus lens 1 shown in FIG. 6A in a possible embodiment.

Refer to Table 3a and Table 3b together. Table 3a shows a curvature radius, a thickness, a refractive index (Nd), and an Abbe number of each lens and the light filter 3 when the long-focus lens 1 shown in FIG. 6A focuses on a distant view in a possible embodiment. The thickness includes a thickness of the lens, and also includes a distance between the lenses. A virtual surface is an imaginary surface located between the light filter 3 and the photosensitive element 2, and is used to investigate whether light spots converge. Table 3b shows aspheric coefficients of the lenses of the long-focus lens 1 shown in FIG. 6A in a possible embodiment.

**Table 3a**

| Surface number | Description | Surface type | Curvature radius | Thickness (mm) | Refractive index | Abbe number |
|---|---|---|---|---|---|---|
| ST0 | Aperture diaphragm | Plane | Infinite | -2.1 | | |
| S1 | L1 | Aspheric surface | 4.938794579 | 2.120012608 | 1.69 | 53 |
| S2 | L1 | Aspheric surface | -43.76121032 | 0.397498941 | | |
| S3 | L2 | Aspheric surface | 16.44717064 | 0.4 | 1.67 | 19.4 |
| S4 | L2 | Aspheric surface | 4.572577372 | 0.414594961 | | |
| S5 | L3 | Aspheric surface | 11.83453167 | 0.743147527 | 1.54 | 56 |
| S6 | L3 | Aspheric surface | 40.70566935 | 0.352722118 | | |
| S7 | L4 | Aspheric surface | 10.54749766 | 0.5 | 1.67 | 19.4 |
| S8 | L4 | Aspheric surface | 13.90308164 | 0.432941556 (variable) | | |
| S9 | L5 | Aspheric surface | -5.321159913 | 0.4 | 1.54 | 56 |
| S10 | L5 | Aspheric surface | 19.98566599 | 1.040899796 | | |

(continued)

| Surface number | Description | Surface type | Curvature radius | Thickness (mm) | Refractive index | Abbe number |
|---|---|---|---|---|---|---|
| S11 | L6 | Aspheric surface | -32.97087707 | 0.4 | 1.67 | 19.4 |
| S12 | L6 | Aspheric surface | -16.28075758 | 0.880400379 | | |
| S13 | L7 | Aspheric surface | -8.38582612 | 1.070497479 | 1.54 | 56 |
| S14 | L7 | Aspheric surface | -5.606652544 | 4.436405454 | | |
| S15 | Light filter | Plane | Infinite | 0.21 | 1.5 | 64 |
| S16 | Light filter | Plane | Infinite | 0.2 | | |
| S17 | Virtual surface | Plane | Infinite | 0.24460477 | | |
| S18 | Imaging plane | Plane | Infinite | 0 | | |

**Table 3b**

| Surface number | K | A4 | A6 | A8 | A10 | A12 | A14 | A16 |
|---|---|---|---|---|---|---|---|---|
| S1 | 0 | 5.19E-05 | 2.04E-05 | -1.24E-06 | 4.16E-07 | -3.65E-08 | 2.09E-09 | -5.14E-11 |
| S2 | 0 | 0.004352 | -0.00039 | 6.04E-05 | -6.30E-06 | 3.23E-07 | -7.40E-09 | 5.50E-11 |
| S3 | 0 | -0.00144 | 3.34E-05 | 0.000181 | -4.40E-05 | 4.27E-06 | -1.90E-07 | 3.31E-09 |
| S4 | 0 | -0.00439 | 0.000381 | 0.000158 | 1.05E-05 | -1.30E-05 | 1.73E-06 | -6.80E-08 |
| S5 | 0 | 0.00973452 | 0.000250346 | -3.03E-05 | 9.21E-05 | -2.84E-05 | 3.76E-06 | -1.88E-07 |
| S6 | 0 | 0.006372 | 0.002011 | -0.00055 | 0.000203 | -5.10E-05 | 8.26E-06 | -5.40E-07 |
| S7 | 0 | -0.00301 | 0.001439 | -0.0001 | -1.50E-05 | 6.67E-07 | 0 | 0 |
| S8 | 0 | -0.00064 | 0.000525 | 0.000237 | -7.70E-05 | 5.56E-06 | 0 | 0 |
| S9 | 0 | 0.060182 | -0.02342 | 0.007735 | -0.00191 | 0.000316 | -3.10E-05 | 1.32E-06 |
| S10 | 0 | 0.06403 | -0.02087 | 0.006065 | -0.00125 | 0.000176 | -1.50E-05 | 5.57E-07 |
| S11 | 0 | 0.003364 | -0.00284 | 0.001145 | -0.00024 | 2.69E-05 | -5.50E-07 | -2.10E-07 |
| S12 | 0 | 0.003283 | -0.00217 | 0.00104 | -0.00026 | 4.79E-05 | -5.30E-06 | 1.99E-07 |
| S13 | 0 | 0.001742 | -0.00047 | 0.000124 | -1.30E-05 | -2.40E-07 | 2.12E-07 | -1.50E-08 |
| S14 | 0 | -0.001344105 | -0.000368009 | 4.76E-05 | -1.50E-05 | 2.40E-06 | -2.42E-07 | 1.01E-08 |

The aspheric surface of the long-focus lens 1 in Table 3a may be defined by using, but not limited to, the following aspheric curve equation:

$$z = \frac{cr^2}{1 + \sqrt{1 - (1+k)c^2 r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between the point on the aspheric curve and the optical axis; c is a curvature; K is a cone coefficient; and $\alpha_i$ is an $i^{th}$-order aspheric coefficient. For details, refer to Table 3b.

Refer to Table 3c and Table 3d. Table 3c and Table 3d show basic parameters of the long-focus lens 1 shown in FIG. 6A in a possible embodiment. In Table 3c, f1 to f7 are respectively focal lengths of the first lens L1 to the seventh lens L7. In Table 3d, F1 and F2 are respectively focal lengths of the first lens group G1 and the second lens group G2; and T1 and T2 are respectively thicknesses of the first lens group G1 and the second lens group G2.

**Table 3c**

| Parameter | f1 | f2 | f3 | f4 | f5 | f6 | f7 | F-stop | Field of view |
|-----------|------|------|------|----|-------|----|------|--------|---------------|
| Value | 6.43 | -9.5 | 30.3 | 61 | -7.65 | 47 | 27.3 | 1.8 | 27° |

**Table 3d**

| Parameter | F1 | F2 | EFL | T1 | T2 | f1/F1 | f5/F2 | T1/F1 | T2/F2 | (F1-F2)/ F1 |
|---|---|---|---|---|---|---|---|---|---|---|
| Value | 8.69 | -19.9 | 14.55 | 4.93 | 3.79 | 0.739930 955 | 0.384 | 0.567318 757 | -0.190452261 | 3.28998 8493 |

In this embodiment, when the long-focus lens 1 switches focus from the distant view to the close-up view, for example, switches focus to a position of a close-up view of 50 mm, the first lens group G1 moves toward the object side, and a distance (S8) between the first lens group G1 and the second lens group G2 increases by 2 mm, that is, the first lens group G1 moves toward the object side by a focusing stroke of 2 mm. Compared with those of a conventional lens (which usually needs to be greater than 4 mm), the focusing stroke is significantly shortened, and a focusing capability is strong.

In addition, when the long-focus lens 1 focuses on the distant view, the effective focal length EFL of the long-focus lens 1 is 14.55 mm. When the long-focus lens 1 focuses on the close-up view, the effective focal length EFL of the long-focus lens 1 is 12.2 mm. In the focusing process in which the long-focus lens 1 switches focus from the distant view to the close-up view, the effective focal length EFL of the long-focus lens 1 decreases.

In this embodiment, when the long-focus lens 1 switches focus from the distant view to the close-up view, the first lens group G1 moves toward the object side, and the distance (S8) between the first lens group G1 and the second lens group G2 increases by 2 mm, and a distance (S14) between the second lens group G2 and the light filter 3 remains unchanged, so that a single-group focusing manner is used to simplify a focusing method. The height of the long-focus lens 1 increases.

In this embodiment, as shown in Table 3d, F1<0.9 EFL (0.9 EFL=0.9×14.55=13.095). In this case, the first lens group G1 has a small focal length F1 and a strong light ray convergence capability. This helps implement close-up shooting within 10 centimeters.

In addition, -EFL<F2. In this case, the second lens group has a small focal length F2 and a strong light ray convergence capability, thereby facilitating focusing and shortening a motor stroke.

In addition, (F1-F2)/F1 is approximately equal to 3. In this case, a difference between the focal lengths of the two lens groups is small, so that a light ray convergence capability of the long-focus lens 1 can be improved, thereby facilitating implementation of close-up imaging. In addition, the focal length F2 of the second lens group G2 is large, so that a light ray deflection degree of the long-focus lens 1 can be reduced, an aberration can be reduced, and imaging quality can be improved.

In addition, the focal length f1 of the first lens L1 is the focal length f11 of the $1^{st}$ lens L11 of the first lens group G1. When 0.5<f1/F1<1, that is, 0.5<f11/F1<1, a difference between the focal length f11 of the $1^{st}$ lens L11 of the first lens group G1 and the focal length F1 of the first lens group G1 is small. This facilitates adjustment of the focal length f11 of the $1^{st}$ lens L11, to obtain the focal length F1 of the first lens group G1.

In addition, a focal length f5 of the fifth lens L5 is the focal length f21 of the $1^{st}$ lens L21 of the second lens group G2. When 0.2<f5/F2<1, that is, 0.2<f21/F2<1, a difference between the focal length f21 of the $1^{st}$ lens L21 of the second lens group G2 and the focal length F2 of the second lens group G2 is small. This facilitates adjustment of the focal length f21 of the $1^{st}$ lens L21, to obtain the focal length F2 of the second lens group G2.

In addition, when 0.3<T1/F1<1, the thickness of the first lens group G1 is small. In this way, the height of the long-focus lens 1 can be reduced, thereby facilitating accommodation. In addition, motion of the first lens group G1 is facilitated, and imaging quality is improved.

In addition, -1<T2/F2<-0.1. This helps the second lens group G2 have a small thickness, thereby reducing the height of the long-focus lens 1 and facilitating accommodation. In addition, motion of the second lens group G2 is facilitated, and imaging quality is improved.

In addition, T1+T2=8.72, and 0.6 EFL=0.6×14.55=8.73. In this case, T1+T2<0.6 EFL, so that a sum of the thickness T1 of the first lens group G1 and the thickness T2 of the second lens group G2 is small. In this way, when the long-focus lens 1 is in an accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device.

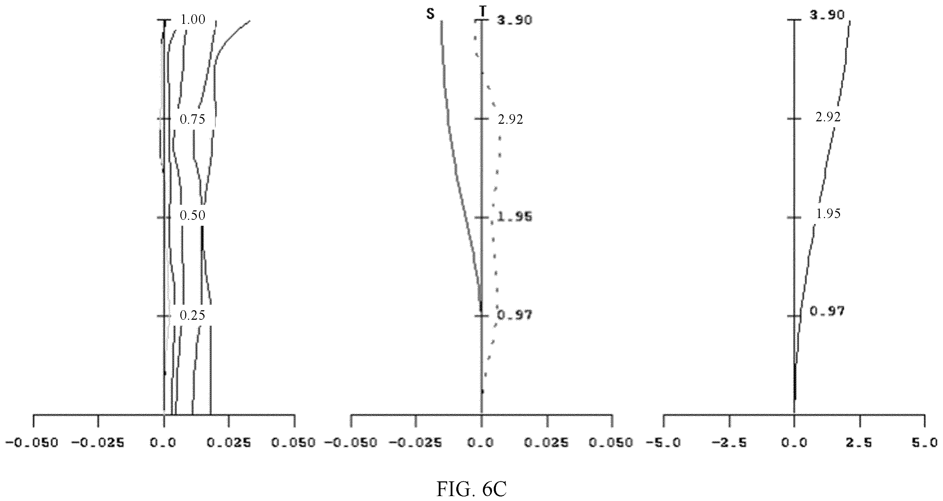

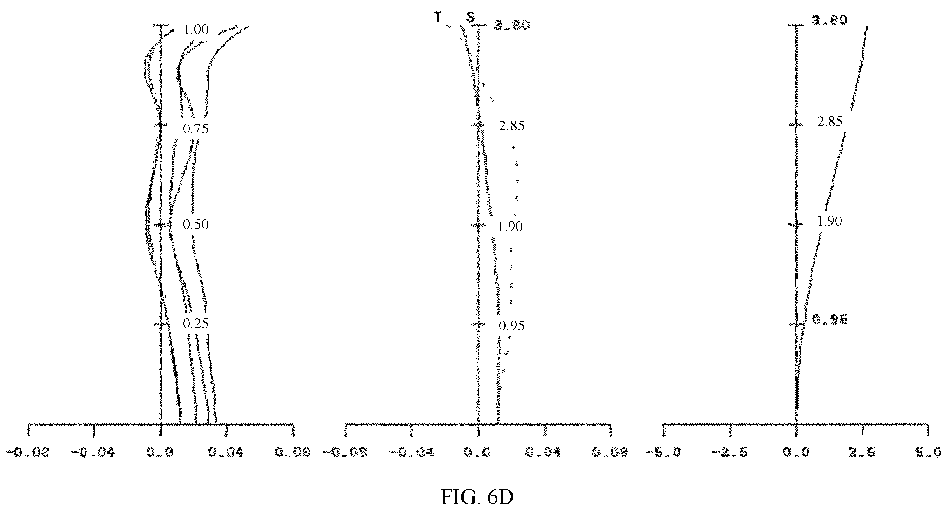

Refer to FIG. 6C and FIG. 6D. FIG. 6C is a simulation effect diagram of the long-focus lens 1 shown in FIG. 6A when the long-focus lens 1 focuses on a distant view. FIG. 6D is a simulation effect diagram of the long-focus lens 1 shown in FIG. 6B when the long-focus lens 1 focuses on a close-up view of 50 mm.

Both FIG. 6C and FIG. 6D include an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. Indicated values in both FIG. 6C and FIG. 6D are small. When the long-focus lens 1 focuses on the distant view and the close-up view, an axial aberration (a spherical aberration, a chromatic aberration, or the like) of the long-focus lens 1 is well corrected. The astigmatic field curvature diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. Field curvatures shown in FIG. 6C and FIG. 6D are small in both directions, and the system has a good focal depth. The distortion diagram represents relative deviations of beam convergence points (actual image heights) from an ideal image height in different fields of view. The distortions shown in FIG. 6C and FIG. 6D are small, so that it can be ensured that the picture is not significantly distorted.

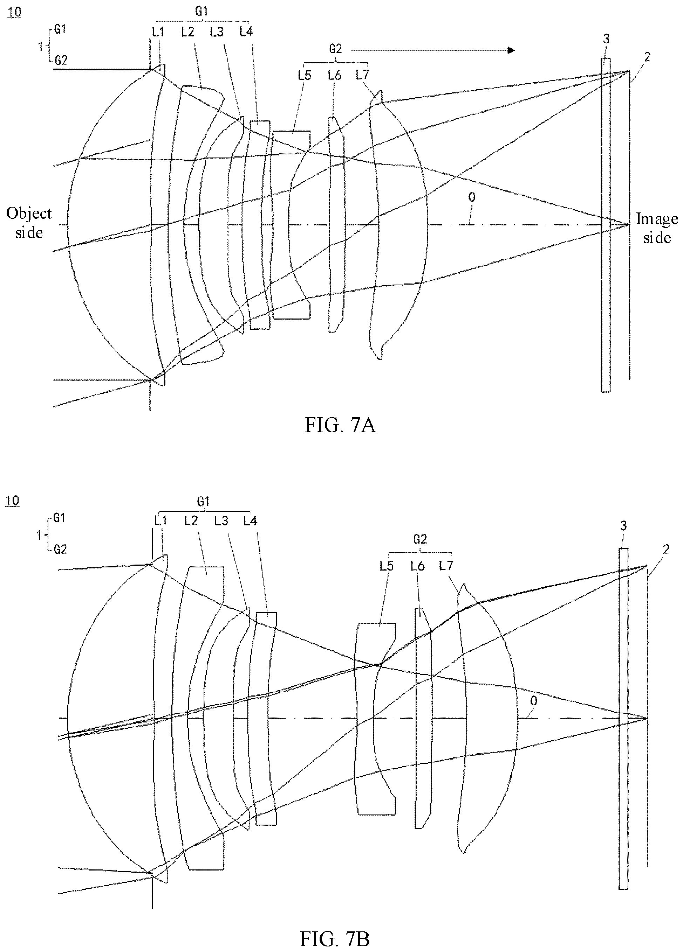

Refer to FIG. 7A and FIG. 7B. FIG. 7A is a diagram of an optical path when a camera assembly 10 focuses on a distant view according to a fourth embodiment of this application. FIG. 7B is a diagram of an optical path when the camera assembly 10 shown in FIG. 7A focuses on a close-up view of 50 mm. The camera assembly 10 shown in FIG. 7A includes most technical features of the camera assembly 10 shown in FIG. 3B. The following mainly describes differences between the two, and most content that is the same between the two is not described again.

In the fourth embodiment, the long-focus lens 1 includes seven lenses. In addition, different from that in the first embodiment, in the fourth embodiment, the first lens group G1 includes four lenses, and focusing is performed by moving the second lens group G2 and fastening the first lens group G1.

Specifically, in the fourth embodiment, the camera assembly 10 includes the long-focus lens 1, a light filter 3, and a photosensitive element 2. The long-focus lens 1 includes a first lens group G1 and a second lens group G2 that are arranged from an object side to an image side. The first lens group G1 has a positive focal power, and the second lens group G2 has a negative focal power. In a focusing process in which the long-focus lens 1 switches focus between a distant view and a close-up view, a distance H3 between the first lens group G1 and the second lens group G2 changes.

In this embodiment, the first lens group G1 of the long-focus lens 1 includes a first lens L1, a second lens L2, a third lens L3, and a fourth lens L4 that are arranged from the object side to the image side; and the second lens group G2 includes a fifth lens L5, a sixth lens L6, and a seventh lens L7 that are arranged from the object side to the image side. In a direction of an optical axis O, light rays successively pass through the first lens L1, the second lens L2, the third lens L3, the fourth lens L4, the fifth lens L5, the sixth lens L6, and the seventh lens L7, then pass through the light filter 3, and finally arrive at the photosensitive element 2.

As shown in FIG. 7A, when the long-focus lens 1 focuses on a distant view, light rays reflected by a distant object are imaged on an imaging plane after passing through the long-focus lens 1. The imaging plane falls on the photosensitive element 2, and the camera assembly 10 can photograph a distant image. As shown in FIG. 7B, when the long-focus lens 1 focuses on a close-up view, the second lens group G2 moves toward the object side along the optical axis O, and light rays reflected by a close-up object is imaged on an imaging plane after passing through the long-focus lens 1. The imaging plane falls on the photosensitive element 2, and the camera assembly 10 can photograph a close-up image.

As shown in FIG. 7A and FIG. 7B, in a focusing process in which the long-focus lens 1 switches focus from the distant view to the close-up view, the first lens group G1 does not move, the second lens group G2 moves toward the image side along the optical axis O, the distance H3 between the first lens group G1 and the second lens group G2 increases, and an effective focal length EFL of the long-focus lens 1 decreases. In addition, a distance between the first lens group G1 and the photosensitive element 2 remains unchanged, and a distance between the second lens group G2 and the photosensitive element 2 decreases. In this application, when the long-focus lens 1 focuses on the distant view and the close-up view, the imaging plane falls on the photosensitive element 2. To be specific, a distance between the first lens group G1 and the imaging plane of the long-focus lens 1 remains unchanged, and a distance between the second lens group G2 and the imaging plane of the long-focus lens 1 decreases.

With reference to data and a simulation result, the following presents a specific solution of the long-focus lens 1 shown in FIG. 7A in a possible embodiment.

Refer to Table 4a and Table 4b together. Table 4a shows a curvature radius, a thickness, a refractive index (Nd), and an Abbe number of each lens and the light filter 3 when the long-focus lens 1 shown in FIG. 7A focuses on a distant view in a possible embodiment. The thickness includes a thickness of the lens, and also includes a distance between the lenses. A virtual surface is an imaginary surface located between the light filter 3 and the photosensitive element 2, and is used to investigate whether light spots converge. Table 4b shows aspheric coefficients of the lenses of the long-focus lens 1 shown in FIG. 7A in a possible embodiment.

**Table 4a**

| Surface number | Description | Surface type | Curvature radius | Thickness (mm) | Refractive index | Abbe number |
|---|---|---|---|---|---|---|
| ST0 | Aperture diaphragm | Plane | Infinite | -2.1 | | |
| S1 | L1 | Aspheric surface | 4.842841077 | 2.138443938 | 1.69 | 53 |

(continued)

| Surface number | Description | Surface type | Curvature radius | Thickness (mm) | Refractive index | Abbe number |
|---|---|---|---|---|---|---|
| S2 | L1 | Aspheric surface | -58.93832202 | 0.444553393 | | |
| S3 | L2 | Aspheric surface | 18.04194564 | 0.4 | 1.67 | 19.4 |
| S4 | L2 | Aspheric surface | 4.740678908 | 0.381919153 | | |
| S5 | L3 | Aspheric surface | 15.33671899 | 0.747977564 | 1.54 | 56 |
| S6 | L3 | Aspheric surface | 1224.742936 | 0.357807964 | | |
| S7 | L4 | Aspheric surface | 12.99383716 | 0.5 | 1.67 | 19.4 |
| S8 | L4 | Aspheric surface | 17.86286423 | 0.29411283 (variable) | | |
| S9 | L5 | Aspheric surface | -5.232536234 | 0.4 | 1.54 | 56 |
| S10 | L5 | Aspheric surface | 19.21186495 | 1.057532426 | | |
| S11 | L6 | Aspheric surface | -221.5114968 | 0.4 | 1.67 | 19.4 |
| S12 | L6 | Aspheric surface | -33.50991041 | 0.862935516 | | |
| S13 | L7 | Aspheric surface | -13.29838579 | 1.258600208 | 1.54 | 56 |
| S14 | L7 | Aspheric surface | -6.710625608 | 4.458693848 (variable) | | |
| S15 | Light filter | Plane | Infinite | 0.21 | 1.5 | 64 |
| S16 | Light filter | Plane | Infinite | 0.2 | | |
| S17 | Virtual surface | Plane | Infinite | 0.299217899 | | |
| S18 | Imaging plane | Plane | Infinite | 0 | | |

**Table 4b**

| Surface number | K | A4 | A6 | A8 | A10 | A12 | A14 | A16 |
|---|---|---|---|---|---|---|---|---|
| S1 | 0 | 7.84E-05 | 1. 14E-05 | 1.16E-06 | -8.74E-08 | 1.94E-08 | -1.01E-09 | 1.81E-11 |
| S2 | 0 | 0.0043051 | -0.000377 | 5.43E-05 | -4.75E-06 | 1.44E-07 | 2.18E-09 | -1.38E-10 |
| S3 | 0 | -0.0014 | 5.03E-05 | 0.000173 | -4.20E-05 | 4.01E-06 | -1.70E-07 | 2.77E-09 |
| S4 | 0 | -0.00452 | 0.000449 | 0.000118 | 2.14E-05 | -1.50E-05 | 1.81E-06 | -7.00E-08 |
| S5 | 0 | 0.010328 | 0.000124 | -0.00014 | 0.000149 | -4.00E-05 | 4.82E-06 | -2.30E-07 |
| S6 | 0 | 0.006945 | 0.001845 | -0.00075 | 0.000361 | -9.50E-05 | 1.38E-05 | -8.10E-07 |
| S7 | 0 | -0.00397 | 0.000855 | 0.000341 | -9.80E-05 | 5.51E-06 | 0 | 0 |
| S8 | 0 | -0.00397 | 0.000855 | 0.000341 | -9.80E-05 | 5.51E-06 | 0 | 0 |

(continued)

| Surface number | K | A4 | A6 | A8 | A10 | A12 | A14 | A16 |
|---|---|---|---|---|---|---|---|---|
| S9 | 0 | 0.059845 | -0.02257 | 0.007122 | -0.00168 | 0.000265 | -2.50E-05 | 1.01E-06 |
| S10 | 0 | 0.063517 | -0.01976 | 0.005336 | -0.001 | 0.00012 | -7.70E-06 | 2.00E-07 |
| S11 | 0 | 0.006213 | -0.00443 | 0.001788 | -0.00046 | 7.10E-05 | -5.20E-06 | -5.10E-09 |
| S12 | 0 | 0.006774 | -0.00451 | 0.002072 | -0.00062 | 0.000121 | -1.30E-05 | 5.79E-07 |
| S13 | 0 | 0.002056 | -0.00158 | 0.000605 | -0.00014 | 2.19E-05 | -1.70E-06 | 5.38E-08 |
| S14 | 0 | -0.00198 | -0.00073 | 0.000192 | -4.50E-05 | 6.31E-06 | -5.00E-07 | 1.84E-08 |

The aspheric surface of the long-focus lens 1 in Table 4a may be defined by using, but not limited to, the following aspheric curve equation:

$$z = \frac{cr^2}{1 + \sqrt{1 - (1+k)c^2r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between the point on the aspheric curve and the optical axis; c is a curvature; K is a cone coefficient; and $\alpha_i$ is an $i^{th}$-order aspheric coefficient. For details, refer to Table 4b.

Refer to Table 4c and Table 4d. Table 4c and Table 4d show basic parameters of the long-focus lens 1 shown in FIG. 7A in a possible embodiment. In Table 4c, f1 to f7 are respectively focal lengths of the first lens L1 to the seventh lens L7. In Table 4d, F1 and F2 are respectively focal lengths of the first lens group G1 and the second lens group G2; and T1 and T2 are respectively thicknesses of the first lens group G1 and the second lens group G2.

**Table 4c**

| Parameter | f1 | f2 | f3 | f4 | f5 | f6 | f7 | F-stop | Field of view |
|---|---|---|---|---|---|---|---|---|---|
| Value | 6.46 | -9.6 | 28.5 | 67.7 | -7.49 | 58.3 | 23.3 | 1.8 | 26° |

**Table 4d**

| Parameter | F1 | F2 | EFL | T1 | T2 | f1/F1 | f5/F2 | T1/F1 | T2/F2 | (F1-F2)/ F1 |
|-----------|------|-------|-------|------|------|-------------|-------|-------------|--------------|-------------|
| Value | 8.63 | -20.2 | 14.55 | 4.97 | 3.98 | 0.748551 564 | 0.37 | 0.57589 803 | -0.197029703 | 3.340672 074 |

In this embodiment, when the long-focus lens 1 switches focus from the distant view to the close-up view, for example, switches focus to a position of a close-up view of 50 mm, the second lens group G2 moves toward the image side, and a distance (S8) between the first lens group G1 and the second lens group G2 increases by 2.2 mm, that is, the second lens group G2 moves toward the image side by a focusing stroke of 2.2 mm. Compared with those of a conventional lens (which usually needs to be greater than 4 mm), the focusing stroke is significantly shortened, and a focusing capability is strong.

In addition, when the long-focus lens 1 focuses on the distant view, the effective focal length EFL of the long-focus lens 1 is 14.55 mm. When the long-focus lens 1 focuses on the close-up view, the effective focal length EFL of the long-focus lens 1 is 10.5 mm. In the focusing process in which the long-focus lens 1 switches focus from the distant view to the close-up view, the effective focal length EFL of the long-focus lens 1 decreases.

In this embodiment, when the long-focus lens 1 switches focus from the distant view to the close-up view, the second lens group G2 moves toward the image side, and the distance (S8) between the first lens group G1 and the second lens group G2 increases by 2.2 mm. Correspondingly, a distance (S14) between the second lens group G2 and the light filter 3 is reduced by 2.2 mm, to keep a height of the long-focus lens 1 unchanged.

In this embodiment, as shown in Table 4d, F1<0.9 EFL (0.9 EFL=0.9×14.55=13.095). In this case, the first lens group G1 has a small focal length F1 and a strong light ray convergence capability. This helps implement close-up shooting within 10 centimeters.

In addition, -EFL<F2. In this case, the second lens group has a small focal length F2 and a strong light ray convergence capability, thereby facilitating focusing and shortening a motor stroke.

In addition, (F1-F2)/F1 is approximately equal to 3. In this case, a difference between the focal lengths of the two lens groups is small, so that a light ray convergence capability of the long-focus lens 1 can be improved, thereby facilitating implementation of close-up imaging. In addition, the focal length F2 of the second lens group G2 is large, so that a light ray deflection degree of the long-focus lens 1 can be reduced, an aberration can be reduced, and imaging quality can be improved.

In addition, the focal length f1 of the first lens L1 is the focal length f11 of the 1st lens L11 of the first lens group G1. When 0.5<f1/F1<1, that is, 0.5<f11/F1<1, a difference between the focal length f11 of the 1st lens L11 of the first lens group G1 and the focal length F1 of the first lens group G1 is small. This facilitates adjustment of the focal length f11 of the 1st lens L11, to obtain the focal length F1 of the first lens group G1.

In addition, a focal length f5 of the fifth lens L5 is the focal length f21 of the 1st lens L21 of the second lens group G2. When 0.2<f5/F2<1, that is, 0.2<f21/F2<1, a difference between the focal length f21 of the 1st lens L21 of the second lens group G2 and the focal length F2 of the second lens group G2 is small. This facilitates adjustment of the focal length f21 of the 1st lens L21, to obtain the focal length F2 of the second lens group G2.

In addition, when 0.3<T1/F1<1, the thickness of the first lens group G1 is small. In this way, the height of the long-focus lens 1 can be reduced, thereby facilitating accommodation. In addition, motion of the first lens group G1 is facilitated, and imaging quality is improved.

In addition, -1<T2/F2<-0.1. This helps the second lens group G2 have a small thickness, thereby reducing the height of the long-focus lens 1 and facilitating accommodation. In addition, motion of the second lens group G2 is facilitated, and imaging quality is improved.

In addition, T1+T2=8.95, and 0.6 EFL=0.8×14.55=11.64. In this case, T1+T2<0.8 EFL, so that a sum of the thickness T1 of the first lens group G1 and the thickness T2 of the second lens group G2 is small. In this way, when the long-focus lens 1 is in an accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device.

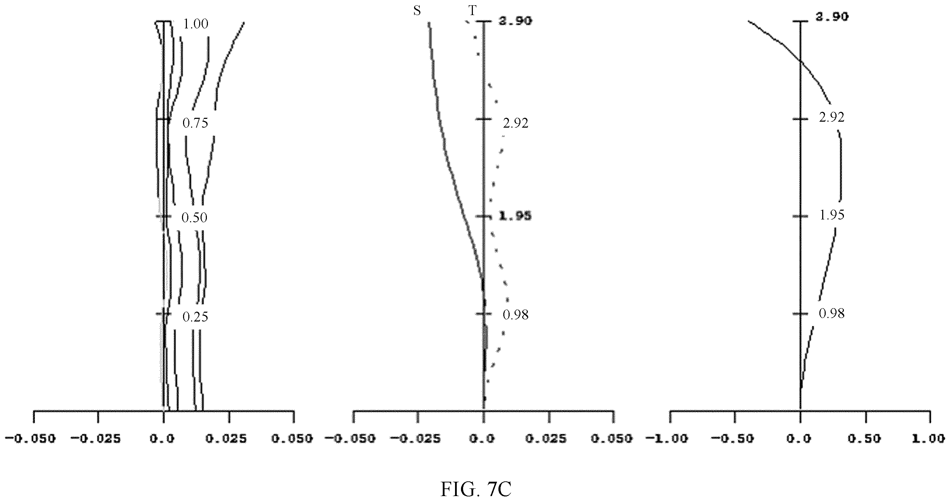

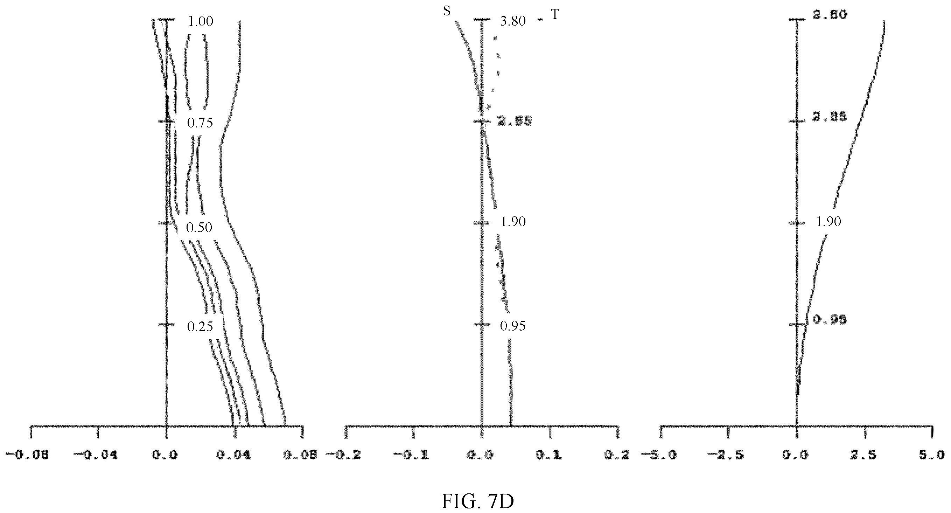

Refer to FIG. 7C and FIG. 7D. FIG. 7C is a simulation effect diagram of the long-focus lens 1 shown in FIG. 7A when the long-focus lens 1 focuses on a distant view. FIG. 7D is a simulation effect diagram of the long-focus lens 1 shown in FIG. 7B when the long-focus lens 1 focuses on a close-up view of 50 mm.

Both FIG. 7C and FIG. 7D include an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. Indicated values in both FIG. 7C and FIG. 7D are small. When the long-focus lens 1 focuses on the distant view and the close-up view, an axial aberration (a spherical aberration, a chromatic aberration, or the like) of the long-focus lens 1 is well corrected. The astigmatic field curvature diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. Field curvatures shown in FIG. 7C and FIG. 7D are small in both directions, and the system has a good focal depth. The distortion diagram represents relative deviations of beam convergence points (actual image heights) from an ideal image height in different fields of view. The distortions shown in FIG. 7C and FIG. 7D are small, so that it can be ensured that the picture is not significantly distorted.

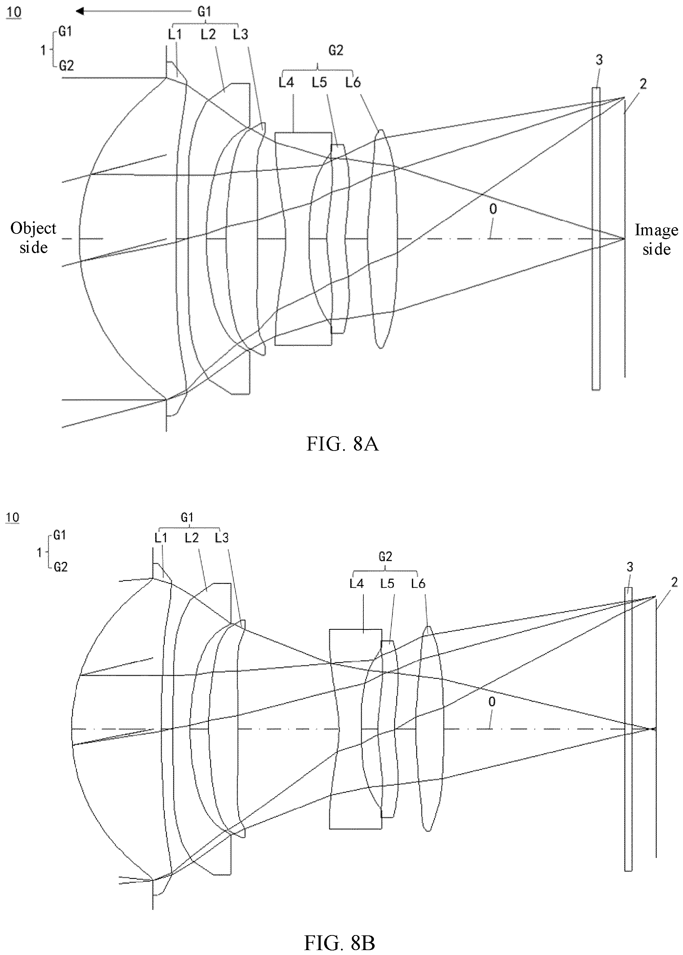

Refer to FIG. 8A and FIG. 8B. FIG. 8A is a diagram of an optical path when a camera assembly 10 focuses on a distant view according to a fifth embodiment of this application. FIG. 8B is a diagram of an optical path when the camera assembly 10 shown in FIG. 8A focuses on a close-up view of 50 mm. The camera assembly 10 shown in FIG. 8A includes most technical features of the camera assembly 10 shown in FIG. 3B. The following mainly describes differences between the two, and most content that is the same between the two is not described again.

In the fifth embodiment, different from that in the first embodiment, the long-focus lens 1 includes six lenses. In addition, the first lens group G1 includes three lenses. Focusing is performed by moving the first lens group G1 and fastening the second lens group G2.

Specifically, in the fifth embodiment, the camera assembly 10 includes the long-focus lens 1, a light filter 3, and a photosensitive element 2. The long-focus lens 1 includes a first lens group G1 and a second lens group G2 that are arranged from an object side to an image side. The first lens group G1 has a positive focal power, and the second lens group G2 has a negative focal power. In a focusing process in which the long-focus lens 1 switches focus between a distant view and a close-up view, a distance H3 between the first lens group G1 and the second lens group G2 changes.

In this embodiment, the first lens group G1 of the long-focus lens 1 includes a first lens L1, a second lens L2, and a third lens L3 that are arranged from the object side to the image side; and the second lens group G2 includes a fourth lens L4, a fifth lens L5, and a sixth lens L6 that are arranged from the object side to the image side. In a direction of an optical axis O, light rays successively pass through the first lens L1, the second lens L2, the third lens L3, the fourth lens L4, the fifth lens L5, and the sixth lens L6, then pass through the light filter 3, and finally arrive at the photosensitive element 2.

As shown in FIG. 8A, when the long-focus lens 1 focuses on a distant view, light rays reflected by a distant object are imaged on an imaging plane after passing through the long-focus lens 1. The imaging plane falls on the photosensitive element 2, and the camera assembly 10 can photograph a distant image. As shown in FIG. 8B, when the long-focus lens 1 focuses on a close-up view, the first lens group G1 moves toward the object side along the optical axis O, and light rays reflected by a close-up object is imaged on an imaging plane after passing through the long-focus lens 1. The imaging plane falls on the photosensitive element 2, and the camera assembly 10 can photograph a close-up image.

As shown in FIG. 8A and FIG. 8B, in a focusing process in which the long-focus lens 1 switches focus from the distant view to the close-up view, the first lens group G1 moves toward the object side along the optical axis O, the second lens group G2 does not move, a distance H3 between the first lens group G1 and the second lens group G2 increases, and an effective focal length EFL of the long-focus lens 1 decreases. In addition, a distance between the first lens group G1 and the photosensitive element 2 increases, and a distance between the second lens group G2 and the photosensitive element 2 remains unchanged. In this application, when the long-focus lens 1 focuses on the distant view and the close-up view, the imaging plane falls on the photosensitive element 2. To be specific, a distance between the first lens group G1 and the imaging plane of the long-focus lens 1 increases, and a distance between the second lens group G2 and the imaging plane of the long-focus lens 1 remains unchanged.

With reference to data and a simulation result, the following presents a specific solution of the long-focus lens 1 shown in FIG. 8A in a possible embodiment.

Refer to Table 5a and Table 5b together. Table 5a shows a curvature radius, a thickness, a refractive index (Nd), and an Abbe number of each lens and the light filter 3 when the long-focus lens 1 shown in FIG. 8A focuses on a distant view in a possible embodiment. The thickness includes a thickness of the lens, and also includes a distance between the lenses. A virtual surface is an imaginary surface located between the light filter 3 and the photosensitive element 2, and is used to investigate whether light spots converge. Table 5b shows aspheric coefficients of the lenses of the long-focus lens 1 shown in FIG. 8A in a possible embodiment.

**Table 5a**

| Surface number | Description | Surface type | Curvature radius | Thickness (mm) | Refractive index | Abbe number |
|---|---|---|---|---|---|---|
| ST0 | Aperture diaphragm | Plane | Infinite | -2.4 | | |
| S1 | L1 | Aspheric surface | 5.151715622 | 2.653959126 | 1.7 | 53 |
| S2 | L1 | Aspheric surface | 78.61635362 | 0.32709947 | | |

(continued)

| | | surface | | | | |
|---|---|---|---|---|---|---|
| S3 | L2 | Aspheric surface | 52.83631901 | 0.5 | 1.67 | 19.4 |
| S4 | L2 | Aspheric surface | 6.768377414 | 0.548520215 | | |
| S5 | L3 | Aspheric surface | 11.10665016 | 0.87042119 | 1.54 | 56 |
| S6 | L3 | Aspheric surface | -40.57404637 | 0.768508159 (variable) | | |
| S7 | L4 | Aspheric surface | -3.62663812 | 0.64911124 | 1.54 | 56 |
| S8 | L4 | Aspheric surface | 15.63629469 | 0.487377362 | | |
| S9 | L5 | Aspheric surface | 3.625933109 | 0.5 | 1.67 | 19.4 |
| S10 | L5 | Aspheric surface | 4.193311652 | 0.615144098 | | |
| S11 | L6 | Aspheric surface | 8.499310302 | 0.826390395 | 1.54 | 56 |
| S12 | L6 | Aspheric surface | -26.64189513 | 5.337165829 | | |
| S13 | Light filter | Plane | Infinite | 0.21 | 1.5 | 64 |
| S14 | Light filter | Plane | Infinite | 0.2 | | |
| S15 | Virtual surface | Plane | Infinite | 0.499977867 | | |
| S16 | Imaging plane | Plane | Infinite | 0 | | |

**Table 5b**

| Surface number | K | A4 | A6 | A8 | A10 | A12 | A14 | A16 |
|---|---|---|---|---|---|---|---|---|
| S1 | 0 | 8.07E-05 | 2.65E-05 | -8.16E-06 | 1.50E-06 | -1.53E-07 | 7.91E-09 | -1.65E-10 |
| S2 | 0 | 0.001208 | -0.00034 | 6.58E-05 | -4.90E-06 | 1.44E-07 | -6.20E-10 | -3.50E-11 |
| S3 | 0 | 4.48E-05 | -0.00137 | 0.000469 | -6.00E-05 | 4.00E-06 | -1.40E-07 | 2.02E-09 |
| S4 | 0 | 0.00064 | -0.00192 | 0.000563 | -5.60E-05 | 4.60E-06 | -4.90E-07 | 2.73E-08 |
| S5 | 0 | 0.002726 | -0.00144 | 4.84E-05 | 7.00E-05 | -1.20E-05 | 7.76E-07 | -1.20E-08 |
| S6 | 0 | 0.003346 | -0.00078 | 0.000116 | 1.09E-06 | -1.20E-07 | -1.60E-07 | 1.55E-08 |
| S7 | 0 | 0.041483 | -0.00875 | 0.001524 | -0.00018 | 1.25E-05 | -4.70E-07 | 7.40E-09 |
| S8 | 0 | 0.009051 | 0.010243 | -0.00619 | 0.001888 | -0.00034 | 3.35E-05 | -1.40E-06 |
| S9 | 0 | -0.06268 | 0.017083 | -0.00085 | -0.00217 | 0.001112 | -0.00028 | 4.18E-05 |
| S10 | 0 | -0.05836 | 0.014584 | 7.91E-05 | -0.00229 | 0.001077 | -0.00026 | 3.79E-05 |
| S11 | 0 | -0.01081 | 0.000318 | 0.00192 | -0.00117 | 0.000352 | -6.30E-05 | 6.79E-06 |
| S12 | 0 | -0.0012 | -0.00094 | 0.000873 | -0.00044 | 0.000126 | -2.20E-05 | 2.51E-06 |

The aspheric surface of the long-focus lens 1 in Table 5a may be defined by using, but not limited to, the following aspheric curve equation:

$$z = \frac{cr^2}{1 + \sqrt{1 - (1+k)c^2 r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between the point on the aspheric curve and the optical axis; c is a curvature; K is a cone coefficient; and $\alpha_i$ is an ith-order aspheric coefficient. For details, refer to Table 5b.

Refer to Table 5c and Table 5d. Table 5c and Table 5d show basic parameters of the long-focus lens 1 shown in FIG. 8A in a possible embodiment. In Table 5c, f1 to f6 are respectively focal lengths of the first lens L1 to the sixth lens L6. In Table 5d, F1 and F2 are respectively focal lengths of the first lens group G1 and the second lens group G2; and T1 and T2 are respectively thicknesses of the first lens group G1 and the second lens group G2.

**Table 5c**

| Parameter | f1 | f2 | f3 | f4 | f5 | f6 | F-stop | Field of view |
|-----------|------|--------|-------|-------|-------|----|--------|---------------|
| Value | 7.73 | -11.53 | 16.19 | -5.37 | 29.23 | 12 | 1.6 | 26° |

**Table 5d**

| Parameter | F1 | F2 | EFL | T1 | T2 | f1/F1 | f4/F2 | T1/F1 | T2/F2 | (F1-F2)/ F1 |
|---|---|---|---|---|---|---|---|---|---|---|
| Value | 9.16 | -19.78 | 14.6 | 4.9 | 3.08 | 0.843886 463 | 0.27 | 0.53493 4498 | -0.155712841 | 3.159388 646 |

In this embodiment, when the long-focus lens 1 switches focus from the distant view to the close-up view, for example, switches focus to a position of a close-up view of 50 mm, the first lens group G1 moves toward the object side, and a distance (S6) between the first lens group G1 and the second lens group G2 increases by 2 mm, that is, the first lens group G1 moves toward the object side by a focusing stroke of 2 mm. Compared with those of a conventional lens (which usually needs to be greater than 4 mm), the focusing stroke is significantly shortened, and a focusing capability is strong.

In addition, when the long-focus lens 1 focuses on the distant view, the effective focal length EFL of the long-focus lens 1 is 14.6 mm. When the long-focus lens 1 focuses on the close-up view, the effective focal length EFL of the long-focus lens 1 is 12.4 mm. In the focusing process in which the long-focus lens 1 switches focus from the distant view to the close-up view, the effective focal length EFL of the long-focus lens 1 decreases.

In this embodiment, when the long-focus lens 1 switches focus from the distant view to the close-up view, the first lens group G1 moves toward the object side, and the distance (S6) between the first lens group G1 and the second lens group G2 increases by 2 mm, and a distance (S12) between the second lens group G2 and the light filter 3 remains unchanged, so that a single-group focusing manner is used to simplify a focusing method. The height of the long-focus lens 1 increases.

In this embodiment, as shown in Table 5d, F1<0.9 EFL (0.9 EFL=0.9×14.6=13.14). In this case, the first lens group G1 has a small focal length F1 and a strong light ray convergence capability. This helps implement close-up shooting within 10 centimeters.

In addition, -EFL<F2. In this case, the second lens group has a small focal length F2 and a strong light ray convergence capability, thereby facilitating focusing and shortening a motor stroke.

In addition, (F1-F2)/F1 is approximately equal to 3. In this case, a difference between the focal lengths of the two lens groups is small, so that a light ray convergence capability of the long-focus lens 1 can be improved, thereby facilitating implementation of close-up imaging. In addition, the focal length F2 of the second lens group G2 is large, so that a light ray deflection degree of the long-focus lens 1 can be reduced, an aberration can be reduced, and imaging quality can be improved.

In addition, the focal length f1 of the first lens L1 is the focal length f11 of the 1st lens L11 of the first lens group G1. When 0.5<f1/F1<1, that is, 0.5<f11/F1<1, a difference between the focal length f11 of the 1st lens L11 of the first lens group G1 and the focal length F1 of the first lens group G1 is small. This facilitates adjustment of the focal length f11 of the 1st lens L11, to obtain the focal length F1 of the first lens group G1.

In addition, a focal length f4 of the fourth lens L4 is the focal length f21 of the 1st lens L21 of the second lens group G2. When 0.2<f4/F2<1, that is, 0.2<f21/F2<1, a difference between the focal length f21 of the 1st lens L21 of the second lens group G2 and the focal length F2 of the second lens group G2 is small. This facilitates adjustment of the focal length f21 of the 1st lens L21, to obtain the focal length F2 of the second lens group G2.

In addition, when 0.3<T1/F1<1, the thickness of the first lens group G1 is small. In this way, the height of the long-focus lens 1 can be reduced, thereby facilitating accommodation. In addition, motion of the first lens group G1 is facilitated, and imaging quality is improved.

In addition, -1<T2/F2<-0.1. This helps the second lens group G2 have a small thickness, thereby reducing the height of the long-focus lens 1 and facilitating accommodation. In addition, motion of the second lens group G2 is facilitated, and imaging quality is improved.

In addition, T1+T2=7.98, and 0.6 EFL=0.6×14.6=8.76. In this case, T1+T2<0.6 EFL, so that a sum of the thickness T1 of the first lens group G1 and the thickness T2 of the second lens group G2 is small. In this way, when the long-focus lens 1 is in an accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device.

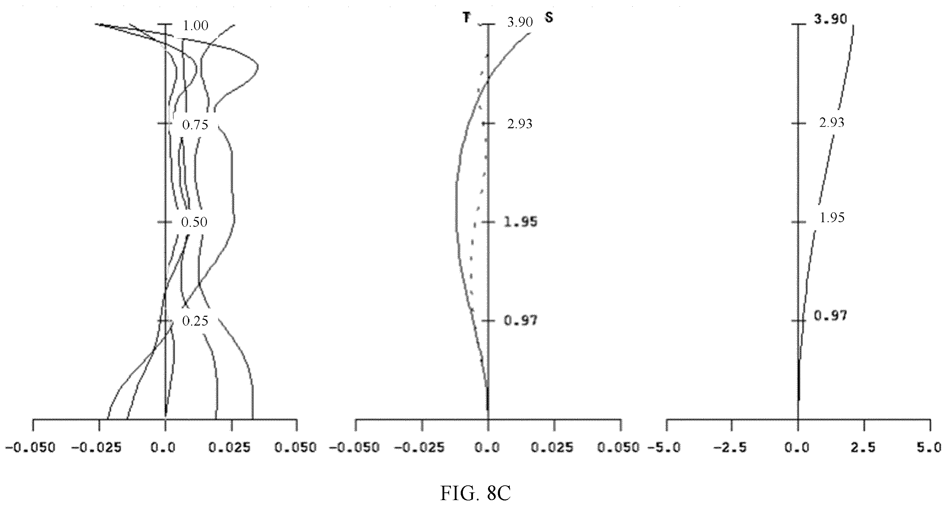

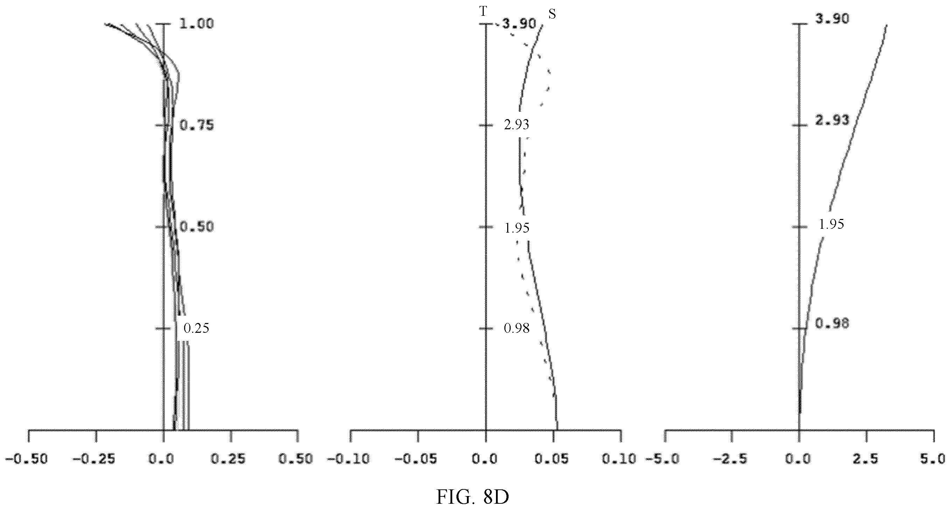

Refer to FIG. 8C and FIG. 8D. FIG. 8C is a simulation effect diagram of the long-focus lens 1 shown in FIG. 8A when the long-focus lens 1 focuses on a distant view. FIG. 8D is a simulation effect diagram of the long-focus lens 1 shown in FIG. 8B when the long-focus lens 1 focuses on a close-up view of 50 mm.

Both FIG. 8C and FIG. 8D include an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. Indicated values in both FIG. 8C and FIG. 8D are small. When the long-focus lens 1 focuses on the distant view and the close-up view, an axial aberration (a spherical aberration, a chromatic aberration, or the like) of the long-focus lens 1 is well corrected. The astigmatic field curvature diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. Field curvatures shown in FIG. 8C and FIG. 8D are small in both directions, and the system has a good focal depth. The distortion diagram represents relative deviations of beam convergence points (actual image heights) from an ideal image height in different fields of view. The distortions shown in FIG. 8C and FIG. 8D are small, so that it can be ensured that the picture is not significantly distorted.

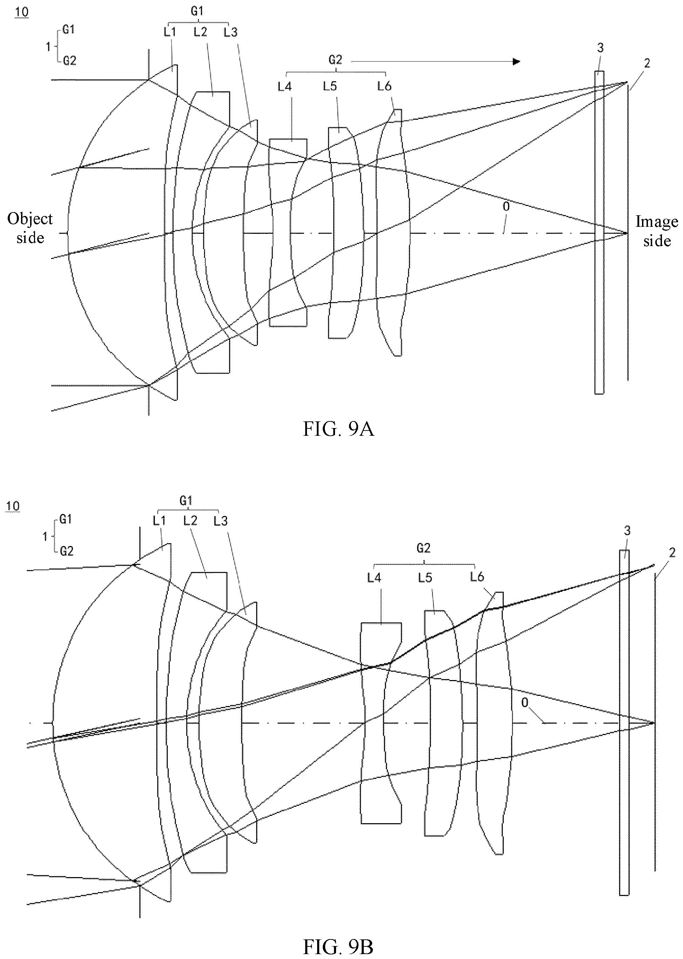

Refer to FIG. 9A and FIG. 9B. FIG. 9A is a diagram of an optical path when a camera assembly 10 focuses on a distant view according to a sixth embodiment of this application. FIG. 9B is a diagram of an optical path when the camera assembly 10 shown in FIG. 9A focuses on a close-up view of 50 mm. The camera assembly 10 shown in FIG. 9A includes most technical features of the camera assembly 10 shown in FIG. 3B. The following mainly describes differences between the two, and most content that is the same between the two is not described again.

In the sixth embodiment, different from that in the first embodiment, the long-focus lens 1 includes six lenses. In addition, the first lens group G1 includes three lenses. Focusing is performed by moving the second lens group G2 and fastening the first lens group G1.

Specifically, in the sixth embodiment, the camera assembly 10 includes the long-focus lens 1, a light filter 3, and a photosensitive element 2. The long-focus lens 1 includes a first lens group G1 and a second lens group G2 that are arranged from an object side to an image side. The first lens group G1 has a positive focal power, and the second lens group G2 has a negative focal power. In a focusing process in which the long-focus lens 1 switches focus between a distant view and a close-up view, a distance H3 between the first lens group G1 and the second lens group G2 changes.

In this embodiment, the first lens group G1 of the long-focus lens 1 includes a first lens L1, a second lens L2, and a third lens L3 that are arranged from the object side to the image side; and the second lens group G2 includes a fourth lens L4, a fifth lens L5, and a sixth lens L6 that are arranged from the object side to the image side. In a direction of an optical axis O, light rays successively pass through the first lens L1, the second lens L2, the third lens L3, the fourth lens L4, the fifth lens L5, and the sixth lens L6, then pass through the light filter 3, and finally arrive at the photosensitive element 2.

In the sixth embodiment, the long-focus lens 1 includes six lenses. In addition, the first lens L1 that is closest to the object side and that is in the three lenses of the first lens group G1 is a main lens; and the second lens L2 and the third lens L3 in the three lenses of the first lens group G1 are configured to adjust parameters such as a focal length of the first lens L1, so that the first lens group G1 obtains preset optical performance. In this embodiment, the first lens group G1 adjusts the main lens by using two lenses. An optical path is simple, and design difficulty of each lens is low. In addition, a thickness T1 of the first lens group G1 is small, and a height of the long-focus lens 1 is small, thereby facilitating accommodation.

As shown in FIG. 9A, when the long-focus lens 1 focuses on a distant view, light rays reflected by a distant object are imaged on an imaging plane after passing through the long-focus lens 1. The imaging plane falls on the photosensitive element 2, and the camera assembly 10 can photograph a distant image. As shown in FIG. 9B, when the long-focus lens 1 focuses on a close-up view, the second lens group G2 moves toward the object side along the optical axis O, and light rays reflected by a close-up object is imaged on an imaging plane after passing through the long-focus lens 1. The imaging plane falls on the photosensitive element 2, and the camera assembly 10 can photograph a close-up image.

As shown in FIG. 9A and FIG. 9B, in a focusing process in which the long-focus lens 1 switches focus from the distant view to the close-up view, the first lens group G1 does not move, the second lens group G2 moves toward the image side along the optical axis O, the distance H3 between the first lens group G1 and the second lens group G2 increases, and an effective focal length EFL of the long-focus lens 1 decreases. In addition, a distance between the first lens group G1 and the photosensitive element 2 remains unchanged, and a distance between the second lens group G2 and the photosensitive element 2 decreases. In this application, when the long-focus lens 1 focuses on the distant view and the close-up view, the imaging plane falls on the photosensitive element 2. To be specific, a distance between the first lens group G1 and the imaging plane of the long-focus lens 1 remains unchanged, and a distance between the second lens group G2 and the imaging plane of the long-focus lens 1 decreases.

With reference to data and a simulation result, the following presents a specific solution of the long-focus lens 1 shown in FIG. 9A in a possible embodiment.

Refer to Table 6a and Table 6b together. Table 6a shows a curvature radius, a thickness, a refractive index (Nd), and an Abbe number of each lens and the light filter 3 when the long-focus lens 1 shown in FIG. 9A focuses on a distant view in a possible embodiment. The thickness includes a thickness of the lens, and also includes a distance between the lenses. A virtual surface is an imaginary surface located between the light filter 3 and the photosensitive element 2, and is used to investigate whether light spots converge. Table 6b shows aspheric coefficients of the lenses of the long-focus lens 1 shown in FIG. 9A in a possible embodiment.

EP 4 474 881 A1

**Table 6a**

| Surface number | Description | Surface type | Curvature radius | Thickness (mm) | Refractive index | Abbe number |
|---|---|---|---|---|---|---|
| ST0 | Aperture diaphragm | Plane | Infinite | -2.1 | | |
| S1 | L1 | Aspheric surface | 4.871304402 | 2.506826176 | 1.7 | 53 |
| S2 | L1 | Aspheric surface | -380.8986647 | 0.218622701 | | |
| S3 | L2 | Aspheric surface | 12.91396801 | 0.496824793 | 1.67 | 19.4 |
| S4 | L2 | Aspheric surface | 4.468618827 | 0.296989751 | | |
| S5 | L3 | Aspheric surface | 9.692588969 | 1.038607228 | 1.54 | 56 |
| S6 | L3 | Aspheric surface | 56.60950231 | 0.757680349 (variable) | | |
| S7 | L4 | Aspheric surface | -4.572399263 | 0.45 | 1.54 | 56 |
| S8 | L4 | Aspheric surface | 61.52180592 | 1.115012705 | | |
| S9 | L5 | Aspheric surface | -31.03292063 | 0.777780403 | 1.67 | 19.4 |
| S10 | L5 | Aspheric surface | -13.97312916 | 0.342594542 | | |
| S11 | L6 | Aspheric surface | -65.20164799 | 0.84906135 | 1.54 | 56 |
| S12 | L6 | Aspheric surface | -13.66078188 | 4.795758457 (variable) | | |
| S13 | Light filter | Plane | Infinite | 0.21 | 1.5 | 64 |
| S14 | Light filter | Plane | Infinite | 0.2 | | |
| S15 | Virtual surface | Plane | Infinite | 0.440007488 | | |
| S16 | Imaging plane | Plane | Infinite | 0 | | |

**Table 6b**

| Surface number | K | A4 | A6 | A8 | A10 | A12 | A14 | A16 |
|---|---|---|---|---|---|---|---|---|
| S1 | 0 | 5.52E-05 | 2.05E-05 | -3.35E-06 | 6.12E-07 | -5.32E-08 | 3.10E-09 | -8.26E-11 |
| S2 | 0 | 0.003522848 | -3.95E-06 | -3.79E-05 | 9.76E-06 | -1.26E-06 | 7.28E-08 | -1.54E-09 |
| S3 | 0 | -0.00193 | 0.00054 | 1.66E-05 | -1.30E-05 | 8.92E-07 | 3.05E-09 | -1.10E-09 |
| S4 | 0 | -0.00165 | -6.30E-05 | 0.000193 | -2.40E-06 | -5.80E-06 | 4.51E-07 | 4.22E-09 |
| S5 | 0 | 0.010088 | -0.00098 | 0.00012 | 5.88E-05 | -1.40E-05 | 1.19E-06 | -3.60E-08 |
| S6 | 0 | 0.007416 | 0.000265 | -0.00034 | 0.000199 | -4.40E-05 | 5.65E-06 | -3.00E-07 |
| S7 | 0 | 0.050899 | -0.0167 | 0.00468 | -0.00095 | 0.000124 | -9.30E-06 | 2.98E-07 |
| S8 | 0 | 0.051596 | -0.01429 | 0.003306 | -0.00039 | -1.60E-05 | 1.02E-05 | -8.20E-07 |
| S9 | 0 | -0.00059 | -0.00135 | 0.0002 | 0.000105 | -4.40E-05 | 6.59E-06 | -4.20E-07 |

(continued)

| Surface number | K | A4 | A6 | A8 | A10 | A12 | A14 | A16 |
|---|---|---|---|---|---|---|---|---|
| S10 | 0 | -6.60E-05 | -0.00185 | 0.000632 | -5.50E-05 | -8.40E-07 | -6.10E-08 | 1.33E-08 |
| S11 | 0 | 0.002634 | -0.00156 | 0.00058 | -5.50E-05 | -7.40E-07 | 4.04E-07 | -1.80E-08 |
| S12 | 0 | -0.00049 | -0.00046 | 0.000127 | -1.70E-05 | 2.41E-06 | -1.10E-07 | -3.60E-10 |

The aspheric surface of the long-focus lens 1 in Table 6a may be defined by using, but not limited to, the following aspheric curve equation:

$$z = \frac{cr^2}{1 + \sqrt{1 - (1+k)c^2r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between the point on the aspheric curve and the optical axis; c is a curvature; K is a cone coefficient; and $\alpha_i$ is an $i^{th}$-order aspheric coefficient. For details, refer to Table 6b.

Refer to Table 6c and Table 6d. Table 6c and Table 6d show basic parameters of the long-focus lens 1 shown in FIG. 9A in a possible embodiment. In Table 6c, f1 to f6 are respectively focal lengths of the first lens L1 to the sixth lens L6. In Table 6d, F1 and F2 are respectively focal lengths of the first lens group G1 and the second lens group G2; and T1 and T2 are respectively thicknesses of the first lens group G1 and the second lens group G2.

**Table 6c**

| Parameter | f1 | f2 | f3 | f4 | f5 | f6 | F-stop | Field of view |
|---|---|---|---|---|---|---|---|---|
| Value | 6.86 | -10.35 | 21.26 | -7.78 | 36.9 | 31.48 | 1.8 | 27° |

**Table 6d**

| Parameter | F1 | F2 | EFL | T1 | T2 | f1/F1 | f4/F2 | T1/F1 | T2/F2 | (F1-F2)/ F1 |
|---|---|---|---|---|---|---|---|---|---|---|
| Value | 8.96 | -19.62 | 14.55 | 4.56 | 3.53 | 0.765 625 | 0.4 | 0.508928 571 | -0.179918451 | 3.189732 143 |

In this embodiment, when the long-focus lens 1 switches focus from the distant view to the close-up view, for example, switches focus to a position of a close-up view of 50 mm, the second lens group G2 moves toward the image side, and a distance (S6) between the first lens group G1 and the second lens group G2 increases by 2.3 mm, that is, the second lens group G2 moves toward the image side by a focusing stroke of 2.3 mm. Compared with those of a conventional lens (which usually needs to be greater than 4 mm), the focusing stroke is significantly shortened, and a focusing capability is strong.

In addition, when the long-focus lens 1 focuses on the distant view, the effective focal length EFL of the long-focus lens 1 is 14.55 mm. When the long-focus lens 1 focuses on the close-up view, the effective focal length EFL of the long-focus lens 1 is 10.6 mm. In the focusing process in which the long-focus lens 1 switches focus from the distant view to the close-up view, the effective focal length EFL of the long-focus lens 1 decreases.

In this embodiment, when the long-focus lens 1 switches focus from the distant view to the close-up view, the second lens group G2 moves toward the image side, and the distance (S6) between the first lens group G1 and the second lens group G2 increases by 2.3 mm. Correspondingly, a distance (S12) between the second lens group G2 and the light filter 3 is reduced by 2.3 mm, to keep a height of the long-focus lens 1 unchanged.

In this embodiment, as shown in Table 6d, $F1 < 0.9\ EFL$ ($0.9\ EFL = 0.9 \times 14.55 = 13.095$). In this case, the first lens group G1 has a small focal length F1 and a strong light ray convergence capability. This helps implement close-up shooting within 10 centimeters.

In addition, $-EFL < F2$. In this case, the second lens group has a small focal length F2 and a strong light ray convergence capability, thereby facilitating focusing and shortening a motor stroke.

In addition, $(F1-F2)/F1$ is approximately equal to 3. In this case, a difference between the focal lengths of the two lens groups is small, so that a light ray convergence capability of the long-focus lens 1 can be improved, thereby facilitating implementation of close-up imaging. In addition, the focal length F2 of the second lens group G2 is large, so that a light ray deflection degree of the long-focus lens 1 can be reduced, an aberration can be reduced, and imaging quality can be improved.

In addition, the focal length f1 of the first lens L1 is the focal length f11 of the 1st lens L11 of the first lens group G1. When $0.5 < f1/F1 < 1$, that is, $0.5 < f11/F1 < 1$, a difference between the focal length f11 of the 1st lens L11 of the first lens group G1 and the focal length F1 of the first lens group G1 is small. This facilitates adjustment of the focal length f11 of the 1st lens L11, to obtain the focal length F1 of the first lens group G1.

In addition, a focal length f4 of the fourth lens L4 is the focal length f21 of the 1st lens L21 of the second lens group G2. When $0.2 < f4/F2 < 1$, that is, $0.2 < f21/F2 < 1$, a difference between the focal length f21 of the 1st lens L21 of the second lens group G2 and the focal length F2 of the second lens group G2 is small. This facilitates adjustment of the focal length f21 of the 1st lens L21, to obtain the focal length F2 of the second lens group G2.

In addition, when $0.3 < T1/F1 < 1$, the thickness of the first lens group G1 is small. In this way, the height of the long-focus lens 1 can be reduced, thereby facilitating accommodation. In addition, motion of the first lens group G1 is facilitated, and imaging quality is improved.

In addition, $-1 < T2/F2 < -0.1$. This helps the second lens group G2 have a small thickness, thereby reducing the height of the long-focus lens 1 and facilitating accommodation. In addition, motion of the second lens group G2 is facilitated, and imaging quality is improved.

In addition, $T1+T2 = 8.09$, and $0.6\ EFL = 0.6 \times 14.55 = 8.73$. In this case, $T1+T2 < 0.6\ EFL$, so that a sum of the thickness T1 of the first lens group G1 and the thickness T2 of the second lens group G2 is small. In this way, when the long-focus lens 1 is in an accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device.

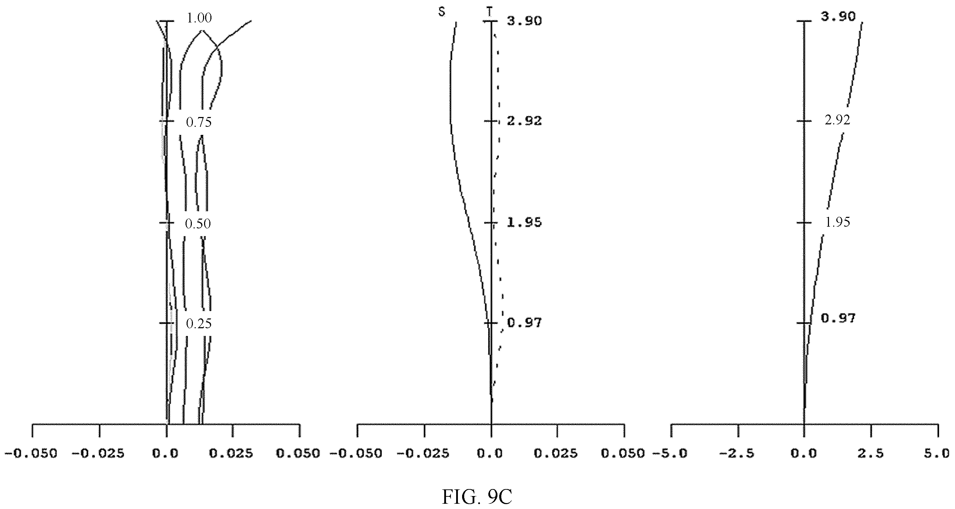

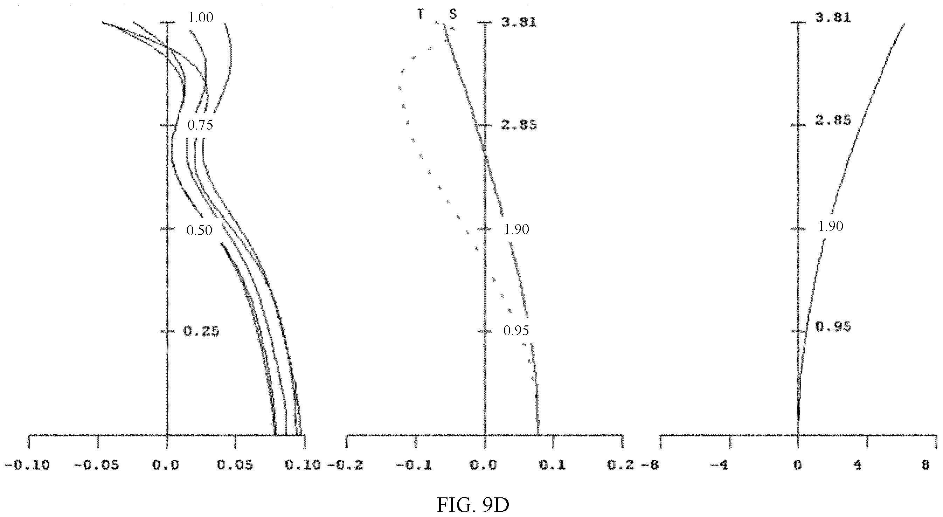

Refer to FIG. 9C and FIG. 9D. FIG. 9C is a simulation effect diagram of the long-focus lens 1 shown in FIG. 9A when the long-focus lens 1 focuses on a distant view. FIG. 9D is a simulation effect diagram of the long-focus lens 1 shown in FIG. 9B when the long-focus lens 1 focuses on a close-up view of 50 mm.

Both FIG. 9C and FIG. 9D include an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. Indicated values in both FIG. 9C and FIG. 9D are small. When the long-focus lens 1 focuses on the distant view and the close-up view, an axial aberration (a spherical aberration, a chromatic aberration, or the like) of the long-focus lens 1 is well corrected. The astigmatic field curvature diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. Field curvatures shown in FIG. 9C and FIG. 9D are small in both directions, and the system has a good focal depth. The distortion diagram represents relative deviations of beam convergence points (actual image heights) from an ideal image height in different fields of view. The distortions shown in FIG. 9C and FIG. 9D are small, so that it can be ensured that the picture is not significantly distorted.

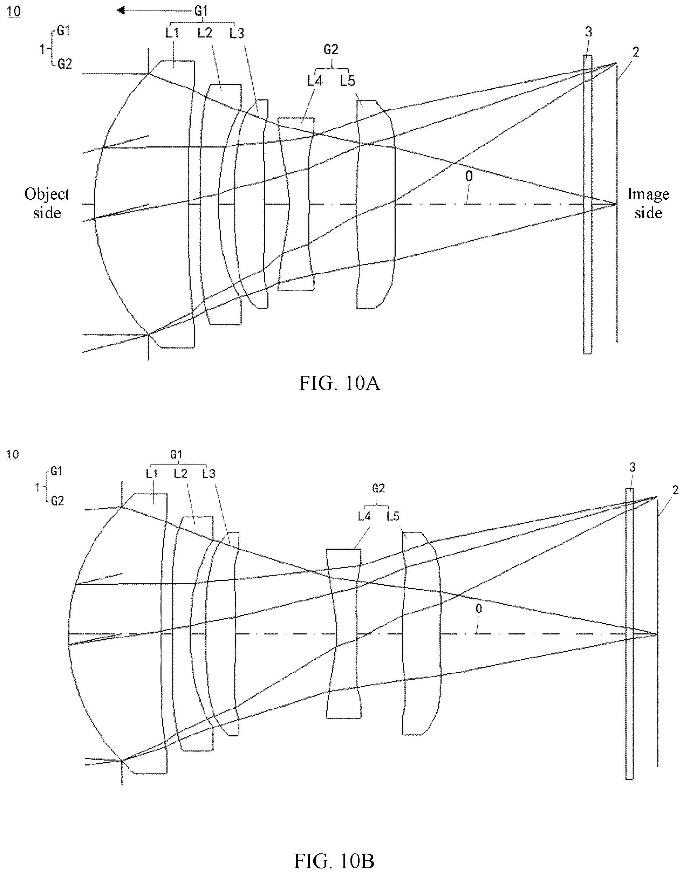

Refer to FIG. 10A and FIG. 10B. FIG. 10A is a diagram of an optical path when a camera assembly 10 focuses on a distant view according to a seventh embodiment of this application. FIG. 10B is a diagram of an optical path when the camera assembly 10 shown in FIG. 10A focuses on a close-up view of 50 mm. The camera assembly 10 shown in FIG. 10A includes most technical features of the camera assembly 10 shown in FIG. 3B. The following mainly describes differences between the two, and most content that is the same between the two is not described again.

In the seventh embodiment, the long-focus lens 1 includes five lenses. In addition, the first lens group G1 includes three lenses. Focusing is performed by moving the first lens group G1 and fastening the second lens group G2.

Specifically, in the seventh embodiment, the camera assembly 10 includes the long-focus lens 1, a light filter 3, and a photosensitive element 2. The long-focus lens 1 includes a first lens group G1 and a second lens group G2 that are arranged from an object side to an image side. The first lens group G1 has a positive focal power, and the second lens group G2 has a negative focal power. In a focusing process in which the long-focus lens 1 switches focus between a distant view and a close-up view, a distance H3 between the first lens group G1 and the second lens group G2 changes.

In this embodiment, the first lens group G1 of the long-focus lens 1 includes a first lens L1, a second lens L2, and a third lens L3 that are arranged from the object side to the image side; and the second lens group G2 includes a fourth lens L4 and a fifth lens L5 that are arranged from the object side to the image side. In a direction of an optical axis O, light rays successively pass through the first lens L1, the second lens L2, the third lens L3, the fourth lens L4, and the fifth lens L5, then pass through the light filter 3, and finally arrive at the photosensitive element 2.

As shown in FIG. 10A, when the long-focus lens 1 focuses on a distant view, light rays reflected by a distant object are imaged on an imaging plane after passing through the long-focus lens 1. The imaging plane falls on the photosensitive element 2, and the camera assembly 10 can photograph a distant image. As shown in FIG. 10B, when the long-focus lens 1 focuses on a close-up view, the first lens group G1 moves toward the object side along the optical axis O, and light rays reflected by a close-up object is imaged on an imaging plane after passing through the long-focus lens 1. The imaging plane falls on the photosensitive element 2, and the camera assembly 10 can photograph a close-up image.

As shown in FIG. 10A and FIG. 10B, in a focusing process in which the long-focus lens 1 switches focus from the distant view to the close-up view, the first lens group G1 moves toward the object side along the optical axis O, the second lens group G2 does not move, a distance H3 between the first lens group G1 and the second lens group G2 increases, and an effective focal length EFL of the long-focus lens 1 decreases. In addition, a distance between the first lens group G1 and the photosensitive element 2 increases, and a distance between the second lens group G2 and the photosensitive element 2 remains unchanged. In this application, when the long-focus lens 1 focuses on the distant view and the close-up view, the imaging plane falls on the photosensitive element 2. To be specific, a distance between the first lens group G1 and the imaging plane of the long-focus lens 1 increases, and a distance between the second lens group G2 and the imaging plane of the long-focus lens 1 remains unchanged.

With reference to data and a simulation result, the following presents a specific solution of the long-focus lens 1 shown in FIG. 10A in a possible embodiment.

Refer to Table 7a and Table 7b together. Table 7a shows a curvature radius, a thickness, a refractive index (Nd), and an Abbe number of each lens and the light filter 3 when the long-focus lens 1 shown in FIG. 10A focuses on a distant view in a possible embodiment. The thickness includes a thickness of the lens, and also includes a distance between the lenses. A virtual surface is an imaginary surface located between the light filter 3 and the photosensitive element 2, and is used to investigate whether light spots converge. Table 7b shows aspheric coefficients of the lenses of the long-focus lens 1 shown in FIG. 10A in a possible embodiment.

**Table 7a**

| Surface number | Description | Surface type | Curvature radius | Thickness (mm) | Refractive index | Abbe number |
|---|---|---|---|---|---|---|
| STO | Aperture diaphragm | Plane | Infinite | -1.5 | | |
| S1 | L1 | Aspheric surface | 5.021968422 | 2.627046976 | 1.54 | 56 |
| S2 | L1 | Aspheric surface | 476.8675096 | 0.316064571 | | |

(continued)

| Surface number | Description | Surface type | Curvature radius | Thickness (mm) | Refractive index | Abbe number |
|---|---|---|---|---|---|---|
| S3 | L2 | Aspheric surface | 69.56440349 | 0.501497643 | 1.67 | 19.4 |
| S4 | L2 | Aspheric surface | 6.388625925 | 0.446306708 | | |
| S5 | L3 | Aspheric surface | 15.73213491 | 0.847061612 | 1.545 | 56 |
| S6 | L3 | Aspheric surface | -24.6934584 | 0.669387574 (variable) | | |
| S7 | L4 | Aspheric surface | -3.22848932 | 0.565953575 | 1.545 | 56 |
| S8 | L4 | Aspheric surface | -8.96487715 | 1.291639773 | | |
| S9 | L5 | Aspheric surface | 11.23105327 | 1.084253469 | 1.545 | 56 |
| S10 | L5 | Aspheric surface | 50.92416183 | 5.261160787 | | |
| S11 | Light filter | Plane | Infinite | 0.21 | 1.5 | 64 |
| S12 | Light filter | Plane | Infinite | 0.2 | | |
| S13 | Virtual surface | Plane | Infinite | 0.499953705 | | |
| S14 | Imaging plane | Plane | Infinite | 0 | | |

**Table 7b**

| Surface number | K | A4 | A6 | A8 | A10 | A12 | A14 | A16 |
|---|---|---|---|---|---|---|---|---|
| S1 | 0 | -0.000155757 | 2.60E-05 | -6.94E-06 | 1.46E-06 | -1.77E-07 | 1.10E-08 | -2.85E-10 |
| S2 | 0 | -0.00452 | 0.002927 | -0.00063 | 6.99E-05 | -3.80E-06 | 6.11E-08 | 1.28E-09 |
| S3 | 0 | -0.01596 | 0.010836 | -0.00296 | 0.000439 | -3.70E-05 | 1.59E-06 | -2.70E-08 |
| S4 | 0 | -0.01366 | 0.00857 | -0.00178 | 8.52E-05 | 2.16E-05 | -3.40E-06 | 1.50E-07 |
| S5 | 0 | -0.00233 | 0.000153 | 0.000859 | -0.00031 | 4.74E-05 | -3.30E-06 | 9.01E-08 |
| S6 | 0 | 0.002654 | -0.00059 | 0.000414 | -6.60E-05 | 1.65E-06 | 9.06E-07 | -7.50E-08 |
| S7 | 0 | 0.051164 | -0.01242 | 0.00268 | -0.00037 | 2.44E-05 | 5.27E-07 | -1.20E-07 |
| S8 | 0 | 0.043768 | -0.00937 | 0.001067 | 0.000112 | -6.90E-05 | 1.10E-05 | -6.40E-07 |
| S9 | 0 | -0.00075 | -0.00241 | 0.001136 | -0.00061 | 0.000225 | -5.40E-05 | 7.87E-06 |
| S10 | 0 | -0.00303 | -0.00034 | -0.0002 | 0.000111 | -3.60E-05 | 6.94E-06 | -8.30E-07 |

The aspheric surface of the long-focus lens 1 in Table 7a may be defined by using, but not limited to, the following aspheric curve equation:

$$z = \frac{cr^2}{1 + \sqrt{1 - (1+k)c^2r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between the point on the aspheric curve and the optical axis; c is a curvature; K is a cone coefficient; and $\alpha_i$ is an $i^{th}$-order aspheric coefficient. For details, refer to Table 7b.

Refer to Table 7c and Table 7d. Table 7c and Table 7d show basic parameters of the long-focus lens 1 shown in FIG. 10A in a possible embodiment. In Table 7c, f1 to f5 are respectively focal lengths of the first lens L1 to the fifth lens L5. In Table 7d, F1 and F2 are respectively focal lengths of the first lens group G1 and the second lens group G2; and T1 and T2 are respectively thicknesses of the first lens group G1 and the second lens group G2.

**Table 7c**

| Parameter | f1 | f2 | f3 | f4 | f5 | F-stop | Field of view |
|---|---|---|---|---|---|---|---|
| Value | 7.2 | -10.4 | 17.9 | -9.6 | 26.2 | 1.9 | 26° |

**Table 7d**

| Parameter | F1 | F2 | EFL | T1 | T2 | f1/F1 | f4/F2 | T1/F1 | T2/F2 | (F1-F2)/ F1 |
|---|---|---|---|---|---|---|---|---|---|---|
| Value | 9.2 | -17 | 14.6 | 4.74 | 2.94 | 0.78260 8696 | 0.56 | 0.515217 391 | -0.172941176 | 2.847826 087 |

In this embodiment, when the long-focus lens 1 switches focus from the distant view to the close-up view, for example, switches focus to a position of a close-up view of 50 mm, the first lens group G1 moves toward the object side, and a distance (S6) between the first lens group G1 and the second lens group G2 increases by 2 mm, that is, the first lens group G1 moves toward the object side by a focusing stroke of 2 mm. Compared with those of a conventional lens (which usually needs to be greater than 4 mm), the focusing stroke is significantly shortened, and a focusing capability is strong.

In addition, when the long-focus lens 1 focuses on the distant view, the effective focal length EFL of the long-focus lens 1 is 14.6 mm. When the long-focus lens 1 focuses on the close-up view, the effective focal length EFL of the long-focus lens 1 is 12.1 mm. In the focusing process in which the long-focus lens 1 switches focus from the distant view to the close-up view, the effective focal length EFL of the long-focus lens 1 decreases.

In this embodiment, when the long-focus lens 1 switches focus from the distant view to the close-up view, the first lens group G1 moves toward the object side, and the distance (S6) between the first lens group G1 and the second lens group G2 increases by 2 mm, and a distance (S10) between the second lens group G2 and the light filter 3 remains unchanged, so that a single-group focusing manner is used to simplify a focusing method. The height of the long-focus lens 1 increases.

In this embodiment, as shown in Table 7d, F1<0.9 EFL (0.9 EFL=0.9×14.6=13.14). In this case, the first lens group G1 has a small focal length F1 and a strong light ray convergence capability. This helps implement close-up shooting within 10 centimeters.

In addition, -EFL<F2. In this case, the second lens group has a small focal length F2 and a strong light ray convergence capability, thereby facilitating focusing and shortening a motor stroke.

In addition, (F1-F2)/F1 is approximately equal to 3. In this case, a difference between the focal lengths of the two lens groups is small, so that a light ray convergence capability of the long-focus lens 1 can be improved, thereby facilitating implementation of close-up imaging. In addition, the focal length F2 of the second lens group G2 is large, so that a light ray deflection degree of the long-focus lens 1 can be reduced, an aberration can be reduced, and imaging quality can be improved.

In addition, the focal length f1 of the first lens L1 is the focal length f11 of the 1st lens L11 of the first lens group G1. When 0.5<f1/F1<1, that is, 0.5<f11/F1<1, a difference between the focal length f11 of the 1st lens L11 of the first lens group G1 and the focal length F1 of the first lens group G1 is small. This facilitates adjustment of the focal length f11 of the 1st lens L11, to obtain the focal length F1 of the first lens group G1.

In addition, a focal length f4 of the fourth lens L4 is the focal length f21 of the 1st lens L21 of the second lens group G2. When 0.2<f4/F2<1, that is, 0.2<f21/F2<1, a difference between the focal length f21 of the 1st lens L21 of the second lens group G2 and the focal length F2 of the second lens group G2 is small. This facilitates adjustment of the focal length f21 of the 1st lens L21, to obtain the focal length F2 of the second lens group G2.

In addition, when 0.3<T1/F1<1, the thickness of the first lens group G1 is small. In this way, the height of the long-focus lens 1 can be reduced, thereby facilitating accommodation. In addition, motion of the first lens group G1 is facilitated, and imaging quality is improved.

In addition, -1<T2/F2<-0.1. This helps the second lens group G2 have a small thickness, thereby reducing the height of the long-focus lens 1 and facilitating accommodation. In addition, motion of the second lens group G2 is facilitated, and imaging quality is improved.

In addition, T1+T2=7.68, and 0.6 EFL=0.6×14.6=8.76. In this case, T1+T2<0.6 EFL, so that a sum of the thickness T1 of the first lens group G1 and the thickness T2 of the second lens group G2 is small. In this way, when the long-focus lens 1 is in an accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device.

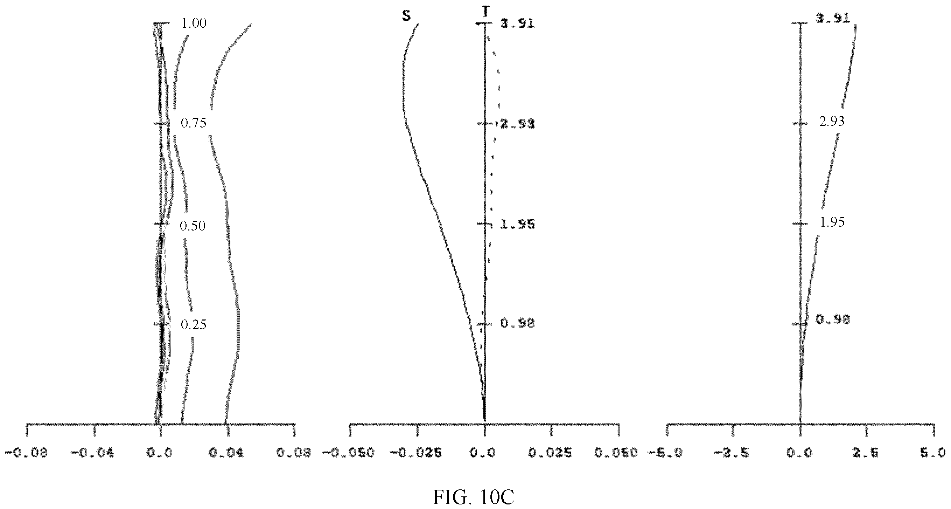

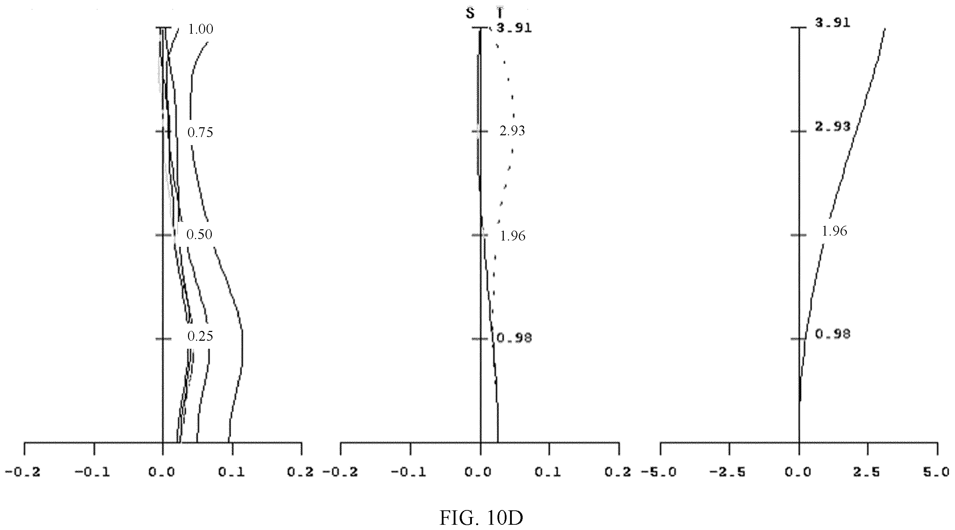

Refer to FIG. 10C and FIG. 10D. FIG. 10C is a simulation effect diagram of the long-focus lens 1 shown in FIG. 10A when the long-focus lens 1 focuses on a distant view. FIG. 10D is a simulation effect diagram of the long-focus lens 1 shown in FIG. 10B when the long-focus lens 1 focuses on a close-up view of 50 mm.

Both FIG. 10C and FIG. 10D include an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. Indicated values in both FIG. 10C and FIG. 10D are small. When the long-focus lens 1 focuses on the distant view and the close-up view, an axial aberration (a spherical aberration, a chromatic aberration, or the like) of the long-focus lens 1 is well corrected. The astigmatic field curvature diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. Field curvatures shown in FIG. 10C and FIG. 10D are small in both directions, and the system has a good focal depth. The distortion diagram represents relative deviations of beam convergence points (actual image heights) from an ideal image height in different fields of view. The distortions shown in FIG. 10C and FIG. 10D are small, so that it can be ensured that the picture is not significantly distorted.

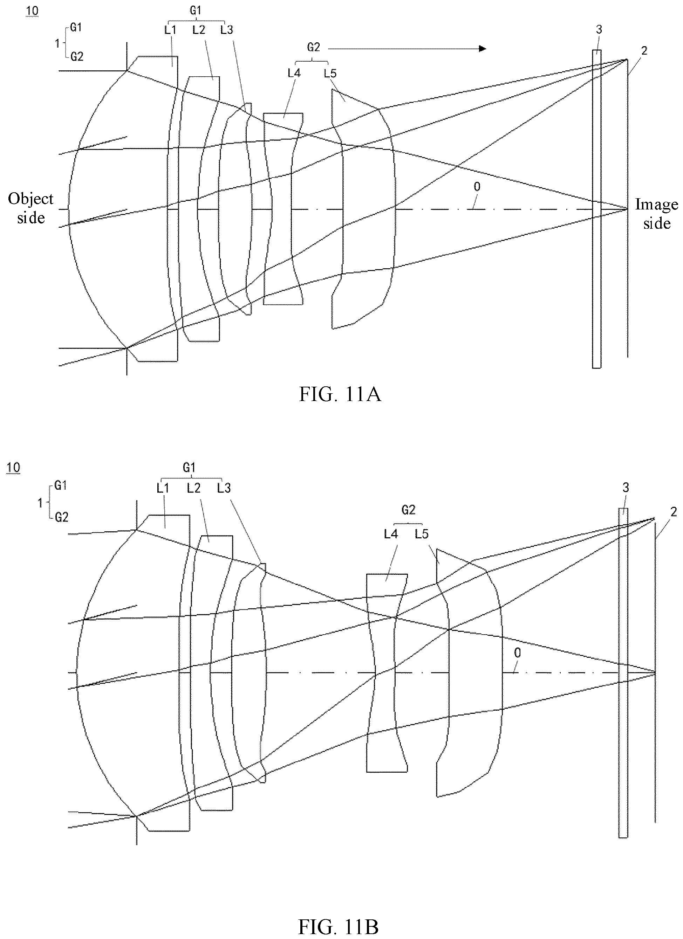

Refer to FIG. 11A and FIG. 11B. FIG. 11A is a diagram of an optical path when a camera assembly 10 focuses on a distant view according to an eighth embodiment of this application. FIG. 11B is a diagram of an optical path when the camera assembly 10 shown in FIG. 11A focuses on a close-up view of 50 mm. The camera assembly 10 shown in FIG. 11A includes most technical features of the camera assembly 10 shown in FIG. 3B. The following mainly describes differences between the two, and most content that is the same between the two is not described again.

In the eighth embodiment, the long-focus lens 1 includes five lenses. In addition, the first lens group G1 includes three lenses. Focusing is performed by moving the second lens group G2 and fastening the first lens group G1.

Specifically, in the eighth embodiment, the camera assembly 10 includes the long-focus lens 1, a light filter 3, and a photosensitive element 2. The long-focus lens 1 includes a first lens group G1 and a second lens group G2 that are arranged from an object side to an image side. The first lens group G1 has a positive focal power, and the second lens group G2 has a negative focal power. In a focusing process in which the long-focus lens 1 switches focus between a distant view and a close-up view, a distance H3 between the first lens group G1 and the second lens group G2 changes.

In this embodiment, the first lens group G1 of the long-focus lens 1 includes a first lens L1, a second lens L2, and a third lens L3 that are arranged from the object side to the image side; and the second lens group G2 includes a fourth lens L4 and a fifth lens L5 that are arranged from the object side to the image side. In a direction of an optical axis O, light rays successively pass through the first lens L1, the second lens L2, the third lens L3, the fourth lens L4, and the fifth lens L5, then pass through the light filter 3, and finally arrive at the photosensitive element 2.

As shown in FIG. 11A, when the long-focus lens 1 focuses on a distant view, light rays reflected by a distant object are imaged on an imaging plane after passing through the long-focus lens 1. The imaging plane falls on the photosensitive element 2, and the camera assembly 10 can photograph a distant image. As shown in FIG. 11B, when the long-focus lens 1 focuses on a close-up view, the second lens group G2 moves toward the object side along the optical axis O, and light rays reflected by a close-up object is imaged on an imaging plane after passing through the long-focus lens 1. The imaging plane falls on the photosensitive element 2, and the camera assembly 10 can photograph a close-up image.

As shown in FIG. 11A and FIG. 11B, in a focusing process in which the long-focus lens 1 switches focus from the distant view to the close-up view, the first lens group G1 does not move, the second lens group G2 moves toward the image side along the optical axis O, the distance H3 between the first lens group G1 and the second lens group G2 increases, and an effective focal length EFL of the long-focus lens 1 decreases. In addition, a distance between the first lens group G1 and the photosensitive element 2 remains unchanged, and a distance between the second lens group G2 and the photosensitive element 2 decreases. In this application, when the long-focus lens 1 focuses on the distant view and the close-up view, the imaging plane falls on the photosensitive element 2. To be specific, a distance between the first lens group G1 and the imaging plane of the long-focus lens 1 remains unchanged, and a distance between the second lens group G2 and the imaging plane of the long-focus lens 1 decreases.

With reference to data and a simulation result, the following presents a specific solution of the long-focus lens 1 shown in FIG. 11A in a possible embodiment.

Refer to Table 8a and Table 8b together. Table 8a shows a curvature radius, a thickness, a refractive index (Nd), and an Abbe number of each lens and the light filter 3 when the long-focus lens 1 shown in FIG. 11A focuses on a distant view in a possible embodiment. The thickness includes a thickness of the lens, and also includes a distance between the lenses. A virtual surface is an imaginary surface located between the light filter 3 and the photosensitive element 2, and is used to investigate whether light spots converge. Table 8b shows aspheric coefficients of the lenses of the long-focus lens 1 shown in FIG. 11A in a possible embodiment.

**Table 8a**

| Surface number | Description | Surface type | Curvature radius | Thickness (mm) | Refractive index | Abbe number |
|---|---|---|---|---|---|---|
| STO | Aperture diaphragm | Plane | Infinite | -1.5 | | |
| S1 | L1 | Aspheric surface | 5.036237262 | 2.559633058 | 1.54 | 56 |
| S2 | L1 | Aspheric surface | 56.22172875 | 0.301492435 | | |
| S3 | L2 | Aspheric surface | 110.2603761 | 0.5 | 1.67 | 19.4 |
| S4 | L2 | Aspheric surface | 7.585925745 | 0.528952353 | | |
| S5 | L3 | Aspheric surface | 19.06034788 | 0.870503223 | 1.545 | 56 |
| S6 | L3 | Aspheric surface | -9.670740844 | 0.529253486 (variable) | | |
| S7 | L4 | Aspheric surface | -3.160158656 | 0.5 | 1.545 | 56 |
| S8 | L4 | Aspheric surface | -9.451493863 | 1.339173142 | | |
| S9 | L5 | Aspheric surface | 48.24747276 | 1.361539975 | 1.545 | 56 |
| S10 | L5 | Aspheric surface | -93.48347563 | 5.12413468 (variable) | | |
| S11 | Light filter | Plane | Infinite | 0.21 | 1.5 | 64 |
| S12 | Light filter | Plane | Infinite | 0.2 | | |
| S13 | Virtual surface | Plane | Infinite | 0.5000587 | | |
| S14 | Imaging plane | Plane | Infinite | 0 | | |

**Table 8b**

| Surface number | K | A4 | A6 | A8 | A10 | A12 | A14 | A16 |
|---|---|---|---|---|---|---|---|---|
| S1 | 0 | -0.00017 | 4.18E-05 | -5.20E-06 | 3.72E-08 | 5.07E-08 | -3.00E-09 | 0 |
| S2 | 0 | -0.00394 | 0.0032 | -0.00087 | 0.000133 | -1.10E-05 | 3.31E-07 | 0 |
| S3 | 0 | -0.01208 | 0.008122 | -0.00235 | 0.000406 | -4.20E-05 | 2.31E-06 | -5.00E-08 |
| S4 | 0 | -0.00784 | 0.003442 | -0.00039 | -1.00E-05 | 4.58E-06 | -3.60E-07 | 1.35E-08 |
| S5 | 0 | 0.001469 | -0.00457 | 0.002876 | -0.00077 | 0.000119 | -1.00E-05 | 3.65E-07 |
| S6 | 0 | 0.003773 | -0.00316 | 0.001945 | -0.00059 | 0.000113 | -1.20E-05 | 6.20E-07 |
| S7 | 0 | 0.063908 | -0.01692 | 0.00371 | -0.0005 | 3.09E-05 | 5.17E-07 | -1.20E-07 |
| S8 | 0 | 0.055608 | -0.01159 | 0.000626 | 0.000522 | -0.00018 | 2.36E-05 | -1.20E-06 |

(continued)

| Surface number | K | A4 | A6 | A8 | A10 | A12 | A14 | A16 |
|---|---|---|---|---|---|---|---|---|
| S9 | 0 | -0.00368 | 4.48E-05 | -0.00257 | 0.002524 | -0.00144 | 0.000505 | -0.00011 |
| S10 | 0 | -0.00476 | -0.00074 | 0.000115 | -3.20E-05 | 7.69E-06 | -1.60E-06 | 1.76E-07 |

The aspheric surface of the long-focus lens 1 in Table 8a may be defined by using, but not limited to, the following aspheric curve equation:

$$z = \frac{cr^2}{1 + \sqrt{1 - (1+k)c^2r^2}} + \sum_{i=1}^{N} \alpha_i r^{2i}$$

Herein, z is a relative distance between a point that is on the aspheric surface and that is at a distance of r from the optical axis and an intersecting tangent plane tangent to the optical axis of the aspheric surface; r is a vertical distance between the point on the aspheric curve and the optical axis; c is a curvature; K is a cone coefficient; and $\alpha_i$ is an $i^{th}$-order aspheric coefficient. For details, refer to Table 8b.

Refer to Table 8c and Table 8d. Table 8c and Table 8d show basic parameters of the long-focus lens 1 shown in FIG. 11A in a possible embodiment. In Table 8c, f1 to f5 are respectively focal lengths of the first lens L1 to the fifth lens L5. In Table 8d, F1 and F2 are respectively focal lengths of the first lens group G1 and the second lens group G2; and T1 and T2 are respectively thicknesses of the first lens group G1 and the second lens group G2.

**Table 8c**

| Parameter | f1 | f2 | f3 | f4 | f5 | F-stop | Field of view |
|---|---|---|---|---|---|---|---|
| Value | 7.7 | -12.1 | 12 | -9 | 58.6 | 2 | 26° |

**Table 8d**

| Parameter | F1 | F2 | EFL | T1 | T2 | f1/F1 | f4/F2 | T1/F1 | T2/F2 | (F1-F2)/F1 |
|---|---|---|---|---|---|---|---|---|---|---|
| Value | 8 | -11.1 | 14.6 | 4.76 | 3.2 | 0.9625 | 0.81 | 0.595 | -0.288288288 | 2.3875 |

In this embodiment, when the long-focus lens 1 switches focus from the distant view to the close-up view, for example, switches focus to a position of a close-up view of 50 mm, the second lens group G2 moves toward the image side, and a distance (S6) between the first lens group G1 and the second lens group G2 increases by 2 mm, that is, the second lens group G2 moves toward the image side by a focusing stroke of 2 mm. Compared with those of a conventional lens (which usually needs to be greater than 4 mm), the focusing stroke is significantly shortened, and a focusing capability is strong.

In addition, when the long-focus lens 1 focuses on the distant view, the effective focal length EFL of the long-focus lens 1 is 14.6 mm. When the long-focus lens 1 focuses on the close-up view, the effective focal length EFL of the long-focus lens 1 is 10.7 mm. In the focusing process in which the long-focus lens 1 switches focus from the distant view to the close-up view, the effective focal length EFL of the long-focus lens 1 decreases.

In this embodiment, when the long-focus lens 1 switches focus from the distant view to the close-up view, the second lens group G2 moves toward the image side, and the distance (S6) between the first lens group G1 and the second lens group G2 increases by 2 mm. Correspondingly, a distance (S10) between the second lens group G2 and the light filter 3 is reduced by 2 mm, to keep a height of the long-focus lens 1 unchanged.

In this embodiment, as shown in Table 8d, F1<0.9 EFL (0.9 EFL=0.9×14.6=13.14). In this case, the first lens group G1 has a small focal length F1 and a strong light ray convergence capability. This helps implement close-up shooting within 10 centimeters.

In addition, -EFL<F2. In this case, the second lens group has a small focal length F2 and a strong light ray convergence capability, thereby facilitating focusing and shortening a motor stroke.

In addition, (F1-F2)/F1 is approximately equal to 3. In this case, a difference between the focal lengths of the two lens groups is small, so that a light ray convergence capability of the long-focus lens 1 can be improved, thereby facilitating implementation of close-up imaging. In addition, the focal length F2 of the second lens group G2 is large, so that a light ray deflection degree of the long-focus lens 1 can be reduced, an aberration can be reduced, and imaging quality can be improved.

In addition, the focal length f1 of the first lens L1 is the focal length f11 of the 1st lens L11 of the first lens group G1. When 0.5<f1/F1<1, that is, 0.5<f11/F1<1, a difference between the focal length f11 of the 1st lens L11 of the first lens group G1 and the focal length F1 of the first lens group G1 is small. This facilitates adjustment of the focal length f11 of the 1st lens L11, to obtain the focal length F1 of the first lens group G1.

In addition, a focal length f4 of the fourth lens L4 is the focal length f21 of the 1st lens L21 of the second lens group G2. When 0.2<f4/F2<1, that is, 0.2<f21/F2<1, a difference between the focal length f21 of the 1st lens L21 of the second lens group G2 and the focal length F2 of the second lens group G2 is small. This facilitates adjustment of the focal length f21 of the 1st lens L21, to obtain the focal length F2 of the second lens group G2.

In addition, when 0.3<T1/F1<1, the thickness of the first lens group G1 is small. In this way, the height of the long-focus lens 1 can be reduced, thereby facilitating accommodation. In addition, motion of the first lens group G1 is facilitated, and imaging quality is improved.

In addition, -1<T2/F2<-0.1. This helps the second lens group G2 have a small thickness, thereby reducing the height of the long-focus lens 1 and facilitating accommodation. In addition, motion of the second lens group G2 is facilitated, and imaging quality is improved.

In addition, T1+T2=7.96, and 0.6 EFL=0.6×14.6=8.76. In this case, T1+T2<0.6 EFL, so that a sum of the thickness T1 of the first lens group G1 and the thickness T2 of the second lens group G2 is small. In this way, when the long-focus lens 1 is in an accommodated state, an overall height of the camera assembly 10 is small, and the camera assembly 10 occupies small space in an entire inner cavity of the electronic device 100, thereby facilitating accommodation. In addition, the camera assembly 10 can be better applicable to a thin electronic device.

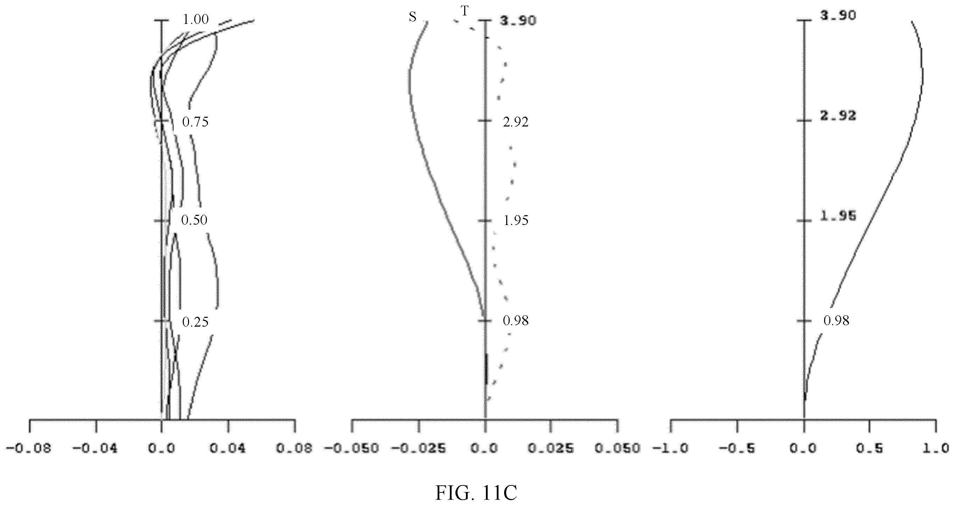

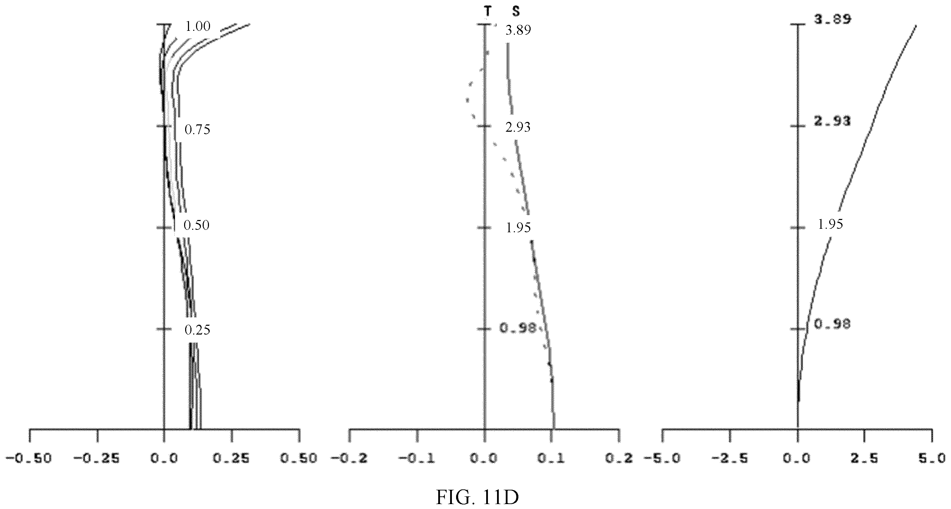

Refer to FIG. 11C and FIG. 11D. FIG. 11C is a simulation effect diagram of the long-focus lens 1 shown in FIG. 11A when the long-focus lens 1 focuses on a distant view. FIG. 11D is a simulation effect diagram of the long-focus lens 1 shown in FIG. 11B when the long-focus lens 1 focuses on a close-up view of 50 mm.

Both FIG. 11C and FIG. 11D include an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through the optical system. A horizontal coordinate of the curve diagram is a deviation value along the optical axis, and a vertical coordinate of the curve diagram is a normalized coordinate at a pupil. Indicated values in both FIG. 11C and FIG. 11D are small. When the long-focus lens 1 focuses on the distant view and the close-up view, an axial aberration (a spherical aberration, a chromatic aberration, or the like) of the long-focus lens 1 is well corrected. The astigmatic field curvature diagram is used to show deviations between convergence points of pencils in different fields of view and an ideal imaging plane. X is a beam in a sagittal direction, and Y is a beam in a meridian direction. A horizontal coordinate of the curve diagram is a deviation value along the optical axis, and a vertical coordinate of the curve diagram is a corresponding field of view. When a value of a field of view is excessively large, image quality of the field of view is poor or a high-level aberration exists. Field curvatures shown in FIG. 11C and FIG. 11D are small in both directions, and the system has a good focal depth. The distortion diagram represents relative deviations of beam convergence points (actual image heights) from an ideal image height in different fields of view. The distortions shown in FIG. 11C and FIG. 11D are small, so that it can be ensured that the picture is not significantly distorted.

In the foregoing plurality of embodiments, the first lens L1 of the first lens group G1 shown in FIG. 5A, FIG. 5B, FIG. 9A, FIG. 9B, FIG. 4A, FIG. 4B, FIG. 8A, FIG. 8B, FIG. 7A, FIG. 7B, FIG. 6A, FIG. 6B, FIG. 11A, FIG. 11B, FIG. 10A, and FIG. 10B corresponds to the 1st lens L11 of the first lens group G1 shown in FIG. 3C; and the second lens L2 of the first lens group G1 corresponds to the 2nd lens L12 of the first lens group G1 shown in FIG. 3C. The fourth lens L4 of the second lens group G2 shown in FIG. 5A, FIG. 5B, FIG. 9A, FIG. 9B, FIG. 4A, FIG. 4B, FIG. 8A, FIG. 8B, FIG. 11A, FIG. 11B, FIG. 10A, and FIG. 10B, and the fifth lens L5 of the second lens group G2 shown in FIG. 7A, FIG. 7B, FIG. 6A, and FIG. 6B both correspond to the 1st lens L21 of the second lens group G2 shown in FIG. 3C.

In conclusion, the foregoing embodiments are merely intended for describing the technical solutions of this application, rather than limiting this application. Although this application is described in detail with reference to the foregoing embodiments, a person of ordinary skill in the art should understand that modifications may still be made to the technical solutions described in the foregoing embodiments, or equivalent replacements may still be made to some technical features thereof. These modifications or replacements do not make the essence of the corresponding technical solutions depart from the scope of the technical solutions of embodiments of this application. In a case that no conflict occurs, embodiments of this application and the features in the embodiments may be mutually combined.

**Claims**

**1.** A long-focus lens, wherein when the long-focus lens focuses on a distant view, a field of view of the long-focus lens is less than 60°; and
the long-focus lens comprises a first lens group and a second lens group that are arranged from an object side to an image side, the first lens group has a positive focal power, the second lens group has a negative focal power, and in a focusing process in which the long-focus lens switches focus between the distant view and a close-up view, a distance between the first lens group and the second lens group changes, and a shortest focus distance of the long-focus lens is less than 10 centimeters.

2. The long-focus lens according to claim 1, wherein in a focusing process in which the long-focus lens switches focus from the distant view to the close-up view, the distance between the first lens group and the second lens group increases.

3. The long-focus lens according to claim 1 or 2, wherein in the focusing process in which the long-focus lens switches focus from the distant view to the close-up view, a distance between the first lens group and an imaging plane of the long-focus lens remains unchanged, and a distance between the second lens group and the imaging plane of the long-focus lens decreases; or

    a distance between the first lens group and an imaging plane of the long-focus lens increases, and a distance between the second lens group and the imaging plane of the long-focus lens remains unchanged; or
    a distance between the first lens group and an imaging plane of the long-focus lens increases, and a distance between the second lens group and the imaging plane of the long-focus lens decreases.

4. The long-focus lens according to any one of claims 1 to 3, wherein a focal length F1 of the first lens group and an effective focal length EFL of the long-focus lens satisfy the following: $F1 \leq 0.9$ EFL, or $0.9$ EFL$<F1<$EFL.

5. The long-focus lens according to any one of claims 1 to 4, wherein a focal length F2 of the second lens group and the effective focal length EFL of the long-focus lens satisfy the following: $-$EFL$<F2$.

6. The long-focus lens according to claim 4 or 5, wherein the focal length F1 of the first lens group and the focal length F2 of the second lens group satisfy the following: $1<(F1-F2)/F1 \leq 3$, or $3<(F1-F2)/F1<9$.

7. The long-focus lens according to any one of claims 1 to 6, wherein the first lens group comprises two to four lenses, or the second lens group comprises two to four lenses, or the long-focus lens comprises four to eight lenses.

8. The long-focus lens according to claim 7, wherein the first lens group comprises a $1^{st}$ lens close to the object side, and a focal length f11 of the $1^{st}$ lens of the first lens group and the focal length F1 of the first lens group satisfy the following: $0.5<f11/F1<1$; and
the second lens group comprises a $1^{st}$ lens close to the object side, and a focal length f21 of the $1^{st}$ lens of the second lens group and the focal length F2 of the second lens group satisfy the following: $0.2<f21/F2<1$.

9. The long-focus lens according to claim 8, wherein the first lens group further comprises a $2^{nd}$ lens, the $2^{nd}$ lens of the first lens group is adjacently located on an object side of the $1^{st}$ lens of the first lens group, and a sum of an Abbe number of the $1^{st}$ lens of the first lens group and an Abbe number of the $2^{nd}$ lens of the first lens group is greater than 20.

10. The long-focus lens according to any one of claims 7 to 9, wherein a sum of Abbe numbers of a plurality of lenses of the second lens group is greater than 18.

11. The long-focus lens according to any one of claims 1 to 10, wherein a thickness T1 of the first lens group and the focal length F1 of the first lens group satisfy the following: $0.1<T1/F1 \leq 0.3$, or $0.3<T1/F1<1$; or
a thickness T2 of the second lens group and the focal length F2 of the second lens group satisfy the following: $-1<T2/F2<-0.1$.

12. The long-focus lens according to any one of claims 1 to 11, wherein the thickness T1 of the first lens group, the thickness T2 of the second lens group, and the effective focal length EFL of the long-focus lens satisfy the following: $T1+T2 \leq 0.6$ EFL, or $0.6$ EFL$<T1+T2 \leq 0.8$ EFL, or $0.8$ EFL$<T1+T2<$EFL.

13. The long-focus lens according to any one of claims 1 to 12, wherein an image height ImgH of the long-focus lens satisfies the following: ImgH$>2$ mm.

14. A camera assembly, comprising a photosensitive element, a first actuator, and the long-focus lens according to any one of claims 1 to 13, wherein the photosensitive element is located on an image side of the long-focus lens; and the first actuator is connected to the long-focus lens, and is configured to control the long-focus lens to move toward or away from the photosensitive element.

15. The camera assembly according to claim 14, wherein the camera assembly further comprises a second actuator, and the second actuator is connected to a first lens group and is configured to control the first lens group to move along an optical axis; and/or
the camera assembly further comprises a third actuator, and the third actuator is connected to a second lens group and is configured to control the second lens group to move along the optical axis.

16. An electronic device, comprising an image processor and the camera assembly according to claim 14 or 15, wherein the image processor is in a communication connection to the camera assembly, and the image processor is configured to: obtain an image signal from the camera assembly, and process the image signal.

17. An electronic device, comprising a first lens and a second lens, wherein the second lens is a 3x optical zoom lens of the first lens;

when the second lens focuses on a distant view, a field of view of the second lens is less than 60°; and
the second lens comprises a first lens group and a second lens group that are arranged from an object side to an image side, the first lens group has a positive focal power, the second lens group has a negative focal power, and in a focusing process in which the second lens switches focus between the distant view and a close-up view, a distance between the first lens group and the second lens group changes, and a shortest focus distance of the second lens is less than 10 centimeters.

18. The electronic device according to claim 17, wherein in a focusing process in which the second lens switches focus from the distant view to the close-up view, a distance between the first lens group and an imaging plane of the second lens remains unchanged, and a distance between the second lens group and the imaging plane of the second lens decreases; or

a distance between the first lens group and an imaging plane of the second lens increases, and a distance between the second lens group and the imaging plane of the second lens remains unchanged; or
a distance between the first lens group and an imaging plane of the second lens increases, and a distance between the second lens group and the imaging plane of the second lens decreases.

19. The electronic device according to claim 17 or 18, wherein a focal length F1 of the first lens group and an effective focal length EFL of the second lens satisfy the following: $F1 \leq 0.9 \, EFL$, or $0.9 \, EFL < F1 < EFL$.

20. The electronic device according to any one of claims 17 to 19, wherein a focal length F2 of the second lens group and the effective focal length EFL of the second lens satisfy the following: $-EFL < F2$.

21. The electronic device according to claim 19 or 20, wherein the focal length F1 of the first lens group and the focal length F2 of the second lens group satisfy the following: $1 < (F1-F2)/F1 \leq 3$, or $3 < (F1-F2)/F1 < 9$.

22. The electronic device according to any one of claims 17 to 21, wherein a thickness T1 of the first lens group and the focal length F1 of the first lens group satisfy the following: $0.1 < T1/F1 \leq 0.3$, or $0.3 < T1/F1 < 1$; or
a thickness T2 of the second lens group and the focal length F2 of the second lens group satisfy the following: $-1 < T2/F2 < -0.1$.

23. The electronic device according to any one of claims 17 to 22, wherein the thickness T1 of the first lens group, the thickness T2 of the second lens group, and the effective focal length EFL of the second lens satisfy the following: $T1+T2 \leq 0.6 \, EFL$, or $0.6 \, EFL < T1+T2 \leq 0.8 \, EFL$, or $0.8 \, EFL < T1+T2 < EFL$.

24. The electronic device according to any one of claims 17 to 23, wherein an image height ImgH of the second lens satisfies the following: $ImgH > 2 \, mm$.

FIG. 1A

40° — Telephoto
shooting

80° — Standard
shooting

120° — Close-up
shooting

FIG. 1B

10

3  2

1

Object side

Image side

FIG. 2

FIG. 3A

10

1
G1    G2

3    2

Object
side

0

Image
side

H3

H2

FIG. 3B

10    4

1
G1    G2

3    2

Object
side

0

Image
side

L11    L12

H3

L21

FIG. 3C

FIG. 4A

FIG. 4B

FIG. 4C

FIG. 4D

FIG. 5A

FIG. 5B

FIG. 5C

FIG. 5D

FIG. 6A

FIG. 6B

1.00

0.75

0.50

0.25

S    T  3.90

2.92

1.95

0.97

3.90

2.92

1.95

0.97

-0.050  -0.025   0.0   0.025   0.050  -0.050  -0.025   0.0   0.025   0.050  -5.0   -2.5   0.0   2.5   5.0

FIG. 6C

FIG. 6D

FIG. 7A

FIG. 7B

FIG. 7C

FIG. 7D

FIG. 8A

FIG. 8B

FIG. 8C

FIG. 8D

FIG. 9A

FIG. 9B

FIG. 9C

FIG. 9D

FIG. 10A

FIG. 10B

FIG. 10C

FIG. 10D

FIG. 11A

FIG. 11B

FIG. 11C

FIG. 11D

## INTERNATIONAL SEARCH REPORT

| International application No. |
|---|
| **PCT/CN2023/081097** |

**A. CLASSIFICATION OF SUBJECT MATTER**

G02B7/10(2021.01)i

According to International Patent Classification (IPC) or to both national classification and IPC

**B. FIELDS SEARCHED**

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNTXT, ENTXTC, CNKI: 镜头, 镜组, 第一, 第1, G1, 第二, 第2, G2, 正, 负, 长焦, 远焦, 长距, 远距, 远景, 近距, 近景, 短焦, 微距, 近焦, 间距, 距离, 移动, lens, first, second, positive, negative, long, far, distant, distance, view, sight, short, close, space, move

**C. DOCUMENTS CONSIDERED TO BE RELEVANT**

| Category* | Citation of document, with indication, where appropriate, of the relevant passages | Relevant to claim No. |
|---|---|---|
| X | CN 113946029 A (ZHEJIANG SUNNY OPTICS CO., LTD.) 18 January 2022 (2022-01-18) description, paragraphs 0078-0140 and 0215-0219, and figures 1-6 | 1-24 |
| X | CN 114167572 A (ZHEJIANG SUNNY OPTICS CO., LTD.) 11 March 2022 (2022-03-11) description, paragraphs 0075-0133 and 0213, and figures 1-6 | 1-24 |
| A | CN 113126268 A (ZHEJIANG SUNNY OPTICS CO., LTD.) 16 July 2021 (2021-07-16) entire document | 1-24 |
| A | CN 206930822 U (ZHEJIANG SUNNY OPTICS CO., LTD.) 26 January 2018 (2018-01-26) entire document | 1-24 |
| A | JP 2013061570 A (RICOH CO., LTD.) 04 April 2013 (2013-04-04) entire document | 1-24 |
| A | JP 2017207768 A (TAMRON K. K.) 24 November 2017 (2017-11-24) entire document | 1-24 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 June 2023** | **20 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| --- |
| **PCT/CN2023/081097** |

| Patent document cited in search report | | | Publication date (day/month/year) | Patent family member(s) | | | Publication date (day/month/year) |
| --- | --- | --- | --- | --- | --- | --- | --- |
| CN | 113946029 | A | 18 January 2022 | None | | | |
| CN | 114167572 | A | 11 March 2022 | None | | | |
| CN | 113126268 | A | 16 July 2021 | None | | | |
| CN | 206930822 | U | 26 January 2018 | WO | 2018218856 | A1 | 06 December 2018 |
| | | | | US | 2021055513 | A1 | 25 February 2021 |
| JP | 2013061570 | A | 04 April 2013 | JP | 5853522 | B2 | 09 February 2016 |
| JP | 2017207768 | A | 24 November 2017 | JP | 6377815 | B2 | 22 August 2018 |

Form PCT/ISA/210 (patent family annex) (July 2022)

**EP 4 474 881 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210255613